# EUROPÄISCHE PATENTSCHRIFT

(11) **EP 2 619 567 B1**
(45) Veröffentlichungstag und Bekanntmachung des Hinweises auf die Patenterteilung: **02.09.2015**
(21) Anmeldenummer: 11763900.5
(22) Anmeldetag: 22.09.2011
(51) Int. Cl.: G01N 30/00, B01D 63/02

(54) **VORRICHTUNG ZUR FELDFLUSSFRAKTIONIERUNG**
DEVICE FOR FIELD FLOW FRACTIONATION
DISPOSITIF DE FRACTIONNEMENT PAR COUPLAGE FLUX-FORCE

(30) Priorität: 22.09.2010 DE 102010041222
(43) Veröffentlichungstag der Anmeldung: 31.07.2013
(73) Patentinhaber: Wyatt Technology Europe Gmbh, 56307 Dernbach (DE)
(72) Erfinder: RÖSCH, Ulrich, 56317 Urbach (DE); JOHANN, Christoph, 56307 Woldert (DE)
(74) Vertreter: Eisenführ Speiser
(86) Internationale Anmeldenummer: PCT/EP2011/066548
(87) Internationale Veröffentlichungsnummer: WO 2012/038518

(56) Entgegenhaltungen:
- DE-A1- 19 808 992
- US-A1- 2008 264 792
- US-B1- 6 365 050
- CHRISTOPH JOHANN ET AL: "A novel approach to improve operation and performance in flow field-flow fractionation", JOURNAL OF CHROMATOGRAPHY A, Bd. 1218, Nr. 27, 1. Juli 2011 (2011-07-01), Seiten 4126-4131, XP55030269, ISSN: 0021-9673, DOI: 10.1016/j.chroma.2010.12.077
- LEE J Y ET AL: "Profiling of phospholipids in lipoproteins by multiplexed hollow fiber flow field-flow fractionation and nanoflow liquid chromatography-tandem mass spectrometry", JOURNAL OF CHROMATOGRAPHY, ELSEVIER SCIENCE PUBLISHERS B.V, NL, Bd. 1217, Nr. 10, 5. März 2010 (2010-03-05), Seiten 1660-1666, XP026926187, ISSN: 0021-9673, DOI: 10.1016/J.CHROMA.2010.01.006 [gefunden am 2010-02-25]
- LEE W J ET AL: "IMPROVEMENT IN PARTICLE SEPARATION BY HOLLOW FIBER FLOW FIELD-FLOW FRACTIONATION AND THE POTENTIAL USE IN OBTAINING PARTICLE SIZE DISTRIBUTION", ANALYTICAL CHEMISTRY, AMERICAN CHEMICAL SOCIETY, US, Bd. 71, Nr. 16, 15. August 1999 (1999-08-15), Seiten 3446-3452, XP000854139, ISSN: 0003-2700, DOI: 10.1021/AC981204P
- PIERLUIGI RESCHIGLIAN ET AL: "Hollow-Fiber Flow Field-Flow Fractionation: A Gentle Separation Method for Mass Spectrometry of Native Proteins", ANNALI DI CHIMICA, Bd. 96, Nr. 5-6, 1. Juni 2006 (2006-06-01) , Seiten 253-257, XP55030272, ISSN: 0003-4592, DOI: 10.1002/adic.200690026
- WITTGREN B ET AL: "FAST MOLECULAR MASS AND SIZE CHARACTERIZATION OF POLYSACCHARIDES USING ASYMMETRICAL FLOW FIELD-FLOW FRACTIONATION-MULTITANGLE LIGHT SCATTERING", JOURNAL OF CHROMATOGRAPHY, ELSEVIER SCIENCE PUBLISHERS B.V, NL, Bd. 760, Nr. 2, 31. Januar 1997 (1997-01-31), Seiten 205-218, XP000644168, ISSN: 0021-9673, DOI: 10.1016/S0021-9673(96)00777-7
- WAHLUND K-G ET AL: "PROPERTIES OF AN ASYMMETRICAL FLOW FIELD-FLOW FRACTIONATION CHANNELHAVING ONE PERMEABLE WALL", ANALYTICAL CHEMISTRY, AMERICAN CHEMICAL SOCIETY, US, Bd. 59, 1. Mai 1987 (1987-05-01), Seiten 1332-1339, XP000676198, ISSN: 0003-2700, DOI: 10.1021/AC00136A016

## Beschreibung

Die Erfindung betrifft eine Vorrichtung zur Feldflussfraktionierung.

Bei der Feldflussfraktionierung (FFF) handelt es sich um eine Trennmethode für ein gegebenes Probensystem, das gewöhnlich mindestens eine oder zwei zu analysierende Probenbestandteile in einer Trägerflüssigkeit umfasst. Die zu analysierenden Probenbestandteile bestehen aus Teilchen, bei denen es sich insbesondere um Partikel, Makromoleküle oder Moleküle handelt. Konkret werden unter "Feldflussfraktionierung" Analysetechniken verstanden, deren Separationsmechanismus darin besteht, dass sich unterschiedliche Teilchen unter dem Einfluss einer im Wesentlichen senkrecht zu ihrer Fließgeschwindigkeitsrichtung wirkenden Querkraft in unterschiedlichen Höhen sammeln. Hierzu wird für die Trägerflüssigkeit ein im Wesentlichen parabolförmiges Fließgeschwindigkeitsprofil verwendet, das in einem meist länglichen, dünnen Kanal, auch als Trennkanal bezeichnet, erzeugt wird. Die Trennung der unterschiedlichen Teilchen voneinander findet in diesem Kanal statt, aus dem dann die unterschiedlichen Teilchen zu verschiedenen Zeiten eluiert werden.

Der Kanal bildet einen im Wesentlichen geschlossenen, dünnen, länglichen Hohlkörper, gewöhnlich ein Rohr o. dgl., der ein erstes Ende mit einem ersten Anschluss und ein zweites Ende mit einem zweiten Anschluss aufweist und dessen Wandung mindestens einen sich in Längsrichtung des Kanals erstreckenden, für die Teilchen undurchlässigen und für die Trägerflüssigkeit durchlässigen Abschnitt aufweist. Durch diesen permeablen Abschnitt wird ein Teil der Trägerflüssigkeit abgeleitet. Bevorzugt weist der permeable Abschnitt in der Wandung des Kanals eine Ultra-Filtrationsmembran auf.

Zur Erzeugung der erwähnten Querkraft, welche für die Ableitung eines Teils der Trägerflüssigkeit durch den permeablen Abschnitt in der Wandung des Kanals aus dem Kanal heraus sorgt, wird bei einer Variante der Feldflussfraktionierung ein Querfluss im Kanal senkrecht bzw. rechtwinklig zur Fließrichtung der Trägerflüssigkeit und somit zur Längserstreckung des Kanals von außen eingeprägt. Hierzu wird in den Kanal weitere Flüssigkeit, vorzugsweise Trägerflüssigkeit, durch einen Einlass gepumpt, der zusätzlich in der Wandung des Kanals ausgebildet ist und dem permeablen Abschnitt im Wesentlichen genau und somit symmetrisch gegenüber liegt. Deshalb wird diese Variante des Verfahrens als symmetrische Feldflussfraktionierung bezeichnet.

Man hat jedoch herausgefunden, dass auf das Einbringen von zusätzlicher Trägerflüssigkeit in Querrichtung auch verzichtet werden kann, ohne dass dadurch eine spürbare Verschlechterung der Messergebnisse in Kauf genommen werden muss. Diese Variante des Verfahrens wird als asymmetrische Feldflussfraktionierung (AFFFF bzw. AF4) bezeichnet. Bei diesem Verfahren wird der am permeablen Abschnitt entstehende Druckverlust genutzt, um einen Teil der Trägerflüssigkeit als Querfluss abzuleiten. Gewöhnlich ist für die Verwendung dieses Verfahrens in der Wandung des Kanals nur ein einziger permeabler Abschnitt in Längsrichtung ausgebildet. Alternativ werden aber auch zunehmend Ausführungen eines Kanals verwendet, bei welchen die Wandung über ihren gesamten Umfang für die Trägerflüssigkeit durchlässig ausgebildet ist; im Regelfall handelt es sich bei diesen Ausführungen um Hohlfasern. Im Vergleich zur symmetrischen Feldflussfraktionierung liefert die asymmetrische Feldflussfraktionierung Trennungen vergleichbare Qualität, während jedoch die Kanäle für die asymmetrische Feldflussfraktionierung viel leichter herzustellen und, wie beispielsweise bei einer Reinigung des Kanals oder einem Wechsel der Membran, deutlich einfacher zu handhaben sind.

Die Trägerflüssigkeit wird durch den Kanal gepumpt, wobei beispielsweise der erste Anschluss am ersten Ende den Flusseinlass und der zweite Anschluss am zweiten Ende den Flussauslass bildet. Bevorzugt weist der Kanal einen sich in Richtung seiner Längsachse zum Flussauslass hin erstreckenden verjüngenden Verlauf auf. Die Probe, bei welcher es sich, wie bereits erwähnt, um Teilchen handelt, wird gelöst oder suspendiert in den Kanal eingebracht, in dem sich aufgrund seiner geringen Höhe (z.B. 300 µm) ein laminares Strömungsprofil ausbildet, in dem die Fließgeschwindigkeit in der Mitte maximal ist und an den Rändern gegen null geht. Der erwähnte permeable Abschnitt in der Wandung des Kanals befindet sich bevorzugt an der Unterseite des Kanals. Aus diesem permeablen Abschnitt tritt ein Teil der Trägerflüssigkeit nach unten aus und erzeugt so einen Querfluss, der wiederum ein definiertes Kraftfeld im Wesentlichen senkrecht zur Fließgeschwindigkeit im Kanal erzeugt. Durch diese Trennkraft werden die zu analysierenden Probenbestandteile in Richtung auf den permeablen Abschnitt gedrückt. Da dieser permeable Abschnitt so ausgebildet ist, dass zwar die Trägerflüssigkeit durchgelassen wird, nicht jedoch die Teilchen, werden die Teilchen folglich an der Innenseite dieses permeablen Abschnittes im Kanal zurückgehalten. Aufgrund der unterschiedlichen Größen und der damit verbundenen unterschiedlichen Diffusionskoeffizienten diffundieren kleinere Teilchen weiter in den Kanal zurück als größere und gelangen somit in schnellere Strömungsbereiche des parabolischen Trägerflüssigkeitsstromes, so dass kleinere Teilchen daher schneller den Kanal verlassen, also aus dem Kanal eluiert werden als größere Teilchen. Die für die unterschiedlichen Teilchen verschiedenen Retentionszeiten, d.h. diejenigen Zeiten, welche die zu analysierenden Teilchen zum Durchwandern des Kanals benötigen, werden als Messgröße für die Identifikation und Analyse der Teilchen verwendet.

Mithilfe der Feldflussfraktionierung und insbesondere der asymmetrischen Feldflussfraktionierung können Substanzen in einem Größenbereich von bevorzugt etwa 1 nm bis 1000 nm getrennt werden. Diese Methode ist die universellste chromatographische Methode für alle Nanosized Materialien. Mit dieser Methode konnten viele Trennprobleme gelöst werden, welche bei der Flüssigkeitschromatographie-Säulentechnologie gescheitert sind.

Die Vorteile der Feldflussfraktionierung und insbesondere der asymmetrischen Feldflussfraktionierung bestehen insbesondere darin, dass eine aufwändige Probenvorbereitung entfällt, eine universelle Anwendbarkeit für unterschiedlichste Probenmaterialien und -größen möglich ist, keine Scherkräfte und nur vernachlässigbare Adsorptionseffekte auftreten, sich die Separationsbedingungen einfach an das jeweilige Separationsproblem anpassen lassen und die Trennung ausschließlich über den hydrodynamischen Radius der Substanz erfolgt. Deshalb findet die Methode der Feldflussfraktionierung und insbesondere der asymmetrischen Feldflussfraktionierung zur Charakterisierung von makromolekularen Stoffen zunehmend Anwendung in Bereichen der Medizin, Biologie, Biochemie, Pharmazie, Polymerchemie, Agrarwissenschaften etc., und zwar seit wenigen Jahren auch erfolgreich in kommerzieller Hinsicht.

Das Verfahren zur Feldflussfraktionierung gliedert sich in vier Betriebszustände. Im ersten Betriebszustand findet die sog. Fokussierung statt. Hierzu wird leere Trägerflüssigkeit, welche also noch keine Probe enthält, durch die Anschlüsse an beiden Enden des Kanals in den Kanal gepumpt, wodurch zwei entgegengesetzt zueinander gerichtete Strömungsfronten gebildet werden, die im Kanal an einer bestimmten Stelle aufeinandertreffen. Dabei tritt die durch die beiden Anschlüsse in den Kanal gespeiste Trägerflüssigkeit durch den permeablen Abschnitt in der Wandung des Kanals aus dem Kanal wieder aus. An der Stelle, wo sich die beiden entgegengesetzt zueinander gerichteten Strömungsfronten treffen, entsteht eine sog. neutrale Zone, in der keine Strömung in Längsrichtung des Kanals stattfindet, sich jedoch ein Querfluss in Richtung des permeablen Abschnittes in der Wandung des Kanals ausbildet, welche auch als Akkumulationswand bezeichnet wird. Diese neutrale Zone wird nachfolgend in noch näher beschriebener Weise als Startpunkt für die Probe genutzt. Deshalb ist darauf zu achten, dass die Probe in dieser neutralen Zone innerhalb des Kanals platziert wird. Der Ort der neutralen Zone wird auch als Relaxationspunkt bezeichnet.

Im zweiten Betriebszustand wird zusätzlich zur laufenden Fokussierung eine Probe injiziert. Für die Einbringung der Probe in den Kanal ist zusätzlich zu den beiden bereits erwähnten Anschlüssen als dritter Anschluss ein Injektionsport vorgesehen, der, vorzugsweise dem permeablen Abschnitt gegenüberliegend, in der Wandung des Kanals ausgebildet ist. Da der Injektionsport an der Wandung des Kanals fest montiert ist und somit an einer definierten Stelle sitzt, muss der Zufluss der Trägerflüssigkeit durch die Anschlüsse an beiden Enden des Kanals so eingestellt werden, dass die erwähnte neutrale Zone direkt am Injektionsport zu liegen kommt. Um dies überprüfen zu können, ist die Wandung des Kanals zumindest im Bereich des Injektionsports transparent ausgebildet. Vor Einbringen einer Probe wird zunächst durch den Injektionsport ein Farbstoff gegeben, der sich dann im Wesentlichen in der neutralen Zone sammelt und als Marker dient. Auf diese Weise kann die Position der neutralen Zone erkannt und kontrolliert werden. Wird durch den transparenten Abschnitt in der Wandung des Kanals beobachtet, dass sich die neutrale Zone in einem Abstand versetzt vom Injektionsport befindet, wird auf empirische Weise die Einstellung der Zuflüsse der Trägerflüssigkeit von beiden Seiten in den Kanal verändert und dadurch die neutrale Zone verschoben, bis die räumliche Übereinstimmung mit dem Injektionsport hergestellt ist. Erst dann wird durch den Injektionsport die Probe eingebracht, welche dadurch in der neutralen Zone gefangen bleibt. Sofern die Probe unterschiedlich große Teilchen enthält, werden diese aufgrund des Einflusses des erwähnten Querflusses unterschiedlich stark in Richtung der Wandung des Kanals aufkonzentriert. Somit findet bereits in diesem Betriebszustand ein erster Schritt zur Trennung der Teilchen statt.

Im anschließenden dritten Betriebszustand findet die sog. Elution statt. Während der Zufluss von Trägerflüssigkeit in den Kanal durch den ersten Anschluss am ersten Ende des Kanals aufrechterhalten bleibt, wird der Zufluss durch den zweiten Anschluss am gegenüberliegenden zweiten Ende des Kanals gestoppt und dieser zweite Anschluss nun als Auslass genutzt, durch den ein Teil der durch den ersten Anschluss eingespeisten Trägerflüssigkeit wieder austritt, während der übrige Teil der Trägerflüssigkeit als Querfluss durch den permeablen Abschnitt in der Wandung des Kanals aus dem Kanal abgeleitet wird. Dadurch wird die neutrale Zone aufgelöst und breitet sich eine Strömung der Trägerflüssigkeit über die gesamte Länge des Kanals in dessen Längsrichtung vom ersten Anschluss zum zweiten Anschluss aus. Dies hat zur Folge, dass die Probe bzw. deren Bestandteile vom Ort der ehemaligen neutralen Zone, der somit auch den Startpunkt oder die Startzone bildet, entlang des Kanals in Richtung auf dessen zweiten Anschluss durch die Strömung mitgenommen werden.

Dabei bildet sich ein, insbesondere parabolisches, Strömungsprofil aus, bei welchem die Fließgeschwindigkeit in der Mitte des Kanals maximal ist und an den Rändern gegen null geht. Durch das vom Querfluss erzeugte und im Wesentlichen quer zur Längsrichtung des Kanals gerichtete Kraftfeld werden zwar die zu analysierenden Probenbestandteile in Richtung auf den permeablen Abschnitt in der Wandung des Kanals gedrückt. Jedoch aufgrund der unterschiedlichen Größen und Gewichte und der damit verbundenen unterschiedlichen Diffusionskoeffizienten werden die größeren und schwereren Teilchen stärker in Richtung auf den permeablen Abschnitt gedrückt als die kleineren, leichteren Teilchen, welche sich in einem größeren Abstand von der Wandung des Kanals und eher in dessen Mitte aufhalten. Dies bedeutet, dass die kleineren Teilchen in schnellere Strömungsbereiche des Trägerflüssigkeitsstromes gelangen und somit den Kanal durch den zweiten Anschluss schneller verlassen als die größeren Teilchen. Demnach ist die Retentionszeit bei größeren Teilchen länger als bei kleineren Teilchen. In diesem Zusammenhang sei noch angemerkt, dass sich die Retentionszeit von demjenigen Zeitpunkt an berechnet, an dem die Probenbestandteile beim Übergang vom zweiten Betriebszustand in den dritten Betriebszustand und somit von der Fokussierung in die Elution von der Startzone an zu laufen anfangen. Nach Austritt aus dem Kanal durch dessen zweiten Anschluss am anderen zweiten Ende werden die voneinander getrennten Probenbestandteile bzw. Teilchen zu einem Sensor geleitet, der die unterschiedlichen Probenbestandteile bzw. Teilchen entsprechend den unterschiedlichen Retentionszeiten zu unterschiedlichen Zeitpunkten erfasst.

Mit Hilfe eines bekannten Verfahrens zur Optimierung der Trennmethode für ein gegebenes Probensystem mittels asymmetrischer Feldflussfraktionierung sind für ein vorgebendes Optimierungsziel die optimalen geometrischen Parameter des Kanals und/oder die optimalen Prozessparameter zur Durchführung des Trennvorganges auf einfache Weise ermittelbar. Hierzu wird zunächst lediglich mit Hilfe einer Testmessung mit einem bereits vorhandenen Kanal ein Fraktogramm für das Probensystem mit dem zu analysierenden Probenbestandteilen durchgeführt. Aus diesem Fraktogramm werden dann die Retentionszeiten beispielsweise für zwei Peaks entnommen, die zu zwei zu analysierenden Probebestandteilen unterschiedlicher Diffusionskoeffizienten gehören. Anschließend wird dann die Retentionszeit des ersten Peaks zusammen mit den vorgegebenen geometrischen Parametern des Kanals und den vorgegebenen Prozessparametern, welche zu dem gemessenen Fraktogramm geführt haben, in einen Computer eingegeben, welcher aus diesen Parametern mit Hilfe eines Simulationsprogrammes den Diffusionskoeffizienten berechnet, der diesem zu analysierenden Probebestandteil zugeordnet ist. Schließlich wird mittels des Simulationsprogrammes ein dem gemessenen Fraktogramm entsprechendes berechnetes Fraktogramm auf einem Bildschirm dargestellt, und es werden alle relevanten Parameter so lange variiert, bis sich auf dem Bildschirm des Computers ein optimales Fraktogramm ergibt.

Als nachteilig wird die Lokalisierung der die Startzone für die Probenbestandteile während der Fokussierung bildenden neutralen Zone angesehen, da dies eine empirische Einstellung der Parameter des Trägerflüssigkeitszuflusses unter gleichzeitiger Beobachtung und somit optischer Kontrolle bedingt. Dies ist jedoch umständlich, zumal vor der Probeninjektion das Einbringen eines als Marker dienenden Farbstoffes notwendig ist, was einen weiteren Verfahrensschritt bedingt, und liefert im Wesentlichen auch keine verlässlich reproduzierbaren Ergebnisse. Um die erforderliche optische Kontrolle überhaupt ausführen zu können, ist nicht nur die Verwendung eines Farbstoffes erforderlich, sondern ist natürlich Voraussetzung, dass in dem relevanten Bereich die Wandung des Kanals transparent ist. Denn ohne eine lichtdurchlässige Ausbildung der Wandung des Kanals lässt sich eine Beobachtung und die daraus resultierende Lokalisierung der neutralen Zone bzw. Startzone nicht vornehmen. Wird als Kanal ein Flachkanal verwendet, so ist es sicherlich in den meisten Fällen problemlos möglich, den relevanten Abschnitt seiner Wandung transparent auszubilden; bei anderen Ausführungen ist dies jedoch, konstruktiv bedingt, nur schwer oder, wie beispielsweise im Fall der Verwendung einer Hohlfaser, gar nicht möglich, was ein weiterer Nachteil ist. Die Lage der neutralen Zone ist auch wichtig für die Positionierung des Injektionsports zur Probeninjektion an der Wandung des Kanals, was bei einem Flachkanal ohne größere Probleme möglich ist, sich jedoch bei anderen Ausführungen nur mit erhöhtem konstruktiven Aufwand, oder, wie beispielsweise im Falle der Verwendung einer Hohlfaser, gar nicht realisieren lässt. Schließlich erschwert die Vielzahl von Anschlüssen bzw. Ports eine einfache Auswechselbarkeit des Kanals. Ebenso ist der Austausch mit einer Chromatographie-Säule mit einer Reihe von zeitraubenden experimentellen Anpassungen verbunden.

Ferner ist es im Stand der Technik bekannt, das Aufteilungsverhältnis der Durchflussmenge bzw. Durchflussrate der Trägerflüssigkeit auf die Anschlüsse an beiden Enden des Kanals zur Lokalisierung der neutralen Zone bzw. Startzone zu verwenden. Dadurch entfällt zwar die Notwendigkeit, einen transparenten Bereich in der Wandung des Kanals vorzusehen, und wird somit die Verwendung eines Hohlfaser-Kanals möglich. Jedoch erfolgt im Stand der Technik die Einstellung des Aufteilungsverhältnisses zum einen auf manuelle und sehr umständliche Weise und führt zum anderen nur zu einer recht ungenauen Lokalisierung der neutralen Zone bzw. Startzone, was sich wiederum negativ auf die Messergebnisse während der Elution auswirkt Denn für die Einstellung des Aufteilungsverhältnisses wird der Kanal entfernt und anschließend bei dann laufender Pumpe die Fließmenge bzw. Fließrate der aus den dann offenen Ports bzw. Anschlüssen austretenden Trägerflüssigkeit gemessen, daraus das Verhältnis der beiden Durchflussmengen bzw. Durchflussraten ermittelt und aus dem Aufteilungsverhältnis wiederum die Position der neutralen Zone bzw. Startzone bestimmt. Dies ist ein sehr aufwendiger Vorgang, der eine bei Bedarf benötigte ständige Änderung der Position der neutralen Zone bzw. Startzone nicht zulässt; vielmehr erlaubt dieser umständliche Prozess nur eine einmalige Justierung für den jeweiligen Messbetrieb. Dass dieser Justierungsprozess außerdem recht ungenau ist, liegt u.a. daran, dass die Messung bei ausgebautem Kanal in druckloser Umgebung vorgenommen wird, während die Fokussierung bei eingebautem Kanal unter Druck und somit unter veränderten Druckverhältnissen stattfindet.

Die folgenden Dokumente:
US 2008/264792 A1 (MOON ET AL.) 30. Oktober 2008 (2008-10-30)
LEE ET AL.: "IMPROVEMENT IN PARTICLE SEPARATION BY HOLLOW FIBER FLOW FIELD-FLOW FRACTIONATION AND THE POTENTIAL USE IN OBTAINING PARTICLE SIZE DISTRIBUTION", ANALYTICAL CHEMISTRY, AMERICAN CHEMICAL SOCIETY, US, Bd. 71, Nr. 16, 15. August 1999 (1999-08-15), Seiten 3446-3452, XP000854139, ISSN: 0003-2700, DOI: 10.1021/AC981204P
veröffentlichen jeweils eine Vorrichtung zur asymmetrischen Feldflussfraktionierung (AFFFF) dar, die es erlaubt, in einem ersten Schritt die Probe in dem Trennkanal zu fokussieren, in einem zweiten Schritt die Elution der Probe durchzuführen. Eine einzige Pumpe wird dabei benötigt, da der Fluss der Trägerflüssigkeit durch den Trennkanal umgeschaltet wird. In einer ersten Schaltstellung wird der Trennkanal durch entsprechende ersten und zweiten Flüssigkeitspfaden an seinen beiden Enden mit der Trägerflüssigkeit beaufschlagt, wobei die Probe an einem bestimmten Punkt innerhalb des Kanals fokussiert wird; in einer zweiten Schaltstellung tritt die Trägerflüssigkeit lediglich am ersten Ende des Trennkanals ein, wobei die fokussierte Probe durch den Kanal geführt und getrennt wird. Die poröse Wand des Trennkanals bildet jeweils einen Auslass für die Trägerflüssigkeit.

Es ist deshalb Aufgabe der vorliegenden Erfindung, eine verbesserte Vorrichtung zur Feldflussfraktionierung vorzuschlagen, bei welchem die zuvor erwähnten Nachteile vermieden werden bzw. nicht auftreten.

Diese Aufgabe wird gemäß einem ersten Aspekt der Erfindung gelöst durch eine Vorrichtung zur Feldflussfraktionierung, mit
- einem Sensor zur Ermittlung der Anwesenheit von Teilchen in einer Trägerflüssigkeit,
- mindestens einem im Wesentlichen geschlossenen länglichen Kanal, der ein erstes Ende mit einem ersten Anschluss und ein zweites Ende mit einem zweiten Anschluss aufweist und dessen Wandung mindestens einen sich in Längsrichtung des Kanals erstreckenden, für die Teilchen undurchlässigen und für die Trägerflüssigkeit durchlässigen Abschnitt aufweist,
- einer Pumpe, die einen Einlass und einen Auslass aufweist und zum Fördern der Trägerflüssigkeit vorgesehen ist,
- einem ersten Flüssigkeitspfad, der den Auslass der Pumpe mit dem ersten Anschluss des Kanals verbindet,
- einem zweiten Flüssigkeitspfad, der den zweiten Anschluss des Kanals mit einem ersten Schaltmittel verbindet, durch das der zweite Flüssigkeitspfad in einer ersten Schaltstellung an den Auslass der Pumpe und in einer zweiten Schaltstellung an den Sensor anschließbar ist,
- einer Injektionseinrichtung, die im ersten Flüssigkeitspfad angeordnet und zur Injektion einer Teilchen aufweisenden Probe in die durch den ersten Flüssigkeitspfad fließende Trägerflüssigkeit vorgesehen ist, und
- einer Durchflussmengenaufteilungseinrichtung, die die von der Pumpe geförderte Durchflussmenge in der ersten Schaltstellung des ersten Schaltmittels in einem vorgegebenen Aufteilungsverhältnis auf den ersten Flüssigkeitspfad und den zweiten Flüssigkeitspfad aufteilt und eine erste Durchflussmengensteuerungseinrichtung aufweist, die im ersten Flüssigkeitspfad angeordnet und zur Steuerung der Durchflussmenge der Trägerflüssigkeit im ersten Flüssigkeitspfad (6) vorgesehen ist und ein erstes Ventil zur Einstellung der Durchflussmenge der Trägerflüssigkeit im ersten Flüssigkeitspfad aufweist,
   wobei
- die erste Durchflussmengensteuerungseinrichtung eine erste Messeinrichtung zur Messung der Durchflussmenge der Trägerflüssigkeit aufweist,
- das Ventil stromaufwärts vor dieser ersten Messeinrichtung angeordnet und zur Steuerung der Durchflussmenge der Trägerflüssigkeit im ersten Flüssigkeitspfad unter Berücksichtigung des Messergebnisses der ersten Messeinrichtung vorgesehen ist und
- die Pumpe zum Fördern der Trägerflüssigkeit in einer definierten konstanten Durchflussmenge vorgesehen ist.

Hiernach bietet die Erfindung eine einfache und zugleich wirkungsvolle Möglichkeit, die Lage der neutralen Zone zu ermitteln und bei Bedarf definiert einzustellen, die ja die Startzone für die Probenbestandteile zu Beginn der Elution bildet. Es ist nämlich erfindungsgemäß gefunden worden, dass ohne Zuhilfenahme einer visuellen Kontrolle nur durch Vorgabe bzw. Einjustieren des Aufteilungsverhältnisses der von der Pumpe geförderten Durchflussmenge der Trägerflüssigkeit auf den ersten Flüssigkeitspfad, aus dem die Trägerflüssigkeit durch den ersten Anschluss am ersten Ende in den Kanal gepumpt wird, und den zweiten Flüssigkeitspfad, aus dem während der Fokussierung die Trägerflüssigkeit durch den zweiten Anschluss am anderen bzw. zweiten Ende in entgegengesetzter Richtung in den Kanal gepumpt wird, aus der die relative Position der neutralen Zone und bei bekannter Länge des Kanals (Entfernung zwischen dem ersten Anschluss und dem zweiten Anschluss) und gegebenenfalls auch unter Berücksichtigung der besonderen Geometrie des Kanals auch die Weglänge, die die Probenbestandteile während der Elution bis zum zweiten Anschluss im Kanal zurücklegen, und somit auch den absoluten Ort der neutralen Zone bzw. Startzone ermittelt werden kann. Beträgt beispielsweise das Aufteilungsverhältnis 1:9, d.h. werden 10% der von der Pumpe insgesamt geförderten Durchflussmenge der Trägerflüssigkeit durch den ersten Anschluss und 90% der Durchflussmenge durch den zweiten Anschluss in den Kanal gepumpt, so wird die neutrale Zone an einer Stelle gebildet, die in einer Distanz von 10% der gesamten Länge des Kanals vom ersten Anschluss liegt. Beträgt in diesem Beispiel die Länge des Kanals zwischen dem ersten Anschluss und dem zweiten Anschluss z.B. 40 cm, so ist davon auszugehen, dass sich die Position der neutralen Zone in einem Abstand von 4 cm vom ersten Anschluss bzw. in einem Abstand von 36 cm vom zweiten Anschluss im Kanal befindet. Optische Kontrollmethoden, wie sie bisher angewandt wurden, oder auch sonstige Messmethoden werden demnach mit der Erfindung nicht benötigt.

Außerdem erlaubt die Erfindung eine Einstellung bzw. Regelung des Aufteilungsverhältnisses, um bei Bedarf für die neutrale Zone bzw. Startzone unterschiedliche Positionen vorzugeben. Dabei wird die Durchflussmenge der Trägerflüssigkeit im ersten Flüssigkeitspfad gemessen und unter Berücksichtigung eines daraus erhaltenen Messergebnisses das Aufteilungsverhältnis auf einen vorgegebenen Wert eingestellt. Hierzu weist die Durchflussmengenaufteilungseinrichtung eine erste Durchflussmengensteuerungseinrichtung auf, die im ersten Flüssigkeitspfad angeordnet ist. Erfindungsgemäß wird unter Berücksichtigung des Messergebnisses lediglich die Durchflussmenge der Trägerflüssigkeit im ersten Flüssigkeitspfad auf einen vorgegebenen Wert gesteuert oder geregelt, während die Durchflussmenge der Trägerflüssigkeit im zweiten Flüssigkeitspfad fest vorgegeben und konstant ist. Zur Einstellung der Durchflussmenge der Trägerflüssigkeit im ersten Flüssigkeitspfad weist die erste Durchflussmengensteuerungseinrichtung ein Ventil und eine Messeinrichtung auf und ist das Ventil stromabwärts von dieser Messeinrichtung angeordnet.

Zur Erzielung der gewünschten Zuverlässigkeit und Genauigkeit der Messungen ist die Durchflussmenge der von der Pumpe abgegebenen Trägerflüssigkeit, bei der es sich um die insgesamt geförderte Durchflussmenge handelt, präzise zu dosieren. Die Erfindung erlaubt in diesem Zusammenhang bei Bedarf auf einfache Weise eine genaue Messung der Förderleistung der Pumpe und somit der gesamten Durchflussmenge der insgesamt von der Pumpe abgegebenen Trägerflüssigkeit, indem hierfür die gesamte Trägerflüssigkeit nur durch den ersten Flüssigkeitspfad geleitet wird. Dabei muss sichergestellt werden, dass Abflüsse in den zweiten Flüssigkeitspfad und zum Sensor unterbleiben und somit für diesen Fall der zweite Flüssigkeitspfad sowie der zum Sensor führende Pfad geschlossen sind. Ein solcher temporärer Betriebszustand lässt sich insbesondere dadurch realisieren, dass für das erste Schaltmittel eine dritte Schaltstellung vorgesehen wird, in der die Anschlüsse an den zweiten Flüssigkeitspfad und den Sensor gleichermaßen gesperrt sind, oder Ventile zum wahlweisen Schließen des zweiten Flüssigkeitspfades und des zum Sensor führenden Pfades verwendet werden. Bei einem solchen Messbetrieb lässt sich dann die im ersten Flüssigkeitspfad vorgesehene erste Messeinrichtung auf geschickte Weise zur präzisen Messung der Förderleistung der Pumpe und somit der gesamten Durchflussmenge der von der Pumpe insgesamt abgegebenen Trägerflüssigkeit nutzen. Insbesondere lassen sich mit einem solchen Messbetrieb Abweichungen erfassen, die beispielsweise aufgrund von Druckunterschieden in dem von der Pumpe bis zur ersten Messeinrichtung verlaufenden Abschnitt des ersten Flüssigkeitspfades auftreten und/oder Folge von Verschleißerscheinungen in der Pumpe sind. Werden derartige Änderungen festgestellt, so kann ein Korrekturfaktor bestimmt und für die Einstellung des Aufteilungsverhältnisses verwendet werden, um diese Änderungen entsprechend rechnerisch zu kompensieren. Nach Abschluss eines solchen temporären Messbetriebes wird dann zum normalen Betrieb zurückgekehrt, in dem die Durchflussmenge der Trägerflüssigkeit im ersten Flüssigkeitspfad unter Berücksichtigung des Messergebnisses der ersten Messeinrichtung gesteuert wird.

Die Erfindung stellt demnach nicht nur eine sehr genaue Regelung des Aufteilungsverhältnisses zur Verfügung, woraus sich eine präzise Lokalisierung der neutralen Zone bzw. Startzone während der Fokussierung ergibt, sondern erlaubt auch eine bei Bedarf schnelle Änderung des Aufteilungsverhältnisses und der daraus resultierenden Position der neutralen Zone bzw. Startzone unter Beibehaltung der gewünschten hohen Messgenauigkeit und der daraus resultierenden Möglichkeit einer präzisen Lokalisierung der neutralen Zone bzw. Startzone.

Ferner entfällt durch die Erfindung die Ausbildung eines Injektionsports in der Wandung des Kanals. Vielmehr findet erfindungsgemäß die Injektion der Probe stromaufwärts vor dem Kanal statt, und zwar in einem von der Pumpe zum ersten Anschluss des Kanals führenden ersten Flüssigkeitspfad. Eingebracht wird die Probe in den Kanal somit von der Trägerflüssigkeit, die die Probe aus dem ersten Flüssigkeitspfad in den Kanal durch dessen ersten Anschluss transportiert. Während der Fokussierung bildet sich die neutrale Zone, da Trägerflüssigkeit nicht nur durch den ersten Anschluss am ersten Ende des Kanals in den Kanal gepumpt wird, sondern gleichzeitig auch in entgegengesetzter Richtung durch den zweiten Anschluss am entgegengesetzt gelegenen anderen bzw. zweiten Ende. Nachdem die Probe von der Trägerflüssigkeit durch den ersten Anschluss in den Kanal transportiert worden ist, bleibt die Probe in der sich zwischenzeitlich gebildeten neutralen Zone liegen und verharrt dort solange, bis der zweite Betriebszustand und somit die Fokussierung endet und der dritte Betriebszustand und somit die Elution beginnt. Hieraus resultiert auch eine einfache Möglichkeit zum Auswechseln des Kanals, da die Kommunikation des Kanals mit den übrigen Aggregaten der Vorrichtung zur Feldflussfraktionierung nur noch über zwei Anschlüsse stattfindet, die entsprechend gelöst oder verbunden werden müssen, nämlich den ersten Anschluss, der sowohl während der Fokussierung als auch während der Elution den Flusseinlass bildet, und den zweiten Anschluss, der während der Fokussierung einen weiteren entgegengesetzten Flusseinlass und während der Elution den Flussauslass bildet.

Somit entfällt bei Verwendung der Erfindung sowohl der Injektionsport am Kanal als auch die Ausbildung eines transparenten Abschnittes in der Wandung des Kanals. Dadurch eröffnet sich erstmalig eine reelle praktische Möglichkeit für den Einsatz von Kanälen für die Feldflussfraktionierung in sehr viel freierer konstruktiverer Ausführung als bisher und insbesondere die Verwendung einer Hohlfaser als Kanal. Ein zügiger, unkomplizierter Wechsel zwischen Flachkanal und Hohlfaser und die gelegentliche Verwendung von Chromatographie-Säulen, stellen nämlich eine wichtige Anforderung dar, um das Potential der Feldflussfraktionierung in der praktischen Arbeit ausschöpfen zu können. Hohlfasern sind äußerst preisgünstig im Vergleich zu anderen Kanal-Konstruktionen. Flachkanäle sind besonders gut geeignet für Proben mit Teilchen, die ein sehr schwaches Detektor- bzw. Sensorsignal liefern und gleichzeitig Durchmesser von mehr als 300 nm haben; in diesem Fall kann in Flachkanälen die Probenmenge erhöht werden, ohne die Qualität des Chromatogramms herabzusetzen. Chromatographie-Säulen dienen zum Verständnis von Chromatogrammen, die von dritter Seite mit Chromatographie-Säulen gemacht wurden und bei denen weitere Analysen der Teilchengrößen notwendig sind.

Zum Umschalten von der Fokussierung auf die Elution ist das erste Schaltmittel vorgesehen, mit dem der zweite Flüssigkeitspfad den zweiten Anschluss des Kanals verbindet. Dieses erste Schaltmittel ist zwischen einer ersten Schaltstellung und einer zweiten Schaltstellung schaltbar. In seiner ersten Schaltstellung koppelt das erste Schaltmittel den zweiten Flüssigkeitspfad mit dem Auslass der Pumpe, um die Trägerflüssigkeit zusätzlich durch den zweiten Anschluss in den Kanal zu pumpen; die erste Schaltstellung wird deshalb für die Fokussierung gewählt. In seiner zweiten Schaltstellung koppelt das erste Schaltmittel den zweiten Flüssigkeitspfad mit dem Sensor; die zweite Schaltstellung wird für die Elution gewählt, um die nun durch den zweiten Anschluss aus dem Kanal austretende Trägerflüssigkeit mit den darin enthaltenen Probenbestandteilen zum Sensor zu leiten, welcher die Probenbestandteile erfasst.

Ein weiterer wesentlicher Vorteil der Erfindung besteht darin, dass für den Betrieb der Vorrichtung sowohl während der Fokussierung als auch während der Elution nur eine einzige Pumpe benötigt wird, die somit die gesamte erforderliche Durchflussmenge an Trägerflüssigkeit abgibt, welche in der ersten Schaltstellung des ersten Schaltmittels während der Fokussierung in einem vorgegebenen Aufteilungsverhältnis auf den ersten Flüssigkeitspfad und den zweiten Flüssigkeitspfad aufgeteilt wird. Für eine genaue Ermittlung des Aufteilungsverhältnisses der Durchflussmengen der Trägerflüssigkeit auf die beiden Flüssigkeitspfade und eine sich daraus ergebende genaue Lokalisierung der neutralen Zone bzw. Startzone während der Fokussierung ist es von Vorteil, dass der Wert der insgesamt dem System zur Verfügung stehenden Durchflussmenge der von der Pumpe geförderten Trägerflüssigkeit genau bekannt ist, so dass die Trägerflüssigkeit von der Pumpe in einer präzise dosierbaren Durchflussmenge gefördert werden sollte. Der Einsatz nur einer einzigen Pumpe führt nicht nur zu einer Vereinfachung der Konstruktion der hierfür benötigten Vorrichtung, sondern gewährleistet auch die Abgabe von Trägerflüssigkeit mit einer definierten konstanten Durchflussmenge. Des weiteren werden die Pulsationsfreiheit der Flüssigkeitsmenge und, damit verbunden, Druckschwankungen im Kanal minimiert. Denn nur die Abgabe einer definierten konstanten Gesamt-Durchflussmenge aus einer und derselben Quelle stellt sicher, dass die Aufteilung auf den ersten Flüssigkeitspfad und den zweiten Flüssigkeitspfad in dem gewünschten definierten Aufteilungsverhältnis stattfindet.

Bevorzugte Ausführungen und Weiterbildungen der Erfindung sind in den abhängigen Ansprüchen angegeben.

Zweckmäßigerweise sollte die Durchflussmenge der von der Pumpe abgegebenen Trägerflüssigkeit auf einen bestimmten Wert geregelt werden. Hierzu ist eine Regelungseinheit zum geregelten Fördern der Trägerflüssigkeit durch die Pumpe vorzusehen, wobei die Regelungseinheit bevorzugt eine bauliche Einheit mit der Pumpe bildet oder in die Pumpe integriert ist, so dass im letztgenannten Fall die Pumpe die Trägerflüssigkeit bereits mit einer auf einen bestimmten Wert geregelten Durchflussmenge abgibt.

Bei einer weiteren bevorzugten Ausführung der Erfindung wird in Abhängigkeit von dem die Durchflussmenge der Trägerflüssigkeit im ersten Flüssigkeitspfad repräsentierenden Messergebnis und der Eingabe eines ein gewünschtes Aufteilungsverhältnis angebenden Sollwertes die Durchflussmenge der Trägerflüssigkeit im ersten Flüssigkeitspfad entsprechend geregelt, wozu eine Regelungseinrichtung vorzusehen ist, die das erste Ventil entsprechend ansteuert. Zur Erhöhung der Regelungsgenauigkeit sollte vorzugsweise auch noch die Durchflussmenge der von der Pumpe abgegebenen Trägerflüssigkeit gemessen und zusätzlich in Abhängigkeit von einem daraus erhaltenen Messergebnis die Regelung vorgenommen werden. Denn für die Genauigkeit der Einstellung und Bestimmung des Aufteilungsverhältnisses und der daraus resultierenden Lokalisierung der neutralen Zone bzw. Startzone sollte die genaue Durchflussmenge bzw. Durchflussrate der von der Pumpe insgesamt geförderten Trägerflüssigkeit bekannt sein.

Vorzugsweise wird die Probe an einer Stelle stromabwärts von derjenigen Stelle, an der die Messung und/oder Steuerung bzw. Regelung durchgeführt wird, in den ersten Flüssigkeitspfad injiziert, indem die Injektionseinrichtung stromabwärts von der ersten Durchflussmengensteuerungseinrichtung angeordnet ist.

Zweckmäßigerweise kann ein zweites Schaltmittel vorgesehen sein, mit dem die Injektionseinrichtung wahlweise an den ersten Flüssigkeitspfad anschließbar oder abschaltbar ist.

Der aus dem flüssigkeitsdurchlässigen Abschnitt des Kanals austretende Teil der Trägerflüssigkeit wird bevorzugt durch einen dritten Flüssigkeitspfad abgeleitet. Bei einer Weiterbildung dieser Ausführung kann die Durchflussmenge der Trägerflüssigkeit im dritten Flüssigkeitspfad auf einen vorgegebenen Wert gesteuert oder geregelt werden, was für die gesamte Strömungsbilanz in der Vorrichtung von Vorteil ist. Hierzu kann im dritten Flüssigkeitspfad eine zweite Durchflussmengensteuerungseinrichtung angeordnet sein, die zur Steuerung der Durchflussmenge der Trägerflüssigkeit im dritten Flüssigkeitspfad vorgesehen ist. Die zweite Durchflussmengensteuerungseinrichtung kann ein Ventil, vorzugsweise Magnetventil, zur Einstellung der Durchflussmenge der Trägerflüssigkeit im dritten Flüssigkeitspfad aufweisen. Bevorzugt wird die Durchflussmenge der Trägerflüssigkeit im dritten Flüssigkeitspfad gemessen und unter Berücksichtigung des daraus erhaltenen Messergebnisses die Durchflussmenge der Trägerflüssigkeit im dritten Flüssigkeitspfad gesteuert oder geregelt.

Bei einer weiteren Ausführung der Erfindung wird während der Förderung von Trägerflüssigkeit in den zweiten Flüssigkeitspfad von der Pumpe zusätzlich Trägerflüssigkeit zum Sensor gefördert. Eine solche Maßnahme dient der Spülung des Detektors bzw. Sensors während der Fokussierung. Denn Fluss-Änderungen im Sensor können sog. Basislinien-Drifts am Sensor verursachen, die zeitlich nur langsam abklingen, was eine unerwünschte Drift der Basislinie von Chromatogrammen verursacht. Hierzu kann das erste Schaltmittel bevorzugt so ausgebildet sein, dass es in seiner ersten Schaltstellung für die Fokussierung den Auslass der Pumpe sowohl mit dem zweiten Flüssigkeitspfad als auch mit dem Sensor koppelt.

Als Kanal kann beispielsweise ein Flachkanal mit vorzugsweise rechteckigem Querschnitt (in Strömungsrichtung betrachtet) und einer Membran, die insbesondere (in Draufsicht betrachtet) eine Trapezform hat, verwendet werden.

Ferner kann bei Bedarf ein Kanal verwendet werden, dessen gesamte Wandung im Wesentlichen für die Teilchen undurchlässig und für die Trägerflüssigkeit durchlässig ausgebildet ist. Dies kann insbesondere eine Hohlfaser sein. Gerade mit der Verwendung einer solchen Ausführung zeigen sich die Vorteile der vorliegenden Erfindung. Denn zum ersten Mal lässt sich mithilfe der Erfindung der Einsatz einer Hohlfaser für ein Verfahren zur Feldflussfraktionierung in praktischer und zuverlässiger Weise verwirklichen; für diesen Fall kann das Verfahren auch als Hohlfaserfeldflussfraktionierung (HFFFFF bzw. HF5) bezeichnet werden.

Zweckmäßigerweise können mehrere Kanäle vorgehalten werden und wird aus dieser Mehrzahl von Kanälen wahlweise ein Kanal zur Durchführung des Verfahrens aktiviert. Bevorzugt sind die Kanäle auswechselbar ausgeführt.

Mindestens ein unbenutzter Kanal kann zur Reinigung gespült werden, wenn dieser nicht zur Durchführung des Verfahrens aktiviert ist. Hierzu kann mindestens eine zu- und abschaltbare Spüleinrichtung zum Spülen des unbenutzten Kanals vorgesehen sein. Es ist nämlich gefunden worden, dass durch, insbesondere ständiges, Spülen die Zeit bis zur Einsatz- bzw. Messbereitschaft eines Kanals meist deutlich verkürzt werden kann, weil dadurch störende Reste, wie beispielsweise Bakterienrasen, im Kanal nach dem Probenwechsel entfernt werden oder der Niederschlag solcher Reste im Kanal von vornherein im wesentlichen verhindert wird. In diesem Zusammenhang spielt auch die Adhäsion von Bestandteilen aus der Trägerflüssigkeit eine Rolle, wobei die Adhäsion von der Stärke des Flusses abhängen kann, wodurch ebenfalls eine störende Drift im Detektor bzw. Sensor erzeugt werden kann.

Bei Verwendung einer Mehrzahl von Kanälen ist bevorzugt ein drittes Schaltmittel zur wahlweisen Aktivierung eines Kanals aus der Mehrzahl der Kanäle vorgesehen. Bei einer Weiterbildung dieser Ausführung ist die Spüleinrichtung an das dritte Schaltmittel angeschlossen und durch dieses an mindestens einen der unbenutzten Kanäle zuschaltbar.

Zusätzlich zu dem mindestens einen Kanal kann mindestens eine Chromatographie-Säule vorgehalten und wahlweise entweder ein Kanal oder eine Chromatographie-Säule zur Durchführung des Verfahrens aktiviert werden. Hierzu wird bevorzugt ein viertes Schaltmittel zur wahlweisen Aktivierung entweder eines Kanals oder einer Chromatographie-Säule eingesetzt. Bei einer Weiterbildung dieser Ausführung kann die mindestens eine Spüleinrichtung an das vierte Schaltmittel angeschlossen und durch dieses an mindestens einen unbenutzten Kanal und/oder mindestens eine unbenutzte Chromatographie-Säule zu schaltbar sein.

Zweckmäßigerweise können das zuvor erwähnte dritte Schaltmittel und das zuvor erwähnte vierte Schaltmittel ein gemeinsames Schaltmittel bilden.

Nachfolgend werden bevorzugte Ausführungsbeispiele der Erfindung anhand der beiliegenden Zeichnungen näher erläutert. Es zeigen:
- Fig. 1a bis 1 d: eine erste Ausführung einer Vorrichtung zur Feldflussfraktionierung gemäß der vorliegenden Erfindung mit einer als Kanal verwendeten Hohlfaser in vier verschiedenen Betriebszuständen;
- Fig. 1 aa bis 1 dd: in schematischen Darstellungen die verschiedenen Schritte des Trennverfahrens;
- Fig. 2a bis 2d: eine zweite Ausführung einer Vorrichtung zur Feldflussfraktionierung gemäß der vorliegenden Erfindung mit einem Flachkanal in verschiedenen Betriebszuständen;
- Fig. 3a bis 3h: eine dritte Ausführung einer Vorrichtung zur Feldflussfraktionierung gemäß der vorliegenden Erfindung mit einer als Kanal verwendeten Hohlfaser und einem Flachkanal in verschiedenen Betriebszuständen;
- Fig. 4a bis 4h: eine vierte Ausführung einer Vorrichtung zur Feldflussfraktionierung gemäß der vorliegenden Erfindung mit einer als Kanal verwendeten Hohlfaser, einem Flachkanal und einer Spüleinrichtung in verschiedenen Betriebszuständen;
- Fig. 5a bis 5j: eine fünfte Ausführung einer Vorrichtung zur Feldflussfraktionierung gemäß der vorliegenden Erfindung mit einer als Kanal verwendeten Hohlfaser, einem Flachkanal und einer Chromatographie-Säule in verschiedenen Betriebszuständen; und
- Fig. 6a bis 6j: eine sechste Ausführung einer Vorrichtung gemäß der vorliegenden Erfindung mit einer als Kanal verwendeten Hohlfaser, einem Flachkanal, einer Chromatographie-Säule und einer Spüleinrichtung.

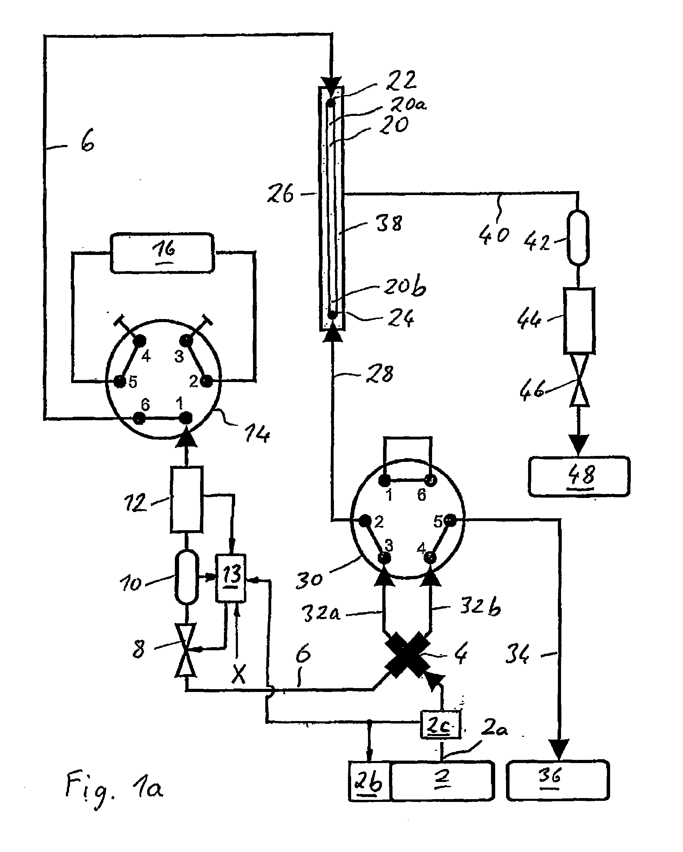

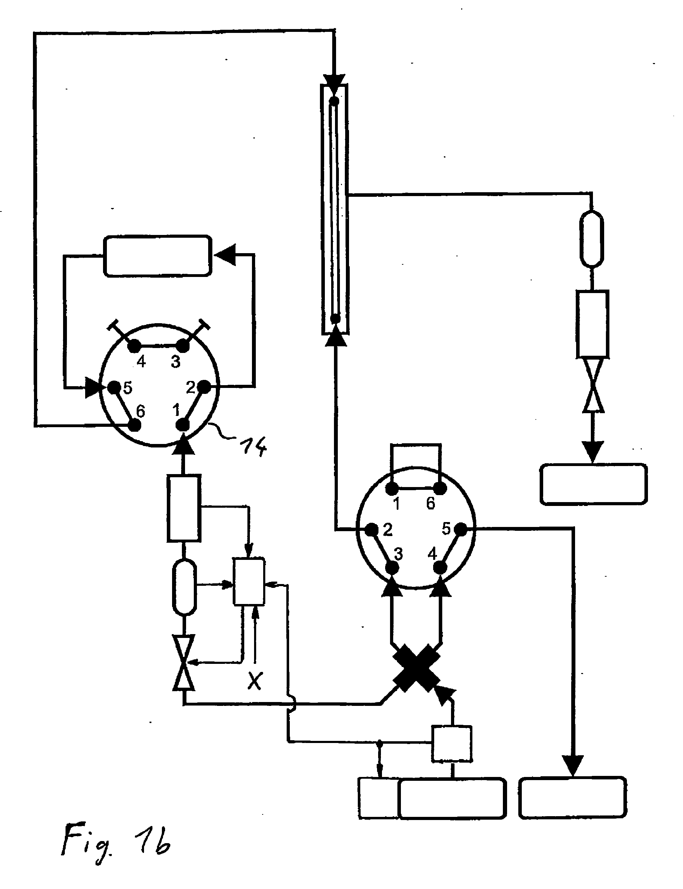

In den Fig. 1a bis 1d ist eine erste Ausführung einer Vorrichtung zur Durchführung eines Verfahrens zur Feldflussfraktionierung gezeigt. Dabei sind in Fig. 1a alle wesentlichen Komponenten mit Bezugszeichen gekennzeichnet, während in den Fig. 1b bis 1d, welche die erste Ausführung in unterschiedlichen Betriebszuständen zeigen, der besseren Übersichtlichkeit halber nur diejenigen Komponenten mit Bezugszeichen gekennzeichnet sind, welche für den jeweils gezeigten Betriebszustand verantwortlich sind.

Die dargestellte Vorrichtung weist eine Pumpe 2 auf, die im beschriebenen Ausführungsbeispiel als einzige Quelle zur Förderung von Trägerflüssigkeit vorgesehen ist. Somit übernimmt diese Pumpe 2 die Bereitstellung der für die Vorrichtung benötigten gesamten Durchflussmenge von Trägerflüssigkeit. Gewöhnlich bezieht die Pumpe 2 die Trägerflüssigkeit aus einem entsprechenden Trägerflüssigkeitsbehälter, der in den Figuren nicht dargestellt ist. Die Pumpe 2 ist mit ihrem Auslass 2a an einen Verteiler 4 angeschlossen, von dem ein erster Flüssigkeitspfad 6 abzweigt. Um die Durchflussmenge der von der Pumpe 2 abgegebenen Trägerflüssigkeit präzise auf einen bestimmten, reproduzierbaren Wert einzustellen bzw. zu dosieren, wird die Fördermenge der Pumpe 2 entsprechend geregelt. Hierzu ist eine Regelungseinheit 2b vorgesehen, die die Durchflussmenge der von der Pumpe 2 in den Pfad zum Verteiler 4 abgegebenen Trägerflüssigkeit erfasst und die Förderleistung der Pumpe 2 in Abhängigkeit von einem vorgegebenen Sollwert entsprechend einstellt. Die in den Figuren 1a bis 1d schematisch als Block dargestellte Regelungseinheit 2b kann bevorzugt eine gemeinsame bauliche Einheit mit der Pumpe 2 bilden oder in die Pumpe 2 integriert sein; in letzterem Fall handelt es sich bei der Pumpe 2 dann um eine geregelte Pumpe mit sehr genauer Dosierungsmögtichkeit, wie sie mittlerweile auf dem Markt erhältlich ist.

In dem ersten Flüssigkeitspfad 6 ist ein, bevorzugt elektronisch steuerbares, Nadelventil 8 geschaltet, welches durch Veränderung seines Öffnungsquerschnittes eine Einstellung der Fließgeschwindigkeit und somit der Durchflussmenge der Trägerflüssigkeit durch den ersten Flüssigkeitspfad 6 ermöglicht. Alternativ zu dem erwähnten Nadelventil 8 können aber auch grundsätzlich andere Arten von Ventilen Verwendung finden, und kann das Ventil grundsätzlich auch manuell einstellbar sein. Anstelle beispielsweise eines Magnetventils erlaubt ein Nadelventil jedoch eine genauere Einstellbarkeit insbesondere bei relativ geringen Durchflussmengen. Stromabwärts vom Nadelventil 8 folgt ein Drucksensor 10. Wiederum stromabwärts vom Drucksensor 10 ist im ersten Flüssigkeitspfad 6 eine Durchflussmesseinrichtung 12 vorgesehen, welche die Durchflussmenge in Volumen/Zeiteinheit erfasst. Das Nadelventil 8 und die Durchflussmesseinrichtung 12 bilden gemeinsam eine Durchflussregelung für die Trägerflüssigkeit im ersten Flüssigkeitspfad 6. Der Drucksensor 10 ist dagegen zur Erfassung eines eventuellen Überdruckes und somit als Sicherungsmaßnahme gegen Überdruck vorgesehen, um einen durch Überdruck hervorgerufenen Schaden in der Vorrichtung zu verhindern. Die vom Drucksensor 10 und von der Durchflussmesseinrichtung 12 gelieferten Messergebnisse werden an einen Regler 13 übermittelt, welcher das Nadelventil 8 steuert. Zusätzlich zu den von dem Drucksensor 10 und der Durchflussmesseinrichtung 12 durchgeführten Messungen wird im dargestellten Ausführungsbeispiel auch noch die gesamte Durchflussmenge der von der Pumpe 2 geförderten Trägerflüssigkeit erfasst, wozu in dem von der Pumpe 2 zum Verteiler 4 führenden Pfad ein entsprechender Durchflussmengensensor 2c vorgesehen ist. Demnach bewirkt der Regler 13 in Abhängigkeit von den Messergebnissen des Durchflussmengensensors 2c, des Drucksensors 10 und der Durchflussmesseinrichtung 12 sowie ferner in Abhängigkeit von der Eingabe eines Sollwertes X für das gewünschte Aufteilungsverhältnis eine entsprechende Verstellung des Öffnungsquerschnittes im Nadelventil 8. Im Normalbetrieb (ohne Überdruck) wird somit die Durchflussmenge der Trägerflüssigkeit im ersten Flüssigkeitspfad 6 durch den Regler 13 mit Hilfe des Durchflussmengensensors 2c, des Nadelventils 8 und der Durchflussmesseinrichtung 12 auf einen vorgegebenen Sollwert X geregelt. An dieser Stelle sei ergänzend noch angemerkt, dass das Messergebnis des Durchflussmengensensors 2c am Auslass 2a der Pumpe 2 zusätzlich auch von der auf die Pumpe 2 einwirkenden Regelungseinheit 2b verwendet werden kann, so dass der Durchflussmengensensor 2c zusätzlich auch an der Regelungseinheit 2b angeschlossen ist, wie die Figuren 1a bis 1d ebenfalls erkennen lassen.

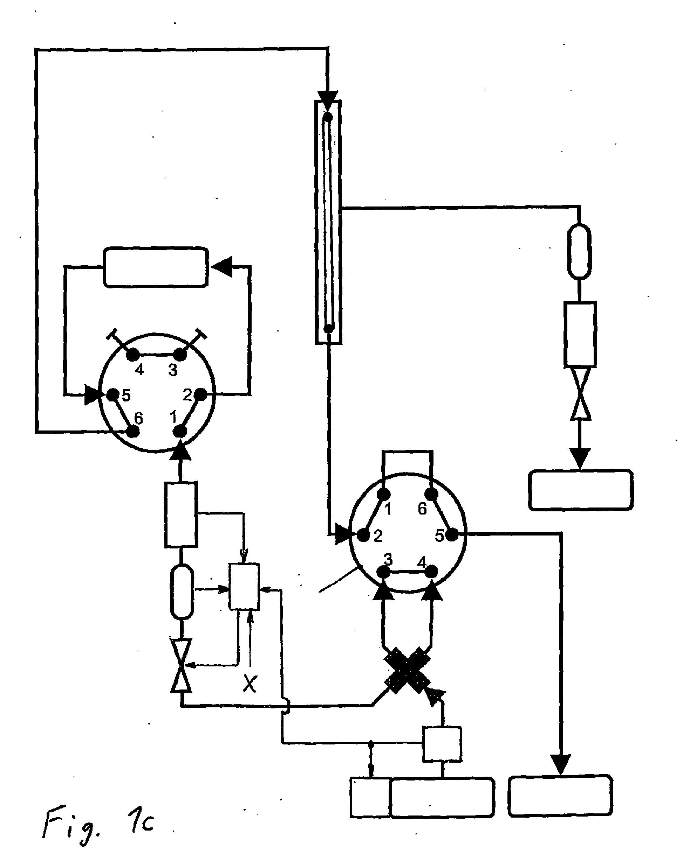

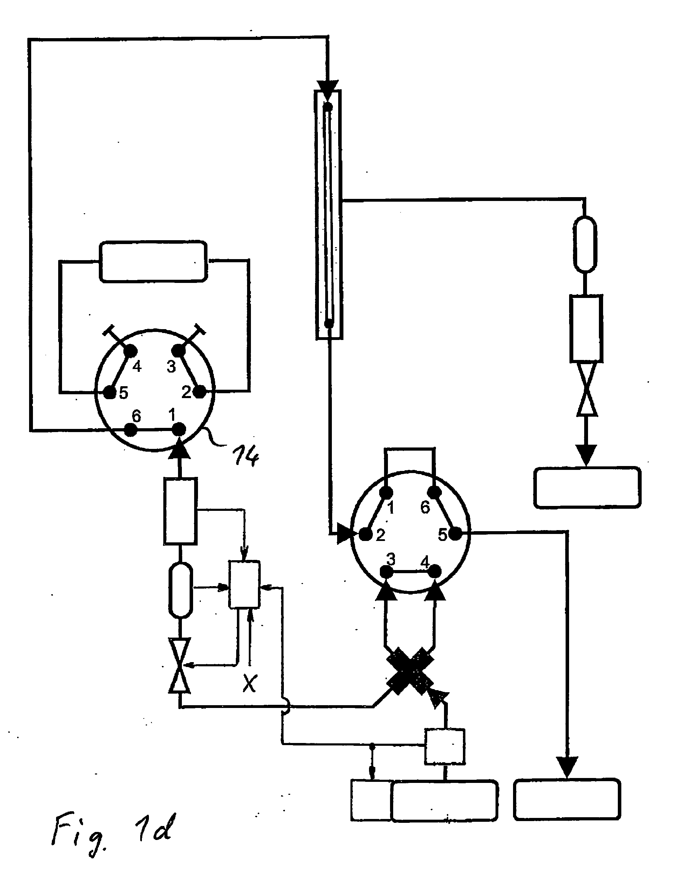

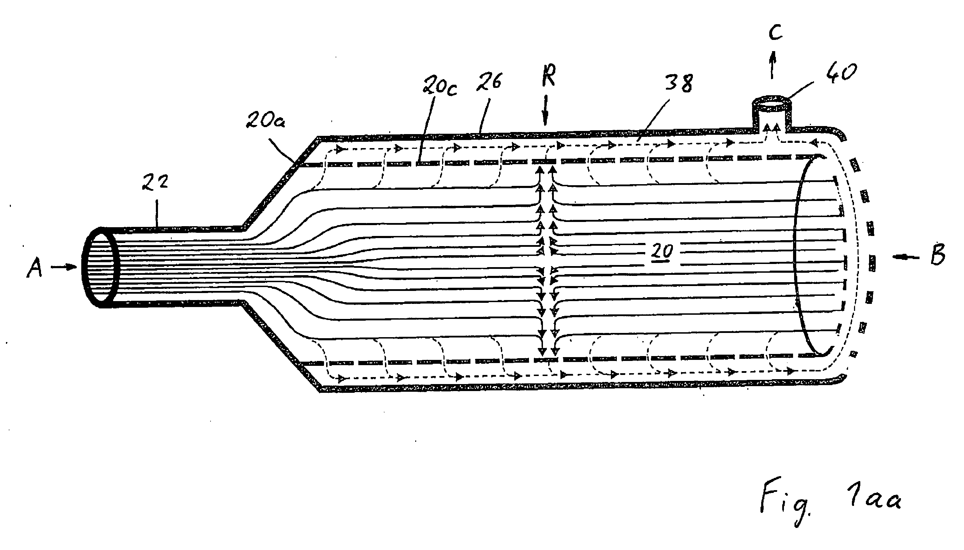

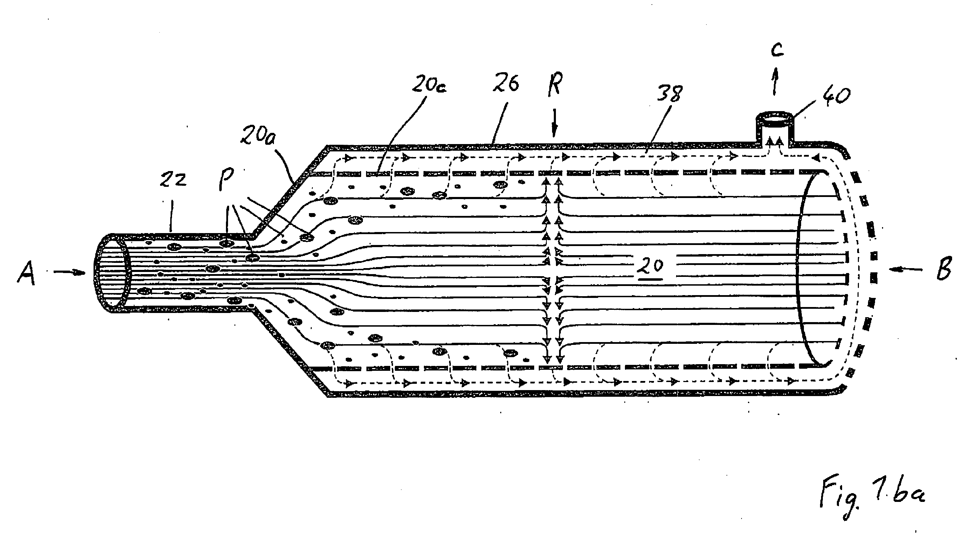

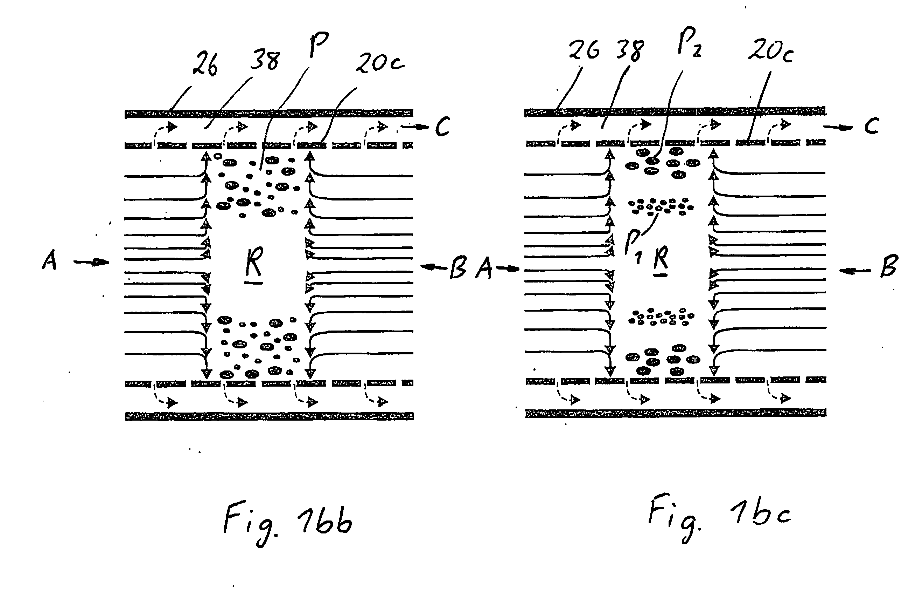

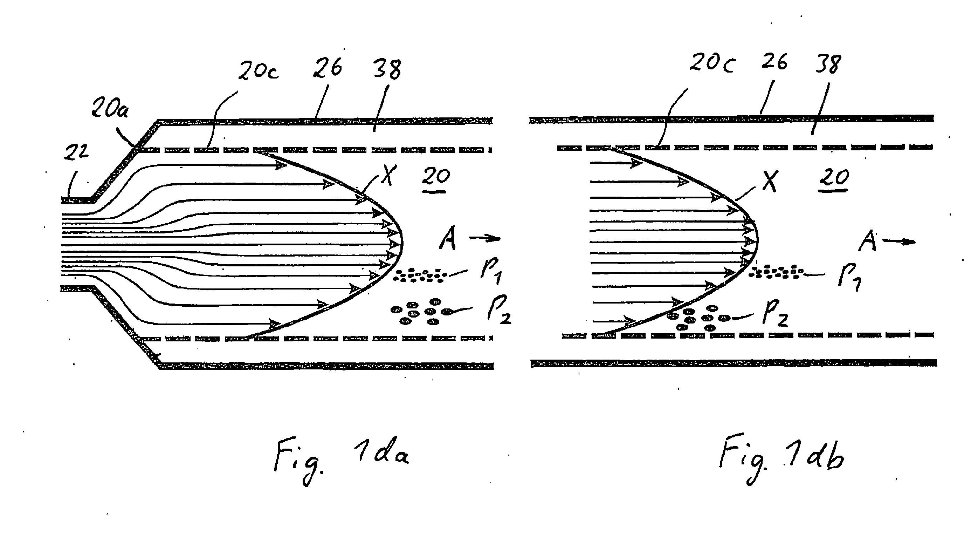

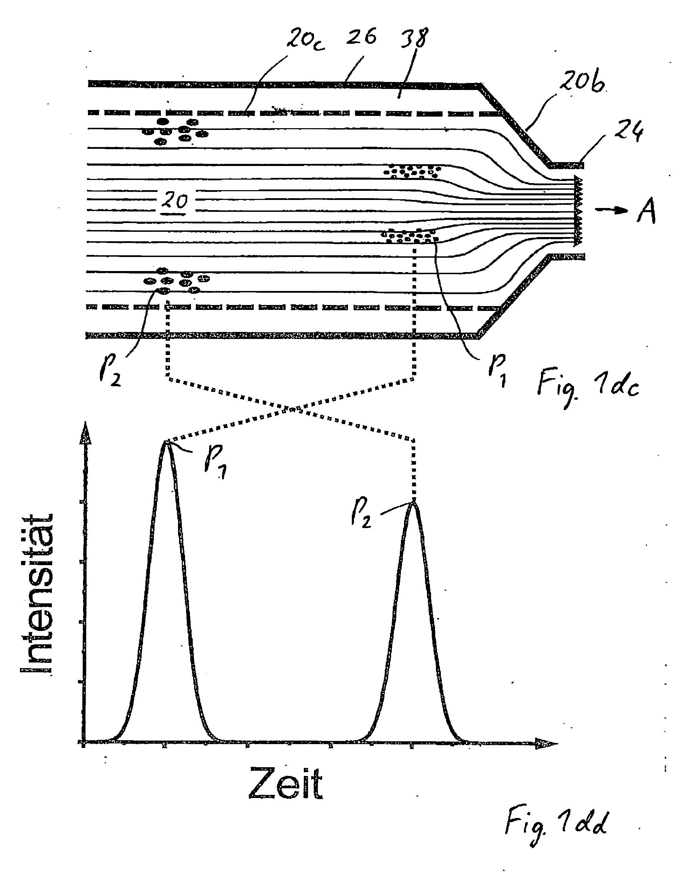

Stromabwärts von der Durchflussmesseinrichtung 12 ist im ersten Flüssigkeitspfad 6 ein Schaltmittel 14 vorgesehen, das dazu dient, eine Probeninjektionseinrichtung 16 in den ersten Flüssigkeitspfad 6 zu schalten, um in die im ersten Flüssigkeitspfad 6 befindliche Trägerflüssigkeit eine Probe einzubringen, die mindestens zwei, gewöhnlich aber deutlich mehr (ggf. bis zu mehreren tausend) zu analysierende Probenbestandteile enthält. Die zu analysierenden Probenbestandteile bestehen aus Teilchen, bei denen es sich insbesondere um Partikel, Makromoleküle oder Moleküle handelt. Das Schaltmittel 14 kann zwei Schaltstellungen einnehmen. In der ersten Schaltstellung, wie sie in den Fig. 1 a und 1 d gezeigt ist, wird im Schaltmittel 14 der Kontakt "1", an den der stromaufwärtige Abschnitt des ersten Flüssigkeitspfades 6 angeschlossen ist, mit dem Kontakt "6" gekoppelt, an den der weiterführende stromabwärts gelegene Teil des Flüssigkeitspfades 6 angeschlossen ist, während die mit den Kontakten "2" und "5" gekoppelte Probeninjektionseinrichtung 16 vom ersten Flüssigkeitspfad 6 abgetrennt ist, so dass die Trägerflüssigkeit durch den ersten Flüssigkeitspfad 6 und das Schaltmittel 14 an der inaktivierten Probeninjektionseinrichtung 16 vorbeifließt. In der in den Fig. 1b und 1c dargestellten zweiten Schaltstellung sind im Schaltmittel 14 die Kontakte "1" und "6" unterbrochen und jeweils die Kontakte "1" und "2" sowie "5" und "6" miteinander verbunden, so dass in dieser zweiten Schaltstellung die aus der Durchflussmesseinrichtung 12 und somit dem stromaufwärts gelegenen Abschnitt des ersten Flüssigkeitspfades 6 austretende Trägerflüssigkeit durch die Probeninjektionseinrichtung 16 geleitet wird, um dabei Proben in die Trägerflüssigkeit zu geben. Bevorzugt ist das Schaltmittel 14 als manuell und/oder motorisch betätigbarer Drehschalter ausgebildet, wie auch die Darstellung in den Figuren schematisch erkennen lässt.

Vom Kontakt "6" des Schaltmittels 14 führt der erste Flüssigkeitspfad 6 im dargestellten Ausführungsbeispiel gemäß Fig. 1 direkt zu einem Trennkanal, der hier aus einer Hohlfaser 20 besteht. Die Hohlfaser 20 weist an ihrem ersten Ende 20a einen ersten Anschluss 22, zu dem der erste Flüssigkeitspfad 6 führt, und an ihrem entgegengesetzten zweiten Ende 20b einen zweiten Anschluss 24 auf. Wie Fig. 1 ferner schematisch erkennen lässt, sitzt die Hohlfaser 20 in einem Rohr 26 und ist von diesem in einem Abstand umschlossen.

Vom zweiten Anschluss 24 der Hohlfaser 20 führt ein zweiter Flüssigkeitspfad 28 zum Kontakt "2" eines Schaltmittels 30, an dessen Kontakte "3" und "4" über Verbindungsleitungen 32a, 32b der Verteiler 4 angeschlossen ist. Ferner ist über eine Verbindungsleitung 34 ein Detektor bzw. Sensor 36 an den Kontakt "5" des Schaltmittels 30 angeschlossen. Das Schaltmittel 30 lässt sich wahlweise in eine erste Schaltstellung oder in eine zweite Schaltstellung schalten. Während der Fokussierung befindet sich das Schaltmittel 30 in der ersten Schaltstellung, wie in den Fig. 1a und 1b gezeigt ist. In der ersten Schaltstellung sind im Schaltmittel 30 die Kontakte "2" und "3" miteinander verbunden, wodurch die Pumpe 2 über den Verteiler 4 und den zweiten Flüssigkeitspfad 28 mit dem zweiten Anschluss 24 der Hohlfaser 20 gekoppelt ist. Ferner sind in der ersten Schaltstellung die Kontakte "4" und "5" miteinander verbunden, wodurch die Pumpe 2 über den Verteiler 4 und die Verbindungsleitung 34 zusätzlich mit dem Sensor 36 gekoppelt ist. Somit fördert die Pumpe 2 in der ersten Schaltstellung des Schaltmittels 30 Trägerflüssigkeit nicht nur durch den ersten Flüssigkeitspfad 6 in den ersten Anschluss 22 der Hohlfaser 20, sondern zusätzlich auch noch Trägerflüssigkeit über den zweiten Flüssigkeitspfad 28 in den zweiten Anschluss 24 der Hohlfaser 20, um die während der Fokussierung entgegengesetzten Strömungen in der Hohlfaser 20 zu erzeugen. Ferner fördert die Pumpe 2 in der ersten Schaltstellung des Schaltmittels 30 zusätzlich noch Trägerflüssigkeit in den Sensor 36, um diesen zu spülen und somit die Gefahr einer Sedimentation zu verringern. Denn der für die vorliegende Vorrichtung verwendete Sensor 36 ist druck- und flusssensibel, und Änderungen des Flusses im Sensor 36 können Basislinien-Drifts am Sensor 36 verursachen, die zeitlich nur langsam abklingen, wodurch eine unerwünschte Drift der Basislinie von Chromatogrammen verursacht wird. In diesem Zusammenhang ist eine vollständige Unterbrechung des Flusses durch den Sensor 36 ganz besonders kritisch. Die zuvor erwähnten nachteiligen Erscheinungen lassen sich durch die Spülung verhindern. Bevorzugt ist auch das Schaltmittel 30 als manuell und/oder motorisch betätigbarer Drehschalter ausgebildet, wie auch die Darstellung in den Figuren schematisch erkennen lässt.

Da der Mantel bzw. die Wandung der Hohlfaser 20 porös ist, tritt ein Teil der in der Hohlfaser 20 befindlichen Trägerflüssigkeit in einen zwischen der Hohlfaser 20 und dem Rohr 26 gebildeten Zwischenraum 38 aus und wird durch einen an den Zwischenraum 38 angeschlossenen dritten Flüssigkeitspfad 40 abgeleitet. In dem dritten Flüssigkeitspfad 40 sitzt ein Drucksensor 42, dem stromabwärts eine Durchflussmesseinrichtung 44 nachgeschaltet ist. Wiederum stromabwärts von der Durchflussmesseinrichtung 44 ist im dritten Flüssigkeitspfad 40 ein, vorzugsweise elektronisch steuerbares, Magnetventil 46 angeordnet, mit dem durch Änderung seines Öffnungsquerschnittes die Fließgeschwindigkeit und somit die Durchflussmenge (Volumen/Zeiteinheit) der Trägerflüssigkeit entsprechend einstellbar ist. Der Drucksensor 42 misst im dritten Flüssigkeitspfad 40 den Druck, der auf vom Durchlässigkeitsgrad der Wandung der Hohlfaser 20 abhängigen Rückstaueffekten beruht. Dabei übernimmt der Drucksensor 42 (in ähnlicher Weise wie der Drucksensor 10) eine Sicherheitsfunktion gegen Überdruck. Die vom Drucksensor 42 und von der Durchflussmesseinrichtung 44 gelieferten Messergebnisse werden an einen nicht dargestellten Regler übermittelt, welcher in Abhängigkeit von diesen Messergebnissen eine entsprechende Verstellung des Öffnungsquerschnittes im Magnetventil 46 bewirkt. Auf diese Weise wird die Durchflussmenge bzw. Abflussmenge der Trägerflüssigkeit im dritten Flüssigkeitspfad 40 auf einen vorgegebenen Sollwert geregelt. Im Normalfall, wenn also im dritten Flüssigkeitspfad 40 kein Überdruck herrscht, wird die Regelung der Durchflussmenge von der Durchflusmesseinrichtung 44 und dem Magnetventil 46 bestimmt. Anstelle eines Magnetventils können auch alle anderen Arten von Ventilen grundsätzlich zum Einsatz kommen, und das Ventil kann grundsätzlich auch manuell einstellbar ausgeführt sein. Das erwähnte Magnetventil 46 kommt deshalb bevorzugt in Frage, weil es sich für die Steuerung vergleichsweise großer Durchflussmengen besonders eignet. Wie die Figuren ferner erkennen lassen, wird der aus dem Zwischenraum 38 zwischen der Hohlfaser 20 und dem umgebenden Rohr 26 abgeleitete Teil der Trägerflüssigkeit durch den dritten Flüssigkeitspfad 40 in ein Abfallreservoir 48 geleitet, welches sich stromabwärts von dem Nadelventil 46 befindet.

Im Übrigen kann die Durchflussmesseinrichtung 12 auch bei Bedarf temporär zur präzisen Messung der Förderleistung der Pumpe 2 und somit der gesamten Durchflussmenge der von der Pumpe 2 insgesamt abgegebenen Trägerflüssigkeit verwendet werden. Für diesen temporären Messbetrieb muss die von der Pumpe 2 geförderte gesamte Trägerflüssigkeit nur durch den ersten Flüssigkeitspfad 6 geleitet werden. Dabei muss sichergestellt werden, dass Abflüsse in den zweiten Flüssigkeitspfad 28 und in die Verbindungsleitung 34 zum Sensor 36 unterbleiben und somit für diesen Fall der zweite Flüssigkeitspfad 28 und die Verbindungsleitung 34 geschlossen sind. Ein solcher temporärer Betriebszustand lässt sich insbesondere dadurch realisieren, dass für das Schaltmittel 30 eine in den Figuren nicht gezeigte dritte Schaltstellung vorgesehen wird, in der die Anschlüsse an den zweiten Flüssigkeitspfad 28 und die Verbindungsleitung 34 gleichermaßen gesperrt sind, oder ebenfalls in den Figuren nicht dargestellte Ventile zum wahlweisen Schließen des zweiten Flüssigkeitspfades 28 und der Verbindungsleitung 34 verwendet werden. Mit einem solchen temporären Messbetrieb lassen sich insbesondere Abweichungen erfassen, die beispielsweise aufgrund von Druckunterschieden in dem von der Pumpe 2 bis zur Durchflussmesseinrichtung 12 verlaufenden Abschnitt des ersten Flüssigkeitspfades 6 auftreten und/oder Folge von Verschleißerscheinungen in der Pumpe 2 sind. Werden derartige Änderungen festgestellt, so kann ein Korrekturfaktor bestimmt und für die Regelung im Regler 13 entsprechend berücksichtigt werden, um derartige Änderungen entsprechend rechnerisch zu kompensieren. Nach Abschluss eines solchen temporären Messbetriebes wird dann zum normalen Betrieb zurückgekehrt.

An dieser Stelle sei noch angemerkt, dass die Flüssigkeitspfade 6, 28 und 40 bevorzugt als Rohr- oder Schlauchleitungen ausgebildet sind.

Nachfolgend wird die in den Fig. 1a bis 1d dargestellte Vorrichtung zusätzlich anhand der Fig. 1aa bis 1dd erläutert. Dabei ist in den Fig. 1aa und 1 ba nur ein Abschnitt der Hohlfaser 20 im Bereich ihres ersten Endes 20a und benachbart zum ersten Anschluss 22 schematisch in einer perspektivischen 'transparenten' Ansicht dargestellt, zeigen die Fig. 1bb und 1bc im Längsschnitt einen Abschnitt der Hohlfaser 20 im Bereich eines Relaxationspunktes R, ist in Fig. 1da eine Längschnittansicht eines Abschnittes der Hohlfaser 20 im Bereich ihres ersten Endes 20a und des ersten Anschlusses 22 dargestellt, zeigt Fig. 1 db im Längsschnitt einen Abschnitt der Hohlfaser 20 und ist in Fig. 1 dc im Längsschnitt ein Abschnitt der Hohlfaser 20 im Bereich ihres zweiten Endes 20b und benachbart zum zweiten Anschluss 24 abgebildet, während Fig. 1 dd eine vom Sensor 36 erzeugte Messkurve zeigt.

Die Fig. 1a und 1aa zeigen einen ersten Betriebszustand der Vorrichtung gemäß der ersten Ausführung während der Fokussierung zu einem Zeitpunkt, in dem noch keine Probe in die Trägerflüssigkeit injiziert ist, so dass die Probeninjektionseinrichtung 16 vom ersten Flüssigkeitspfad 6 abgetrennt ist. Deshalb befindet sich das Schaltmittel 14 in der ersten Schaltstellung. Ferner lässt Fig. 1 a erkennen, dass sich das Schaltmittel 30 ebenfalls in seinem ersten Schaltzustand befindet; dies ist solange der Fall, wie die Fokussierung andauert. Somit wird in dem in Fig. 1a gezeigten Betriebszustand, der zur Äquibrillierung des empfindlichen Flussgleichgewichtes dient, reine Trägerflüssigkeit, welche also noch keine Probe enthält, in Richtung der Pfeile A und B entgegengesetzt zueinander (Fig. 1aa) durch die beiden Anschlüsse 22, 24 an beiden Enden 20a, 20b der Hohlfaser 20 in deren Hohlraum gepumpt. Dort entstehen dann zwei entgegengesetzt zueinander gerichtete Strömungsfronten, die innerhalb des Hohlraums der Hohlfaser 20 an einer bestimmten Stelle aufeinandertreffen, welche den Relaxationspunkt R bildet. Bei den in Fig. 1aa gezeigten durchgezogenen Flusslinien handelt es sich um die longitudinalen Flusslinien, welche sich am Relaxationspunkt R treffen. Anschließend tritt die durch die beiden Anschlüsse 22, 24 in die Hohlfaser 20 gespeiste Trägerflüssigkeit durch die poröse Wandung 20c der Hohlfaser 20 aus dieser in den vom außen liegenden Rohr 26 begrenzten Zwischenraum 38 aus und wird in Richtung des Pfeils C (Fig. 1aa) über den dritten Flüssigkeitspfad 40 abgeleitet. Dieser Querfluss oder Crossflow, der in Fig. 1aa dünn gestrichelt gezeigt ist, nährt sich vollständig aus dem Kanalfluss und tritt an jedem Punkt senkrecht zur Längsachse der Hohlfaser 20 durch deren als Membran ausgebildete Wandung 20c aus. In dem durch den Zwischenraum 38 gebildeten jenseitigen Volumen vereinigen sich die Teilflüsse des Querflusses und werden, wie bereits erwähnt, durch den dritten Flüssigkeitspfad 40 abgeleitet. An dem Relaxationspunkt R, wo sich die beiden entgegengesetzt zueinander gerichteten Strömungsfronten treffen, entsteht eine sog. neutrale Zone, in der der axiale Fluss, also der Fluss in Längsrichtung der Hohlfaser 20, null ist, sich jedoch ein Querfluss in Richtung der porösen Wandung der Hohlfaser 20 ausbildet. Da die Hohlfaser 20 im Querschnitt im Wesentlichen kreisförmig ist und ihre Wandung 20c (Fig. 1 aa) im Wesentlichen über den gesamten Umfang porös ist, bildet sich bei Verwendung einer Hohlfaser als Kanal ein im Wesentlichen aufgefächerter radialer Querfluss. Diese neutrale Zone wird während der nachfolgenden Elution als Startpunkt für die Probe genutzt.

Durch Umschalten des Schaltmittels 14 in die zweite Schaltstellung gemäß Fig. 1b wird die Vorrichtung vom ersten Betriebszustand in einen zweiten Betriebszustand verbracht, in dem die Probeninjektionseinrichtung 16 in den ersten Flüssigkeitspfad 6 zugeschaltet ist und Proben, die in ihr gespeichert sind, in die durch den ersten Flüssigkeitspfad 6 fließende Trägerflüssigkeit gibt. Ergänzend wird hierzu auch noch auf die Fig. 1 ba, 1 bb und 1 bc verwiesen. Die Trägerflüssigkeit transportiert die Probe von der Probeninjektionseinrichtung 16 durch den stromabwärts gelegenen Abschnitt des ersten Flüssigkeitspfades 6 und den ersten Anschluss 22 in die Hohlfaser 20, bis sie im Hohlraum der Hohlfaser 20 den Relaxationspunkt R und somit die neutrale Zone erreicht. Die Position des Relaxationspunktes R (Fig. 1ba) bzw. der neutralen Zone wird von dem Verhältnis zwischen den Fließgeschwindigkeiten der Trägerflüssigkeit durch den ersten Flüssigkeitspfad 6 und den ersten Anschluss 22 einerseits und durch den zweiten Flüssigkeitspfad 28 und den zweiten Anschluss 24 andererseits bestimmt. Somit bildet das Aufteilungsverhältnis der von der Pumpe 2 insgesamt geförderten Durchflussmenge der Trägerflüssigkeit auf den ersten Flüssigkeitspfad 6 und auf den zweiten Flüssigkeitspfad 28 eine zuverlässige Größe, aus der die relative Position des Relaxationspunktes bzw. der neutralen Zone ermittelt werden kann. Bei bekannter Länge des (bei der ersten Ausführung gemäß den Fig. 1a bis 1 d von der Hohlfaser 20 gebildeten) Kanals (Entfernung zwischen dem ersten Anschluss und dem zweiten Anschluss) kann auch die Weglänge, die die Probenbestandteile während der nachfolgenden Elution bis zum zweiten Anschluss im Kanal zurücklegen, und somit auch der absolute Ort des Relaxationspunktes bzw. der neutralen Zone ermittelt werden.

Bei fest vorgegebener bzw. fest eingestellter Fördermenge der Pumpe 2 kann das Aufteilungsverhältnis durch Einstellung bzw. Regelung der Fließgeschwindigkeit bzw. Durchflussmenge des durch den ersten Flüssigkeitspfad 6 geförderten Anteils der Trägerflüssigkeit entsprechend auf einen gewünschten Wert eingestellt bzw. geregelt werden. Hierzu dienen die im ersten Flüssigkeitspfad 6 vorgesehenen und zuvor beschriebenen Komponenten 8 und 12. Somit hängt das Verhältnis der durch die Anschlüsse 22, 24 entgegengesetzt in die Hohlfaser 20 gepumpten Volumenströme zueinander davon ab, wie viel Trägerflüssigkeit vom Verteiler 4 in den ersten Flüssigkeitspfad 6 abgezweigt wird.

Dies lässt sich an folgendem Beispiel verdeutlichen: Die Pumpe 2 hat eine Förderleistung von 4ml/min. Diese Förderleistung ist konstant. Die Summe der Durchflussmenge durch den ersten Flüssigkeitspfad 6 und der Durchflussmengen durch den zweiten Flüssigkeitspfad 28 wird bestimmt durch die Durchflussmenge durch den dritten Flüssigkeitspfad 40. Wie zuvor beschrieben, wird die Durchflussmenge durch den dritten Flüssigkeitspfad 40 eingestellt bzw. geregelt durch das Magnetventil 46 in Kooperation mit der Durchflussmesseinrichtung 44. Ist das Magnetventil 46 so eingestellt, dass durch den dritten Flüssigkeitspfad 40 eine geringere Durchflussmenge abgeführt wird, als die Pumpe 2 an Fördermenge zur Verfügung stellt, hat dies automatisch zur Folge, dass der überschüssige Anteil durch die Verbindungsleitung 34 zum Sensor 36 geleitet wird. Ist beispielsweise durch das Magnetventil 46 die Durchflussmenge im dritten Flüssigkeitspfad 40 auf 3ml/min eingestellt, wird von der von der Pumpe 2 zur Verfügung gestellten Fördermenge von insgesamt 4ml/min ein Anteil der Trägerflüssigkeit mit 1ml/min zum Sensor 36 gefördert, um diesen zu spülen. Somit verbleibt im vorliegenden Beispiel eine Fördermenge von 3ml/min insgesamt für den ersten Flüssigkeitspfad 6 und den zweiten Flüssigkeitspfad 28. Die Fließgeschwindigkeit bzw. Förder- oder Durchflussmenge des durch den ersten Flüssigkeitspfad 6 geleiteten Anteils an Trägerflüssigkeit wird im vorliegenden Beispiel auf 0,3ml/min eingestellt bzw. geregelt, so dass der durch den ersten Flüssigkeitspfad 6 geförderte Anteil der Trägerflüssigkeit mit einer Strömungsgeschwindigkeit von 0,3ml/min durch den ersten Anschluss 22 in die Hohlfaser 20 eintritt. Da im vorliegenden Beispiel von der von der Pumpe 2 insgesamt bereitgestellten Fördermenge von 4ml/min während der Fokussierung 1 ml/min in die Leitung 34 zum Sensor 36 und 0,3 ml/min in den ersten Flüssigkeitspfad 6 abgezweigt werden, bleiben noch 2,7ml/min für den zweiten Flüssigkeitspfad 28 übrig, so dass der durch den zweiten Flüssigkeitspfad 28 geleitete Anteil der Trägerflüssigkeit mit einer Strömungsgeschwindigkeit von 2,7ml/min durch den zweiten Anschluss 24 in die Hohlfaser 20 eintritt. Somit beträgt das Aufteilungsverhältnis 0,3:2,7 = 1:9, so dass der Relaxationspunkt bzw. die neutrale Zone an einer Stelle gebildet wird, die in einer Distanz von 10% der gesamten Länge des von der Hohlfaser 20 gebildeten Kanals vom ersten Anschluss 22 liegt. Beträgt im vorliegenden Beispiel die Länge des Kanals zwischen dem ersten Anschluss 22 und dem zweiten Anschluss 24 z.B. 20 cm, so ist davon auszugehen, dass sich die Position der neutralen Zone in einem Abstand von 2 cm vom ersten Anschluss 22 bzw. in einem Abstand von 18 cm vom zweiten Anschluss 24 befindet.

Abgeleitet wird die Trägerflüssigkeit aus der Hohlfaser 20 vollständig über den Zwischenraum 38 in den dritten Flüssigkeitspfad 40. Dabei beträgt die Strömungsgeschwindigkeit der abgeleiteten Trägerflüssigkeit im dritten Flüssigkeitspfad 40 3ml/min entsprechend der Summe der durch die beiden Anschlüsse 22, 24 in die Hohlfaser 20 eintretenden Strömungsgeschwindigkeiten.

Wie insbesondere in Fig. 1ba schematisch zu erkennen ist, erzeugt der Querfluss das für die Methode essentielle, nach außen in Richtung der Wandung 20c der Hohlfaser 20 wirkende Kraftfeld. Die gleichzeitige Vorwärtsbewegung durch den Kanalfluss gemäß den durchgezogenen Flusslinien in Richtung der Pfeile A und B befördert die Teilchen P in radialer Richtung weg von der Mitte in Richtung der für sie undurchlässigen, jedoch für die Flüssigkeit durchlässigen Wandung 20c.

Einmal angekommen am Relaxationspunkt R in der neutralen Zone, die auch Fokuszone genannt wird, können die Teilchen diese Zone nicht mehr selbständig durch Diffusion verlassen, da ihnen der Weg nach vorn und nach hinten durch Anströmung mit weiterer Trägerflüssigkeit von vorn und von hinten gemäß den entgegengesetzt zueinander gerichteten Pfeilen A und B im wesentlichen verwehrt wird. Dieser Zustand ist in Fig. 1 bb skizziert. Ferner können die dort schematisch gezeigten Teilchen P aufgrund der Porengröße der membranartigen Wandung 20c auch nicht aus der Hohlfaser 20 in das durch den Zwischenraum 38 gebildete benachbarte Crossflow-Volumen gelangen. Jedes Teilchen P unterliegt somit einem Kräftegleichgewicht zwischen antreibender Kraft aufgrund Diffusion in Richtung der Mittelachse der Hohlfaser 20 und dem radial nach außen wirkenden Querfluss bzw. Crossflow, während sich die Kräfte durch die Flüsse von vorn und von hinten in Richtung gemäß den Pfeilen A und B über die Breite der neutralen Zone am Relaxationspunkt R kompensieren.

Die Entmischung der Teilchen bei gleichzeitiger Aufkonzentration beruht darauf, dass sich die Teilchen mit kleinem Durchmesser durch Diffusion schneller fortbewegen als die vergleichsweise größeren Teilchen. Wie hierzu Fig. 1bc schematisch erkennen lässt, konzentrieren sich dadurch die kleineren Teilchen P₁ in einem größeren mittleren Abstand zur Wandung 20c auf, während die größeren Teilchen P₂ eine mittlere Position in der Nähe zur Wandung 20c und somit in einem geringeren mittleren Abstand zu dieser einnehmen. Somit geht die anfänglich unorientierte, anisotrope Verteilung der Teilchen P gemäß Fig. 1bb während der Fokussierung in eine lokale, isotrope Ordnung gemäß Fig. 1 bc über.

Nachdem die Probe von der Probeninjektionseinrichtung 16 zum Relaxationspunkt bzw. in die neutrale Zone innerhalb der Hohlfaser 20 gelangt ist - die hierfür benötigte Zeit kann auch als Injektionsintervall bezeichnet werden - und sich die Probenbestandteile entsprechend voneinander getrennt und in der Trägerflüssigkeit aufgestellt haben und somit die Relaxation abgeschlossen ist, wird vom zweiten Betriebszustand in einen dritten Betriebszustand und somit von der Fokussierung in die Elution gewechselt. Dies findet durch Umschalten des Schaltmittels 30 in die zweite Schaltstellung statt, wie ein Vergleich der Fig. 1a und 1b, die den Betriebszustand der Vorrichtung während der Fokussierung zeigen, mit den Fig. 1c und 1d erkennen lässt. Während in dem in Fig. 1c gezeigten dritten Betriebszustand die Probeninjektionseinrichtung 16 noch zugeschaltet ist, zeigt Fig. 1d einen nachfolgenden vierten Betriebszustand, in dem die Probeninjektionseinrichung 16 wieder abgeschaltet ist, nachdem das Schaltmittel 14 wieder in den ersten Schaltzustand verbracht worden ist.

Wie die Fig. 1c und 1d ferner erkennen lassen, versorgt während der Elution die Pumpe 2 nur noch den ersten Flüssigkeitspfad 6 mit Trägerflüssigkeit. Wie hierzu insbesondere die Fig. 1da, 1db und 1dc erkennen lassen, wird während der Elution die Hohlfaser 20 somit nur noch in einer Richtung gemäß Pfeil A mit Trägerflüssigkeit durchströmt. Dadurch, dass die Flüssigkeitsmoleküle im Bereich der Wandung 20c einer erhöhten Reibung ausgesetzt sind, ist die Flussgeschwindigkeit über den Querschnitt der Hohlfaser 20 nicht konstant, sondern parabelförmig, was in den Fig. 1da und 1db durch das Bezugszeichen "X" angedeutet ist. Dies bedeutet für die diffusen Schichten innerhalb der Hohlfaser 20, dass sie von Strömungslinien mit unterschiedlichen Fließgeschwindigkeiten angeströmt werden. Die kleineren, weiter weg von der Wandung 20c befindlichen Teilchen P₁ werden dabei schneller fortbewegt als die größeren benachbart zur Wandung 20c befindlichen Teilchen P₂, wie ein Vergleich der Fig. 1db mit der Fig. 1da erkennen lässt. Auf dem Weg vom Relaxationspunkt R in Richtung Auslass 24 vergrößert sich auf diese Weise sukzessive der Abstand zwischen den kleineren Teilchen P₁ und den größeren Teilchen P₂ in Längsrichtung der Hohlfaser 20 bzw. in Strömungsrichtung gemäß Pfeil A, wie wiederum ein Vergleich der Fig. 1dc mit der Fig. 1db erkennen lässt. Der in den Fig. 1 da, 1 db und 1dc nicht eingezeichnete Querfluss bleibt während der gesamten Zeit eingeschaltet und erhält die während der Fokussierung ausgebildete schichtartige Orientierung durch das auf die Teilchen P₁, P₂ wirkende Kräftegleichgewicht.

Gegen Ende der Elution und somit gegen Ende des vierten Betriebszustandes sind die Teilchen P₁ und P₂ nun möglichst weit voneinander getrennt. Sie erreichen über den zweiten Auslass 24, den zweiten Flüssigkeitspfad 28, das zweite Schaltmittel 30 und über die Verbindungsleitung 34 den Detektor bzw. Sensor 36. Anders als bei der Säulen-Chromatographie erreichen die kleineren Teilchen P₁ den Sensor 36 vor den größeren Teilchen P₂ und erzeugen dort ein entsprechendes Signal, wie Fig. 1dd in Vergleich mit Fig. 1db erkennen lässt.

Nach einem Durchlauf wird die Hohlfaser 20 kurz mit reinem Laufmittel bzw. reiner Trägerflüssigkeit gespült, bevor eine neue Trennung beginnen kann.

An dieser Stelle sei noch der guten Vollständigkeit halber angemerkt, dass die poröse Wandung der Hohlfaser 20 zwar für die Trägerflüssigkeit durchlässig ist, nicht jedoch für die Probenbestandteile. Zu weiteren Einzelheiten in diesem Zusammenhang und insbesondere zu dem Phänomen der Querkraft wird zur Vermeidung von Wiederholungen auf die zuvor, insbesondere in der Beschreibungseinleitung, getroffenen Ausführungen verwiesen.

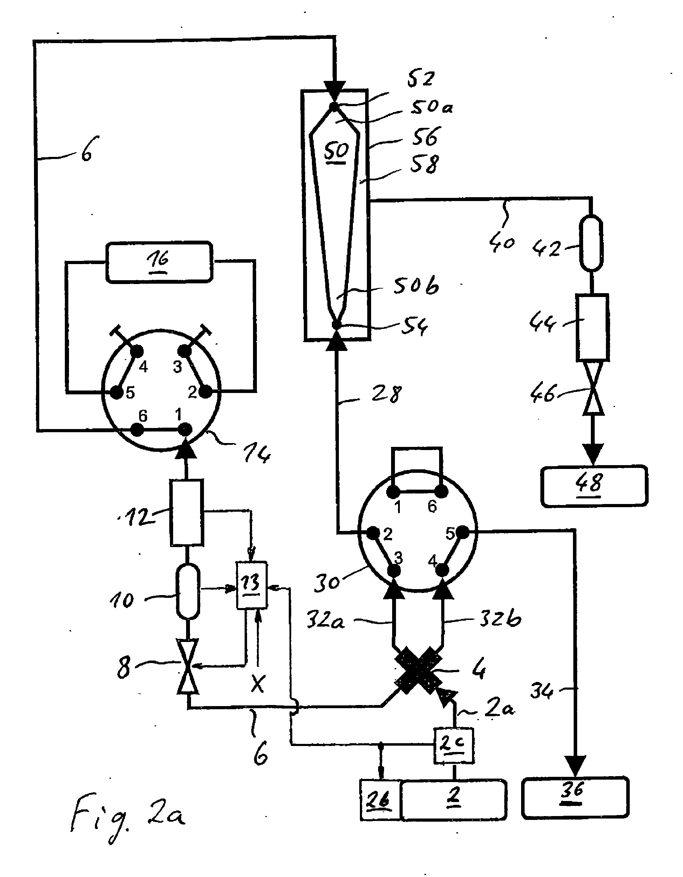

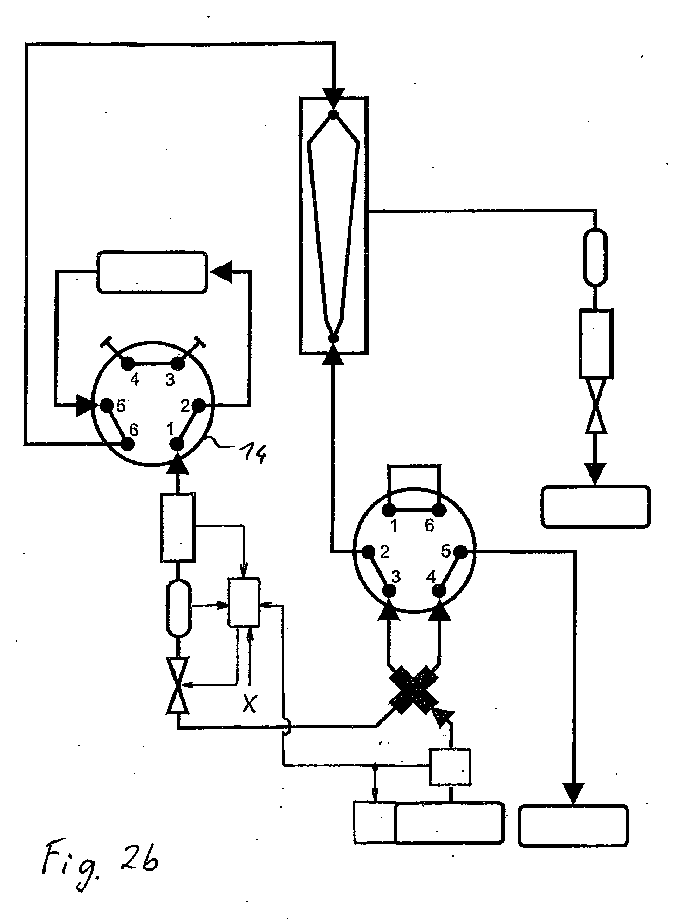

In den Figuren 2a bis 2d ist eine zweite Ausführung gezeigt, die sich von der Ausführung gemäß den Figuren 1a bis 1d lediglich dadurch unterscheidet, dass anstelle einer Hohlfaser als Trennkanal ein Flachkanal 50 verwendet wird. Dabei sind in Fig. 2a alle wesentlichen Komponenten mit Bezugszeichen gekennzeichnet, während in den Figuren 2b bis 2d, welche die zweite Ausführung in unterschiedlichen Betriebszuständen zeigen, der besseren Übersichtlichkeit halber nur diejenigen Komponenten mit Bezugszeichen gekennzeichnet sind, welche für die Änderung des Betriebszustandes gegenüber dem jeweils in der vorangegangenen Figur gezeigten Betriebszustand relevant sind.

Der Flachkanal 50, bei dem es sich um eine an sich bekannte Konstruktion handelt, weist an seinem ersten Ende 50a einen mit dem ersten Flüssigkeitspfad 6 gekoppelten ersten Anschluss 52 und an seinem zweiten Ende 50b einen mit dem zweiten Flüssigkeitspfad 28 gekoppelten zweiten Anschluss 54 auf. Wie in den Figuren 2a bis 2d schematisch angedeutet ist, besteht der Flachkanal 50 aus einem länglichen Hohlkörper und weist im dargestellten Ausführungsbeispiel einen sich in Richtung seiner Längsachse zum zweiten Anschluss 54 hin erstreckenden verjüngenden Verlauf auf. Der Boden des Flachkanals 50 ist für die Probenbestandteile undurchlässig und für die Trägerflüssigkeit durchlässig ausgebildet, so dass der Boden einen permeablen Abschnitt in der Wandung des Flachkanals 50 bildet, was in den Figuren jedoch nicht gezeigt ist. Wie in den Figuren 2a bis 2d ferner schematisch angedeutet ist, sitzt der Flachkanal 50 in einem geschlossenen Gehäuse 56, so dass zwischen der Wandung dieses Gehäuses 56 und dem Flachkanal 50 ein Zwischenraum 58 gebildet wird. In diesem Zwischenraum 58 wird der durch den permeablen Boden abgeleitete Teil der Trägerflüssigkeit aufgefangen. Wie der Zwischenraum 38 bei der ersten Ausführung ist auch der Zwischenraum 58 an den dritten Flüssigkeitspfad 40 angeschlossen.

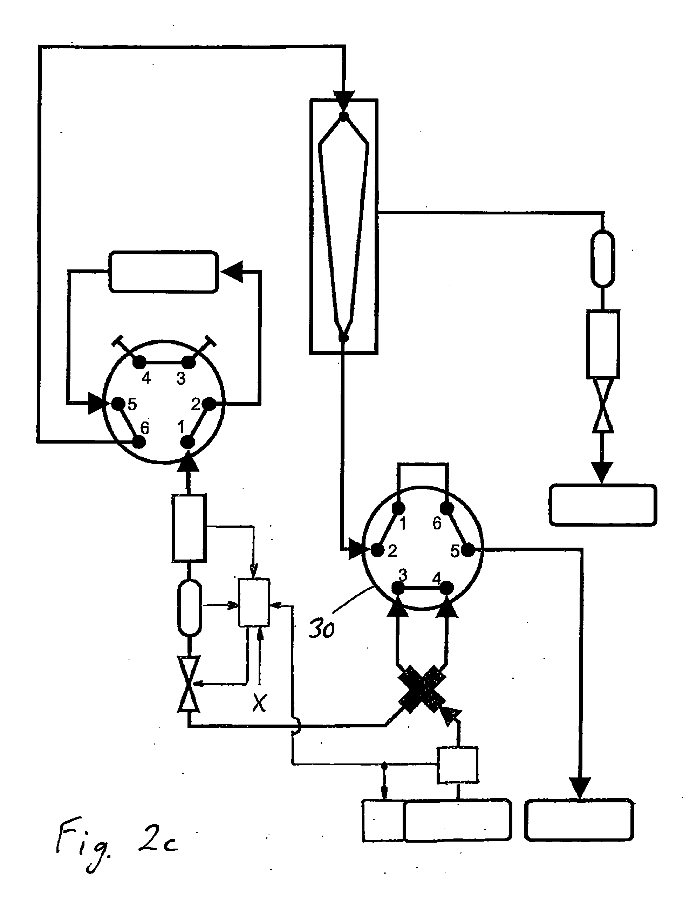

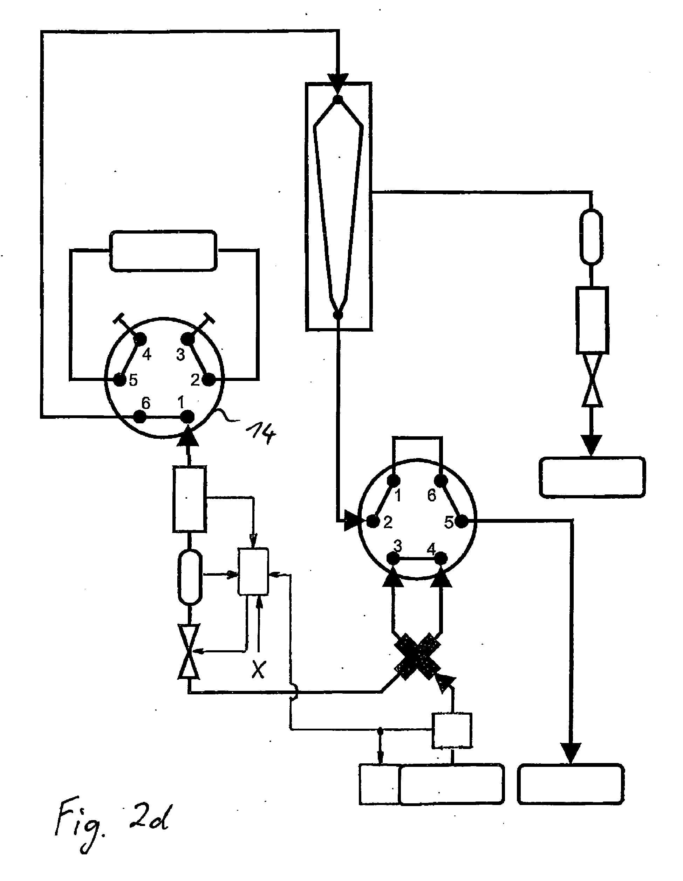

Hinsichtlich der übrigen konstruktiven Einzelheiten und Aspekte stimmt die zweite Ausführung mit der ersten Ausführung überein, so dass diesbezüglich zur Vermeidung von Wiederholungen auf die Beschreibung der ersten Ausführung verwiesen wird. Gleiches gilt auch sinngemäß im Hinblick auf die Fig. 1aa bis 1dd und die hierzu zuvor gegebene Beschreibung des Verfahrens. Wie in den Figuren 1a bis 1d ist auch in den Figuren 2a und 2b der Betriebszustand der Vorrichtung gemäß der zweiten Ausführung während der Fokussierung mit abgeschalteter Probeninjektionseinrichtung 16 (Fig. 2a) und zugeschalteter Probeninjektionseinrichtung 16 (Fig. 2b) und in den Figuren 2c und 2d der Betriebszustand der Vorrichtung während der Elution mit zugeschalteter Probeninjektionseinrichtung 16 (Fig. 2c) und abgeschalteter Probeninjektionseinrichtung (Fig. 2d) dargestellt. An dieser Stelle sei noch angemerkt, dass die Anschlüsse 22, 24 der Hohlfaser 20 in der ersten Ausführung und die Anschlüsse 52, 54 des Flachkanals 50 in der zweiten Ausführung lösbar gestaltet sein können, um die Hohlfaser 20 bzw. den Flachkanal 50 bei Bedarf leicht auswechseln zu können.

Alternativ können in einer und derselben Vorrichtung aber auch mindestens zwei Kanäle unterschiedlicher Ausführungen vorhanden sein, von denen für die Durchführung der Feldflussfraktionierung ein Kanal zugeschaltet und somit aktiviert wird. Hierzu muss ein weiteres Schaltmittel vorgesehen sein, wodurch ein Auswechseln des Kanals durch Ab- und Ankoppeln der Anschlüsse entfällt.

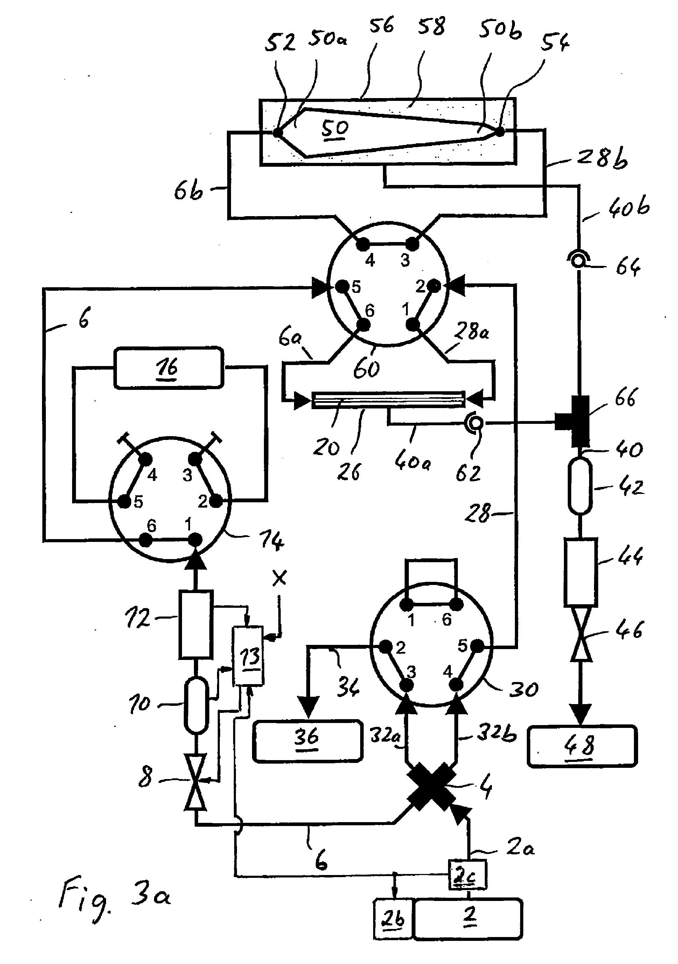

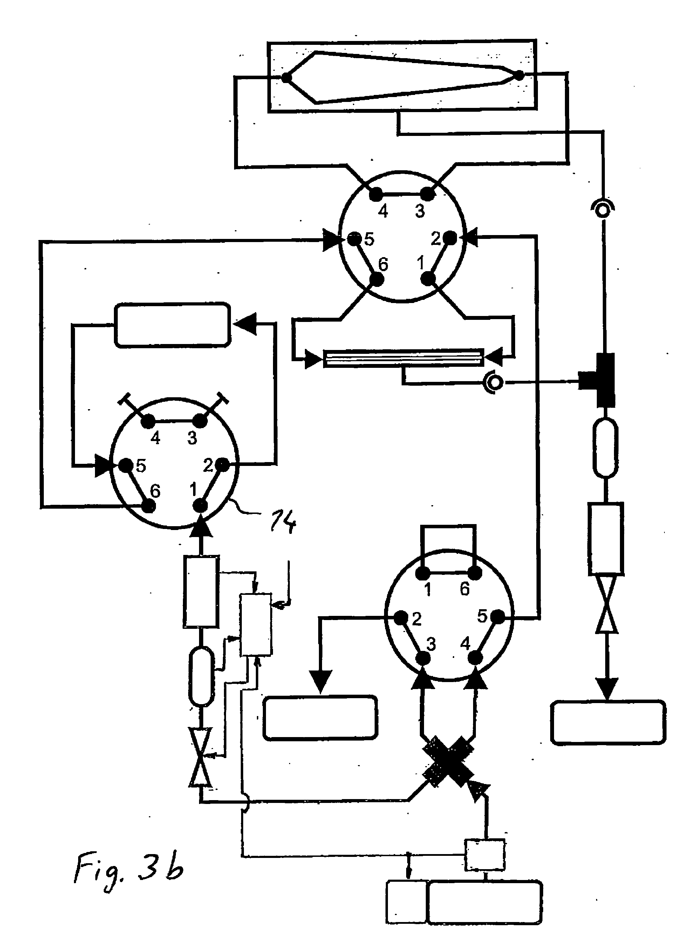

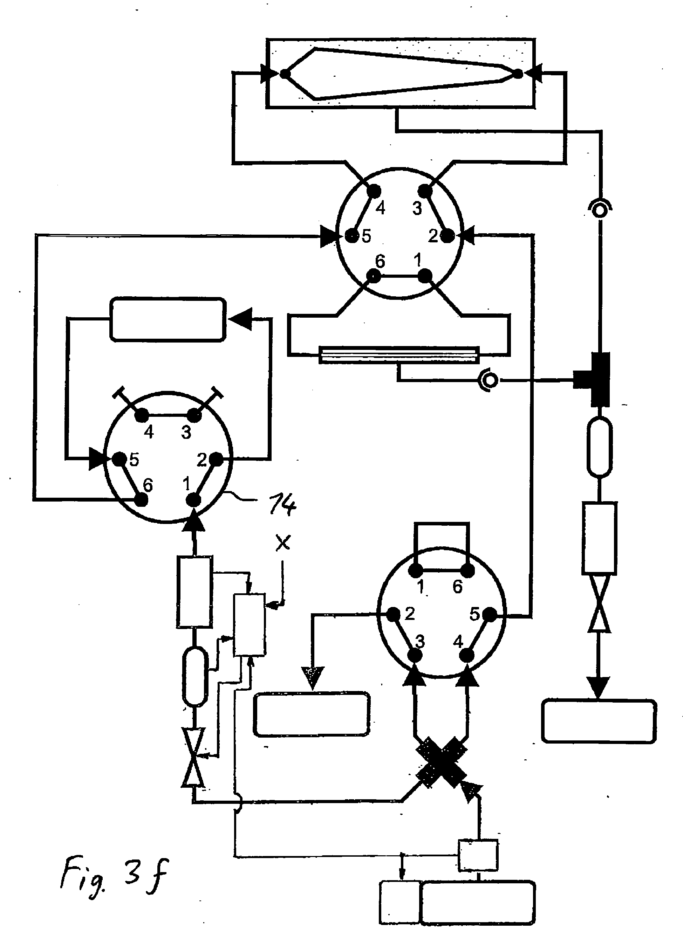

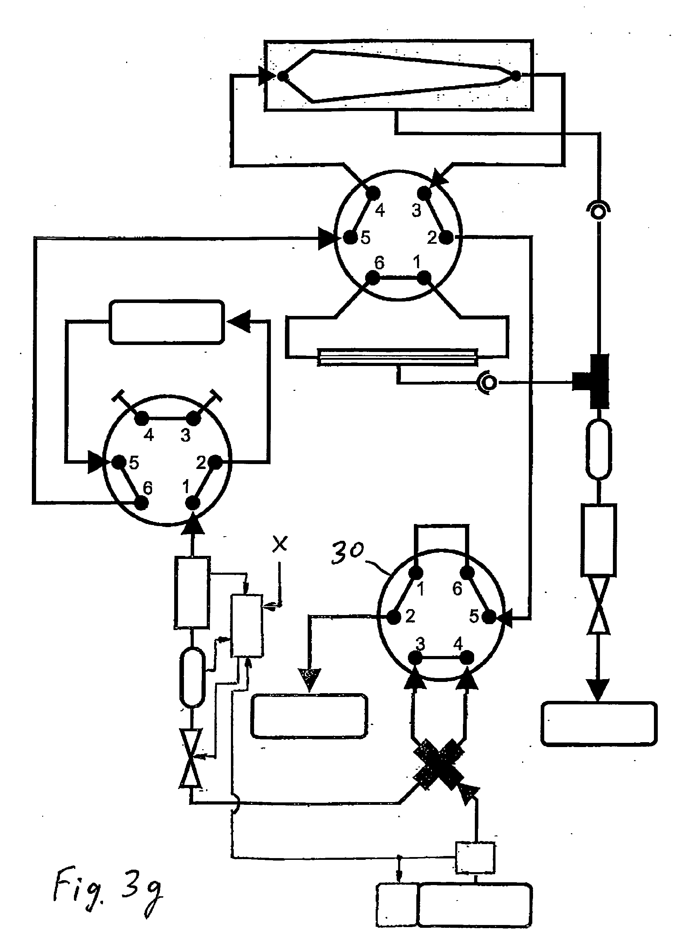

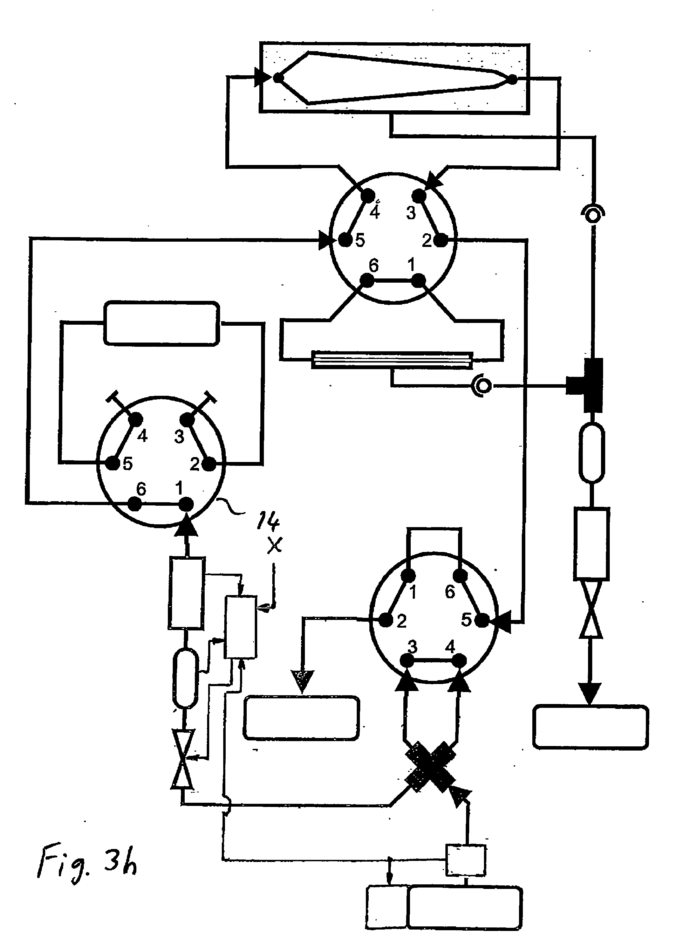

In den Figuren 3a bis 3h ist eine Vorrichtung in einer dritten Ausführung dargestellt, die aus einer Kombination der ersten und zweiten Ausführungen besteht und somit sowohl eine als Kanal zu verwendende Hohlfaser 20 gemäß den Figuren 1a bis 1d als auch einen Flachkanal 50 gemäß den Figuren 2a bis 2d enthält. Dabei sind in Fig. 3a alle wesentlichen Komponenten mit Bezugszeichen gekennzeichnet, während in den Figuren 3b bis 3h, welche die dritte Ausführung in unterschiedlichen Betriebszuständen zeigen, der besseren Übersichtlichkeit halber nur diejenigen Komponenten mit Bezugszeichen gekennzeichnet sind, welche für die Änderung des Betriebszustandes gegenüber dem jeweils in der vorangegangenen Figur gezeigten Betriebszustand relevant sind.

Zur wahlweisen Aktivierung und Deaktivierung der Hohlfaser 20 oder des Flachkanals 50 ist ein weiteres Schaltmittel 60 vorgesehen, wie die Figuren 3a bis 3h schematisch erkennen lassen. Dieses Schaltmittel 60 ist zugleich in den ersten Flüssigkeitspfad 6 und den zweiten Flüssigkeitspfad 28 geschaltet und besitzt zwei Schaltstellungen.

In der in den Figuren 3a bis 3d gezeigten ersten Schaltstellung ist der an den ersten Flüssigkeitspfad 6 angeschlossene Kontakt "5" mit dem Kontakt "6" gekoppelt, an den eine zum ersten Anschluss der Hohlfaser 20 führende Leitung 6a angeschlossen ist. Ferner ist in der ersten Schaltstellung des Schaltmittels 60 der über eine Leitung 28a an den zweiten Anschluss der Hohlfaser 20 angeschlossene Kontakt "1" mit dem Kontakt "2" verbunden, an den der zweite Flüssigkeitspfad 28 angeschlossen ist. Dadurch ist in der ersten Schaltstellung die Hohlfaser 20 zugeschaltet und aktiviert, während der Flachkanal 50 von der übrigen Vorrichtung getrennt und somit abgeschaltet ist, wie die Figuren 3a bis 3d erkennen lassen.

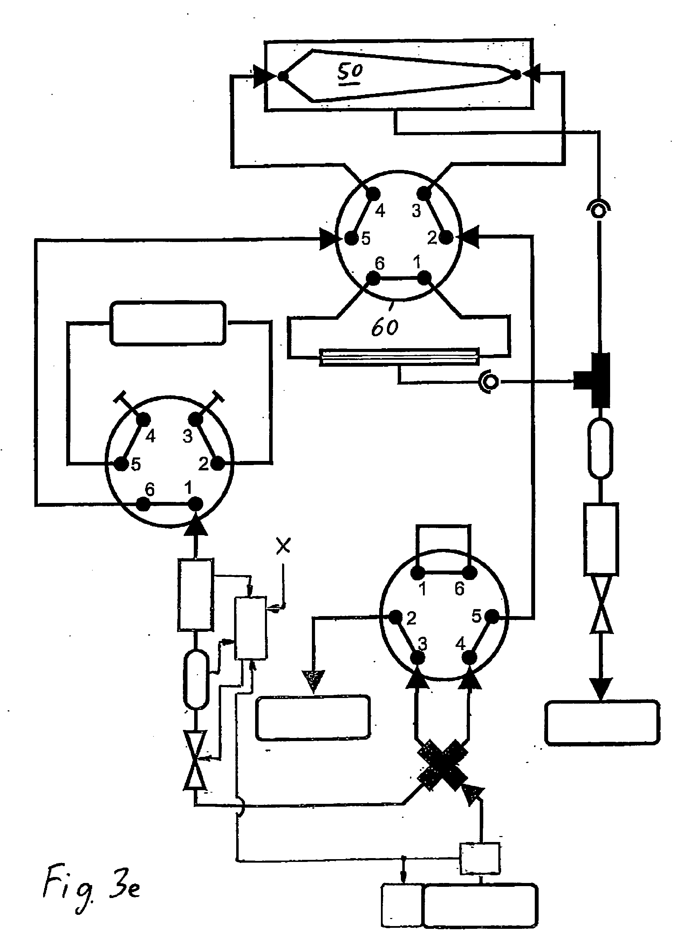

Bei Umschalten des Schaltmittels 60 von der ersten Schaltstellung in die in den Figuren 3e bis 3h gezeigte zweite Schaltstellung wird die Hohlfaser 20 abgeschaltet und somit deaktiviert und stattdessen der Flachkanal 50 zugeschaltet und somit aktiviert. Hierzu wird im Schaltmittel 60 der an den ersten Flüssigkeitspfad 6 angeschlossene Kontakt "5" mit dem Kontakt "4" verbunden, an den eine zum ersten Anschluss 52 des Flachkanals 50 führende Leitung 6b angeschlossen ist. Ebenfalls wird in der zweiten Schaltstellung im Schaltmittel 60 der an den zweiten Flüssigkeitspfad 28 angeschlossene Kontakt "2" mit dem Kontakt "3" verbunden, an den eine mit dem zweiten Anschluss 54 des Flachkanals 50 gekoppelte Leitung 28b angeschlossen ist.

Auch das Schaltmittel 60 der zweiten Ausführung kann bevorzugt als - manuell und/oder motorisch betätigbarer - Drehschalter ausgebildet sein, wie in den Figuren 2a bis 2d schematisch gezeigt ist.

Zur Ableitung von Trägerflüssigkeit aus dem Zwischenraum zwischen der Hohlfaser 20 und dem diese umgebenden Rohr 26 ist eine erste Abflussleitung 40a und zur Ableitung von Trägerflüssigkeit aus dem Zwischenraum 58 zwischen dem Flachkanal 50 und dem Gehäuse 56 eine zweite Abflussleitung 40b vorgesehen. Beide Abflussleitungen 40a, 40b sind über eine Weiche 66 mit dem dritten Flüssigkeitspfad 40 verbunden. Um unerwünschte gegenseitige Einflüsse zu vermeiden, ist in den Abflussleitungen 40a, 40b jeweils ein Rückschlagventil 62 bzw. 64 vorgesehen.

Da hinsichtlich weiterer konstruktiver Einzelheiten und Komponenten die dritte Ausführung mit der ersten Ausführung übereinstimmt und somit für gleiche Komponenten auch die gleichen Bezugszeichen verwendet sind, wird insoweit zur Vermeidung von Wiederholungen auf die vorangegangene Beschreibung der ersten Ausführung verwiesen.

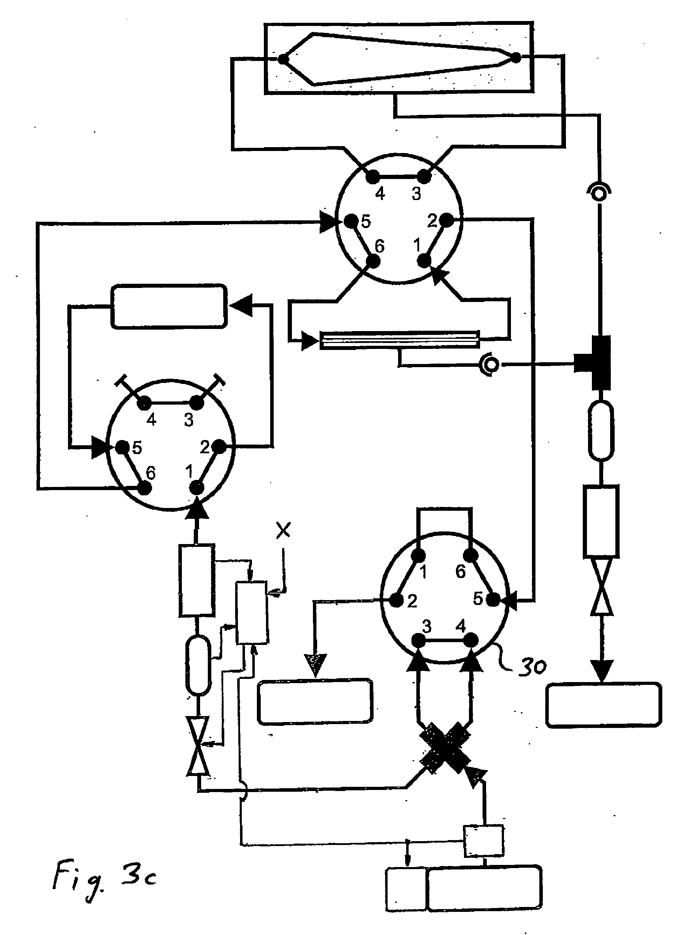

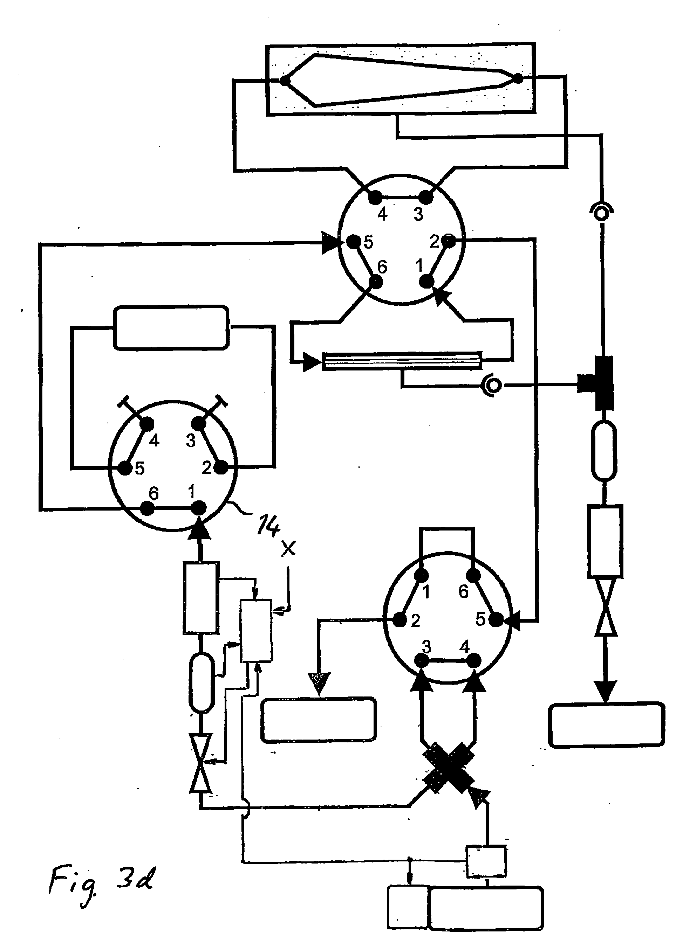

Die Figuren 3a bis 3d zeigen die Verwendung der Vorrichtung gemäß der dritten Ausführung mit der Hohlfaser 20, wobei in den Figuren 3a und 3b der Betriebszustand der Vorrichtung während der Fokussierung mit abgeschalteter Probeninjektionseinrichtung 16 (Fig. 3a) und zugeschalteter Probeninjektionseinrichtung 16 (Fig. 3b) und in den Figuren 3c und 3d der Betriebszustand der Vorrichtung während der Elution mit zugeschalteter Probeninjektionseinrichtung 16 (Fig. 3c) und abgeschalteter Probeninjektionseinrichtung (Fig. 3d) dargestellt ist. Die Figuren 3e bis 3h zeigen in gleicher Reihenfolge die Verwendung der Vorrichtung gemäß der dritten Ausführung mit dem Flachkanal 50, während die Hohlfaser 20 abgeschaltet ist.

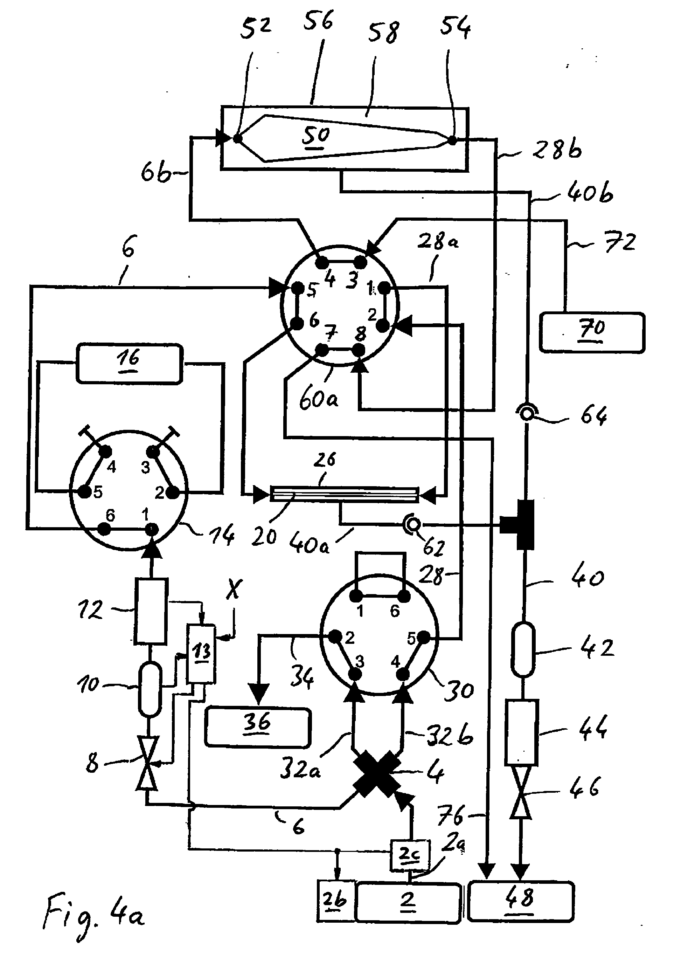

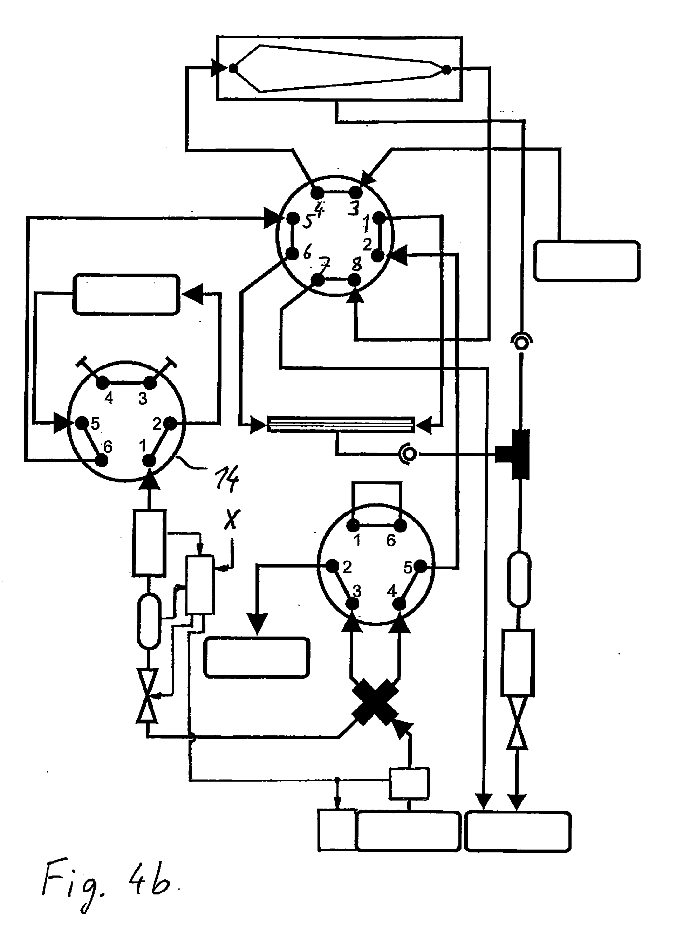

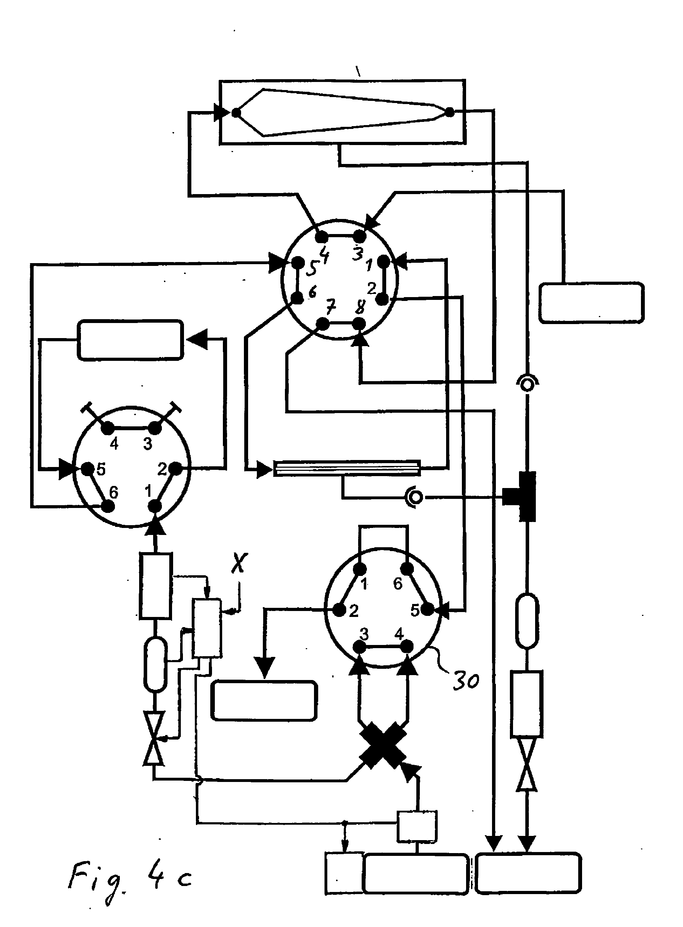

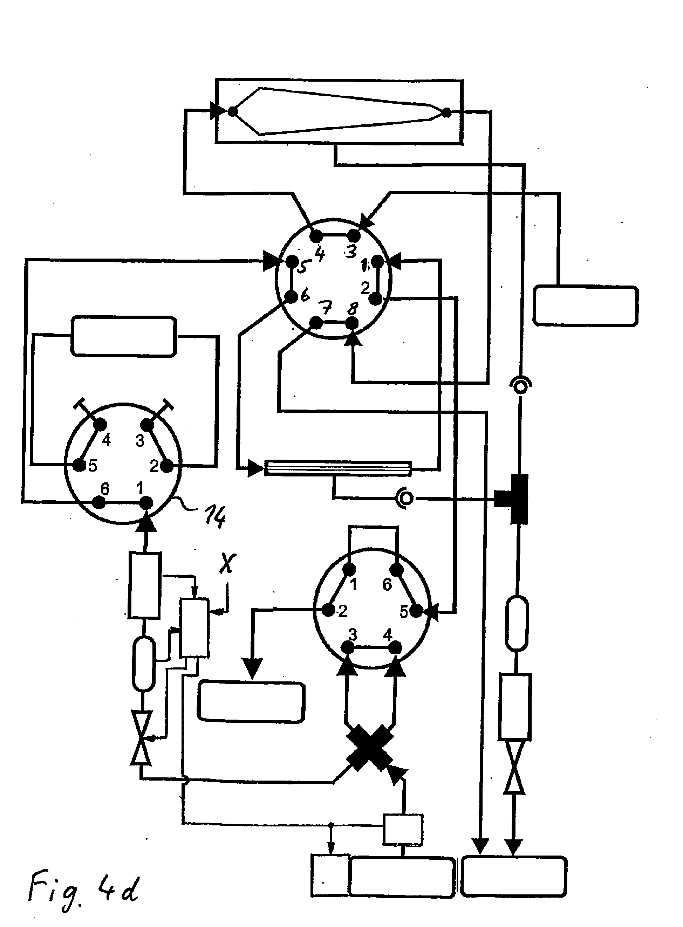

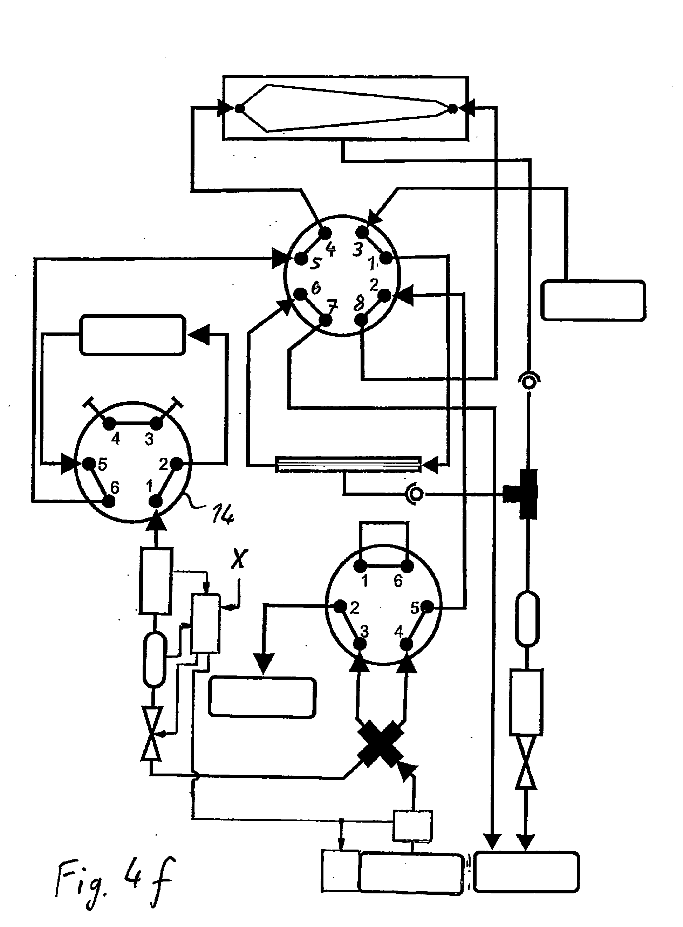

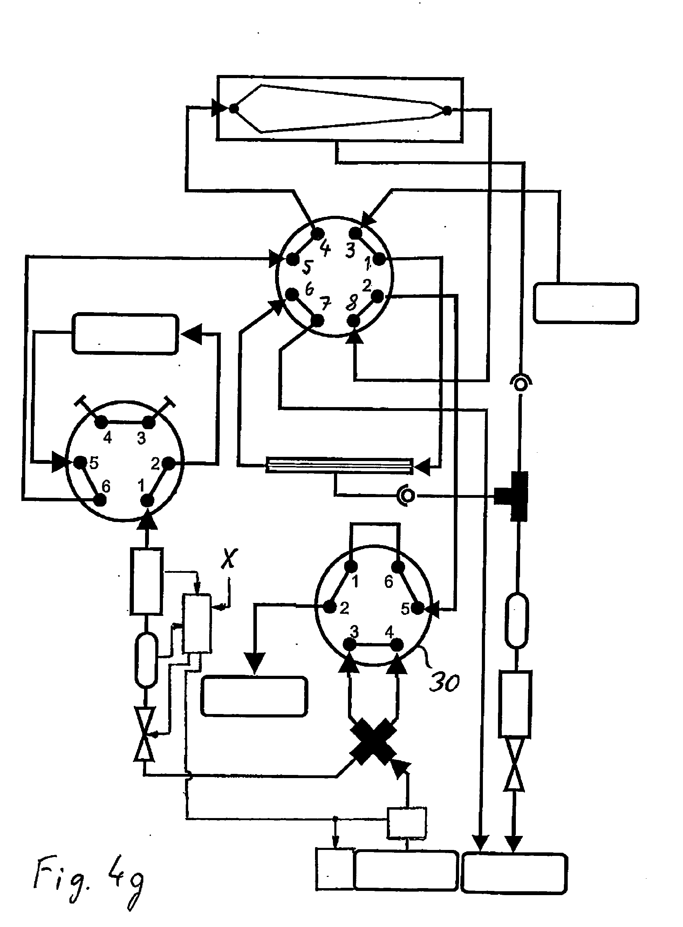

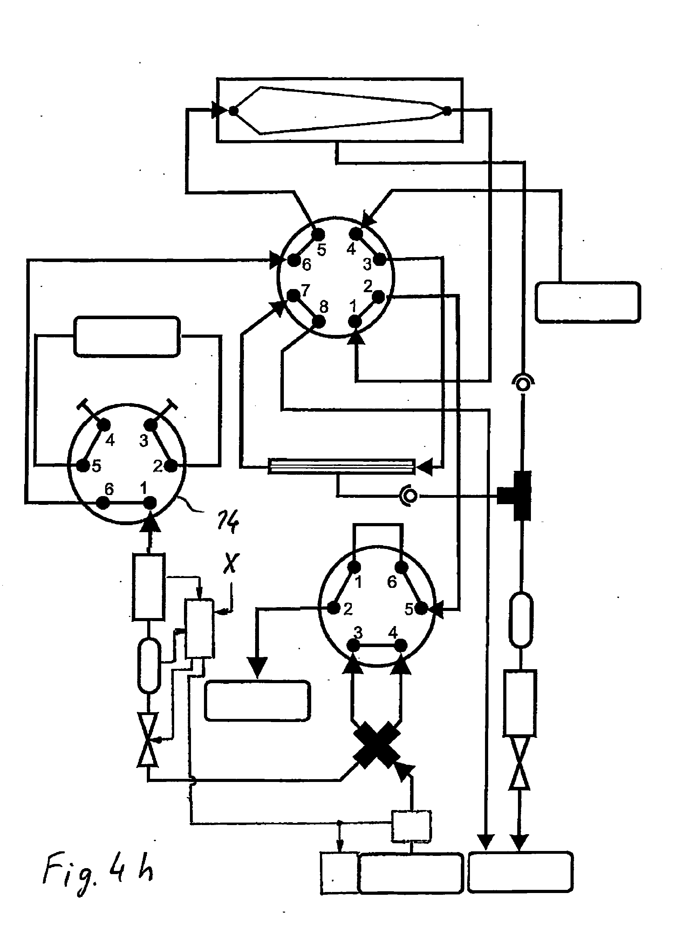

In den Figuren 4a bis 4h ist die Vorrichtung zur Feldflussfraktionierung gemäß einer vierten Ausführung dargestellt, welche die Komponenten der dritten Ausführung gemäß den Figuren 3a bis 3h aufweist, insoweit also der dritten Ausführung entspricht und sich von dieser allerdings dadurch unterscheidet, dass zusätzlich noch eine Spüleinrichtung 70 vorgesehen ist, die über eine Leitung 72 zusätzlich zu der Hohlfaser 20 und dem Flachkanal 50 an ein Schaltmittel 60a angeschlossen ist. Dabei sind in Fig. 4a alle wesentlichen Komponenten mit Bezugszeichen gekennzeichnet, während in den Figuren 4b bis 4h, welche die vierte Ausführung in unterschiedlichen Betriebszuständen zeigen, der besseren Übersichtlichkeit halber nur diejenigen Komponenten mit Bezugszeichen gekennzeichnet sind, welche für die Änderung des Betriebszustandes gegenüber dem jeweils in der vorangegangenen Figur gezeigten Betriebszustand relevant sind.

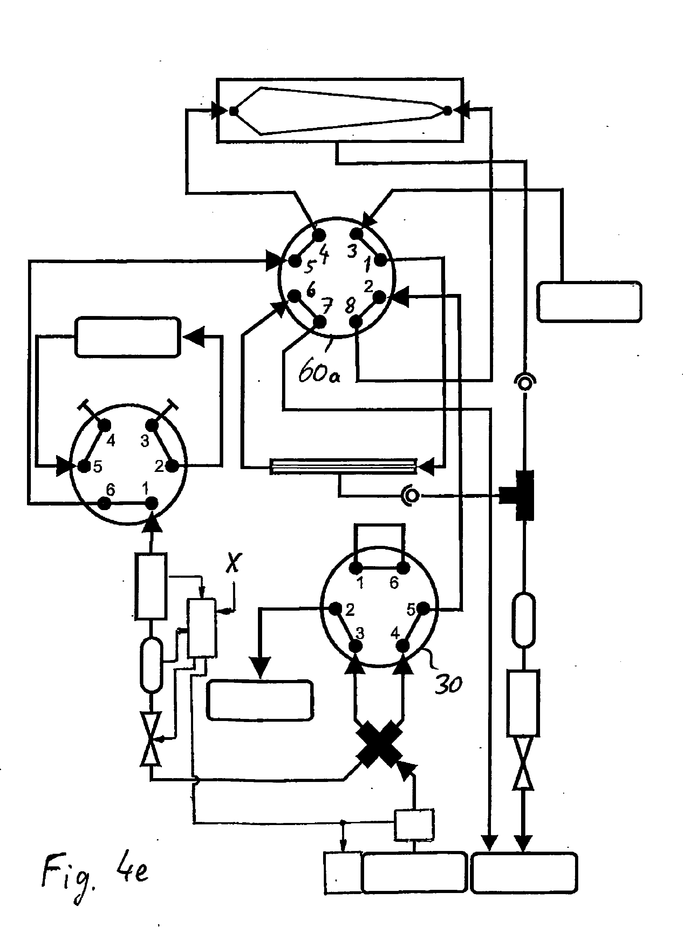

Durch das Schaltmittel 60a, welches im übrigen auch die gleichen Funktionen wie das Schaltmittel 60 der dritten Ausführung aufweist, wird zusätzlich die Spüleinrichtung 70 an den jeweils unbenutzten Kanal 20 bzw. 50 zugeschaltet, um den unbenutzten Kanal, der also abgetrennt und somit für die Durchführung der Feldflussfraktionierung nicht aktiviert ist, entsprechend zu spülen. Ein, bevorzugt ständiges, Spülen verkürzt die Zeit bis zur Einsatz- bzw. Messbereitschaft des entsprechenden Kanals, weil dadurch störende Reste im Kanal nach dem Probenwechsel entfernt werden oder ein Festsetzen von störenden Resten von vornherein verhindert wird. Zu diesen störenden Bestandteilen zählt u.a. auch ein sog. Bakterienrasen, der sich in Abhängigkeit von der Stärke des Flusses besonders leicht an der Innenwandung des Kanals festsetzen kann. Deshalb unterscheidet sich das Schaltmittel 60a vom Schaltmittel 60 der dritten Ausführung durch die Anordnung von vier zusätzlichen Kontakten. Denn die von der Spüleinrichtung 70 kommende Leitung 72 ist an den Kontakt "3" angeschlossen, der in der ersten Schaltstellung gemäß den Figuren 4a bis 4d mit dem Kontakt "4" verbunden ist. Da der Kontakt "4" über die Leitung 6b an den ersten Anschluss 52 des Flachkanals 50 angeschlossen ist, wird Spülflüssigkeit von der Spüleinrichtung 70 durch den - in der ersten Schaltstellung des Schaltmittels 60a von der übrigen Vorrichtung abgetrennten - Flachkanal 50 geleitet, aus dem die Spülflüssigkeit über den zweiten Anschluss 54 und die daran angeschlossene Leitung 28b wieder austritt. Jene Leitung 28b ist an den Kontakt "8" angeschlossen, der in der ersten Schaltstellung im Schaltmittel 60a mit dem Kontakt "7" verbunden ist, an der eine zum Abfallreservoir 48 führende Abflussleitung 76 angeschlossen ist. In der zweiten Schaltstellung des Schaltmittels 60a gemäß den Figuren 4e bis 4h, in der dann der Flachkanal 50 zugeschaltet und die Hohlfaser 20 abgetrennt ist, sind für das Spülen der nun unbenutzten Hohlfaser 20 im Schaltmittel 60a jeweils die Kontakte "6" und "7" sowie "3" und "4" miteinander verbunden, wodurch die Spülflüssigkeit von der Spüleinrichtung 70 durch die Leitung 28a in die Hohlfaser 20 gefördert und aus der Hohlfaser 20 über die Leitung 6a in die Abflussleitung 76 abgeleitet wird.

Auch das Schaltmittel 60a der vierten Ausführung kann bevorzugt als - manuell und/oder motorisch betätigbarer - Drehschalter ausgebildet sein, wie in den Figuren 4a bis 4h schematisch gezeigt ist.

Da hinsichtlich weiterer konstruktiver Details und Komponenten die vierte Ausführung mit der dritten Ausführung übereinstimmt und insoweit für die gleichen Komponenten die gleichen Bezugszeichen verwendet werden, wird auf die vorangegangene Beschreibung der dritten Ausführung entsprechend verwiesen.

Auch hinsichtlich der Darstellung der unterschiedlichen Betriebszustände weisen die Figuren 4a bis 4h die gleiche Reihenfolge und Zuordnung wie die Figuren 3a bis 3h auf.

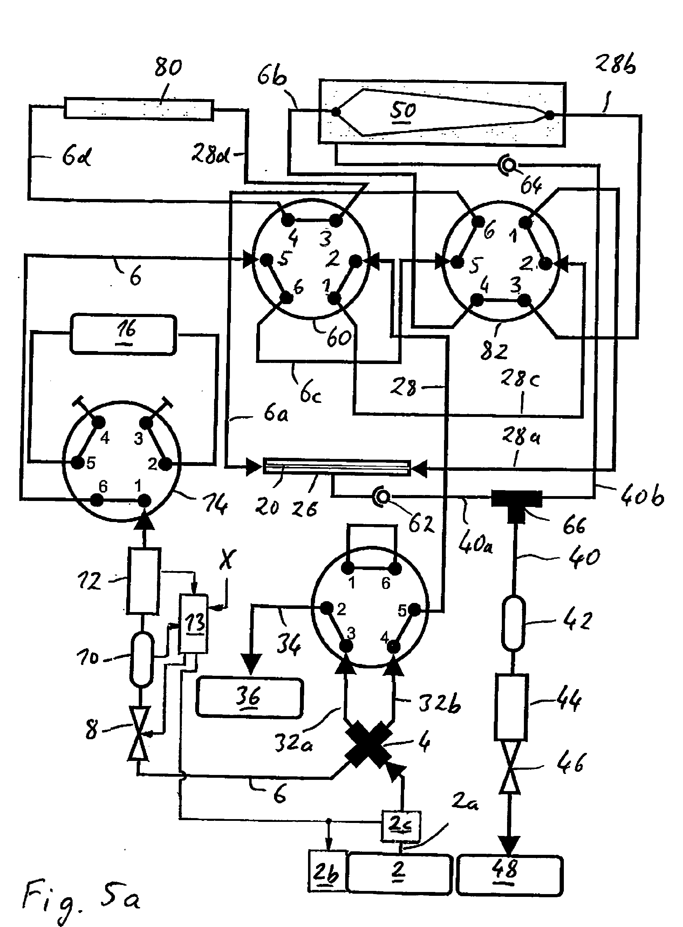

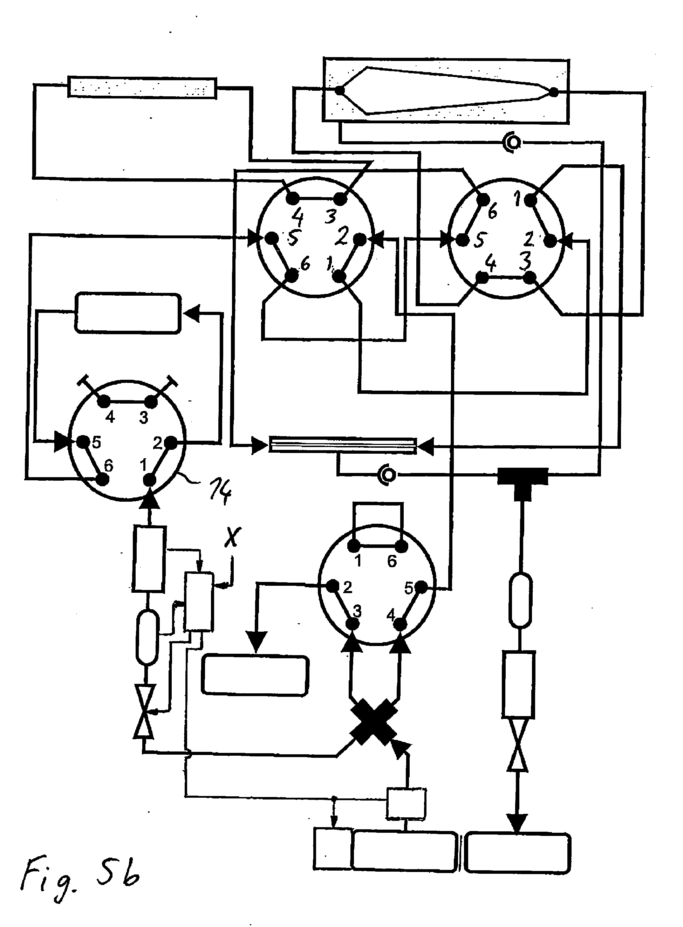

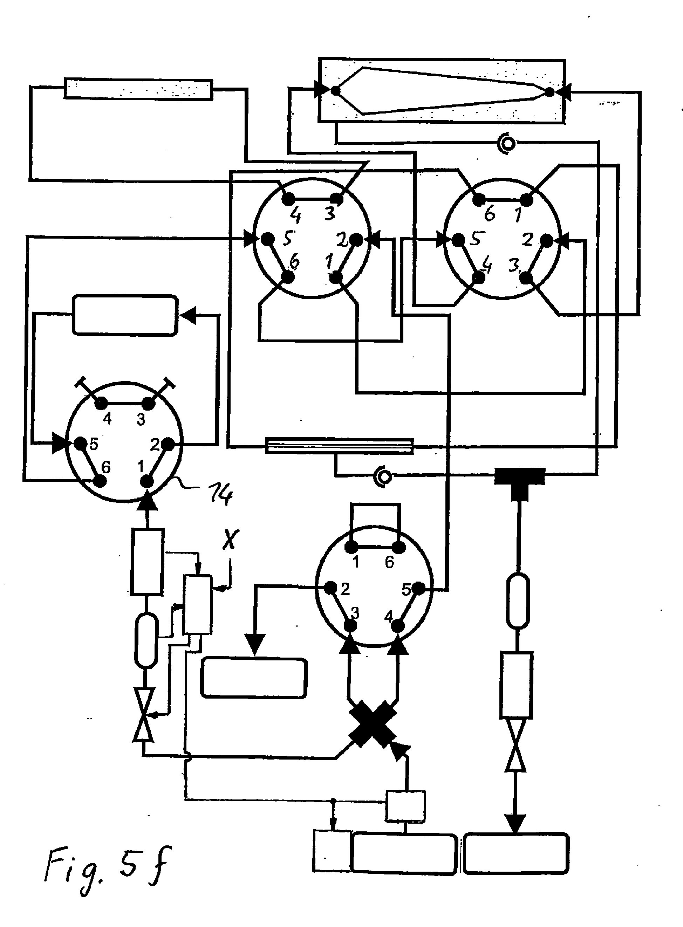

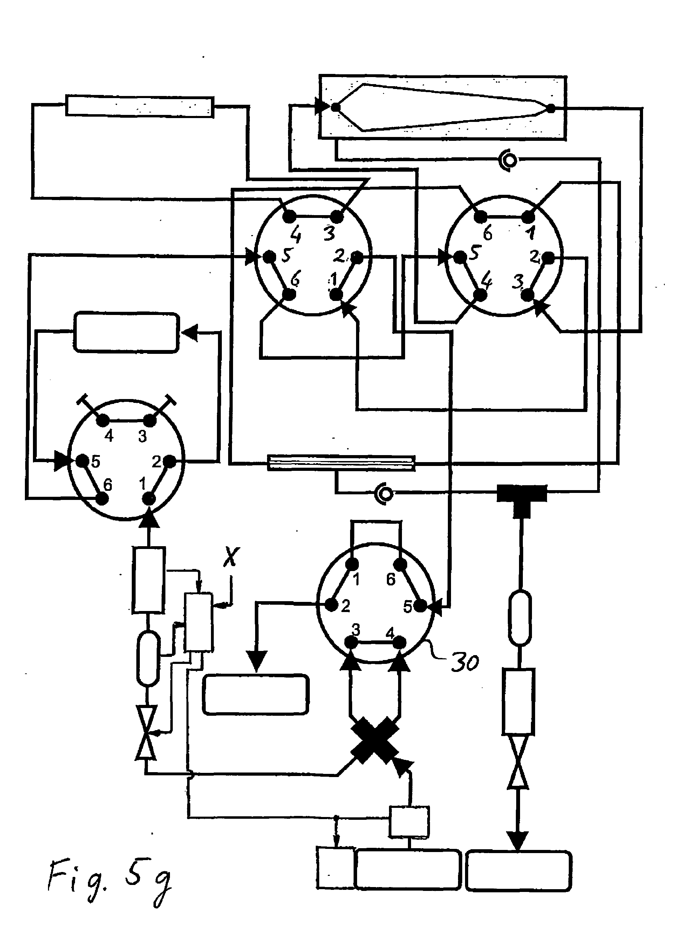

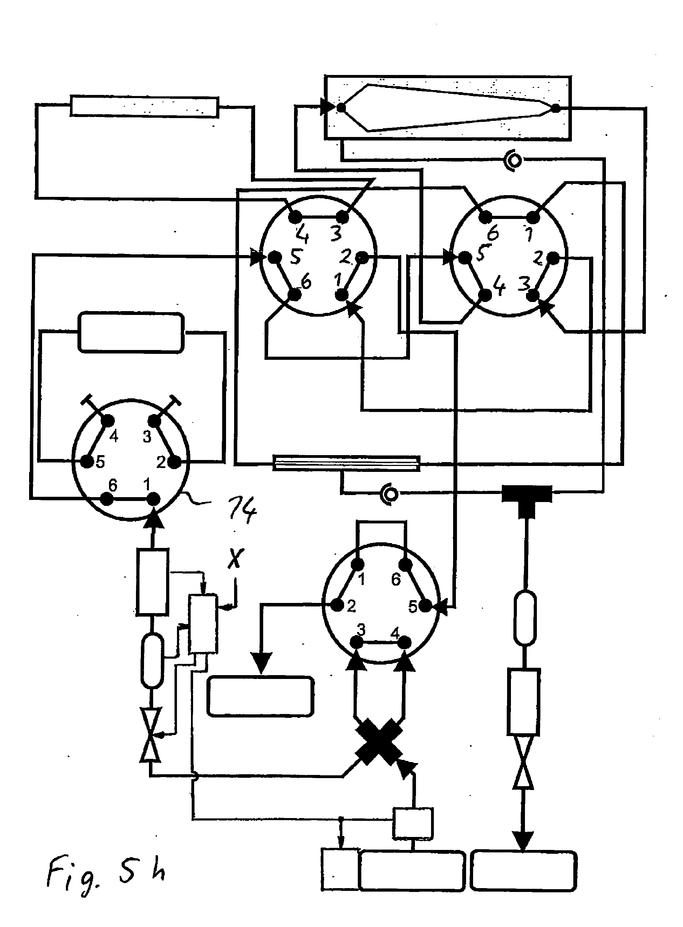

In den Figuren 5a bis 5j ist die Vorrichtung in einer fünften Ausführung dargestellt, die die Komponenten der dritten Ausführung gemäß den Figuren 3a bis 3h aufweist, insoweit also der dritten Ausführung entspricht und sich allerdings von der dritten Ausführung dadurch unterscheidet, dass zusätzlich zu der Hohlfaser 20 und dem Flachkanal 50 noch eine Chromatographie-Säule 80 vorgesehen ist, so dass bei dieser Ausführung zwischen drei Kanalvarianten ausgewählt werden kann. Dabei sind in Fig. 5a alle wesentlichen Komponenten mit Bezugszeichen gekennzeichnet, während in den Figuren 5b bis 5j, welche die fünfte Ausführung in unterschiedlichen Betriebszuständen zeigen, der besseren Übersichtlichkeit halber nur diejenigen Komponenten mit Bezugszeichen gekennzeichnet sind, welche für die Änderung des Betriebszustandes gegenüber dem jeweils in der vorangegangenen Figur gezeigten Betriebszustand relevant sind.

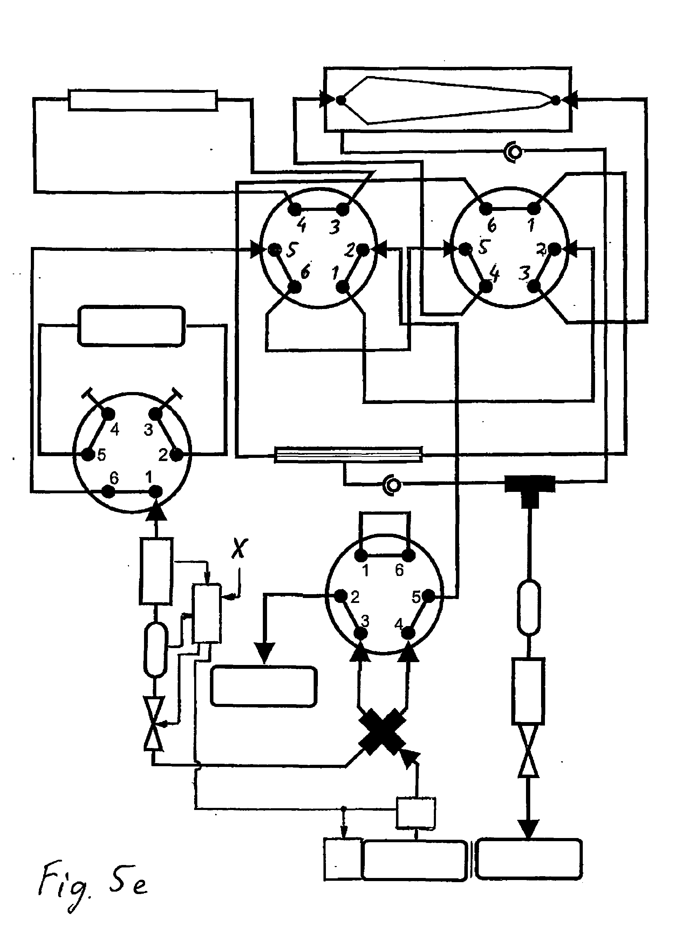

Hierfür ist neben dem bereits in der dritten Ausführung verwendeten Schaltmittel 60 noch ein weiteres Schaltmittel 82 vorgesehen. Beide Schaltmittel 60 und 82 sind jeweils zwischen zwei Schaltstellungen umschaltbar. In der in den Figuren 5a bis 5h gezeigten ersten Schaltstellung stellt das erste Schaltmittel 60 eine Verbindung zwischen dem ersten Flüssigkeitspfad 6 und dem zweiten Flüssigkeitspfad 28 einerseits und dem zweiten Schaltmittel 82 andererseits her. Konkret ist in der ersten Schaltstellung im Schaltmittel 60 der mit dem ersten Flüssigkeitspfad 6 gekoppelte Kontakt "5" mit dem Kontakt "6" verbunden, der über eine Leitung 6c an den Kontakt "5" des Schaltmittels 82 angeschlossen ist. Ebenfalls ist in der ersten Schaltstellung des Schaltmittels 60 dessen mit dem zweiten Flüssigkeitspfad 28 gekoppelter Kontakt "2" mit dem Kontakt "1" verbunden, der über eine Verbindungsleitung 28c an den Kontakt "2" des Schaltmittels 82 angeschlossen ist. In der in den Figuren 5a bis 5d gezeigten ersten Schaltstellung des Schaltmittels 82 ist der Kontakt "5" mit dem Kontakt "6", der über die Leitung 6a mit dem ersten Anschluss der Hohlfaser 20 gekoppelt ist, und der Kontakt "2" mit dem Kontakt "1" verbunden, welcher über die Leitung 28a mit dem zweiten Anschluss der Hohlfaser 20 gekoppelt ist. Somit ist durch die in den Figuren 5a bis 5d gezeigte erste Schaltstellung des Schaltmittels 82 die Hohlfaser 20 als aktiver Kanal zugeschaltet und für die Durchführung der Feldflussfraktionierung aktiviert. Wird das Schaltmittel 82 in die in den Figuren 5e bis 5h gezeigte zweite Schaltstellung umgeschaltet, so wird die Hohlfaser 20 deaktiviert und stattdessen der Flachkanal 50 als aktiver Kanal zugeschaltet und somit für die Durchführung der Feldflussfraktionierung aktiviert. Denn nun sind jeweils die Kontakte "2" und "3" sowie "4" und "5" miteinander verbunden, so dass die zum ersten Anschluss 52 des Flachkanals 50 führende Leitung 6b mit der Verbindungsleitung 6c und dadurch mit dem ersten Flüssigkeitspfad 6 sowie die an den zweiten Anschluss 54 des Flachkanals 50 angeschlossene Leitung 28b über die Leitung 28c mit dem zweiten Flüssigkeitspfad 28 verbunden ist.

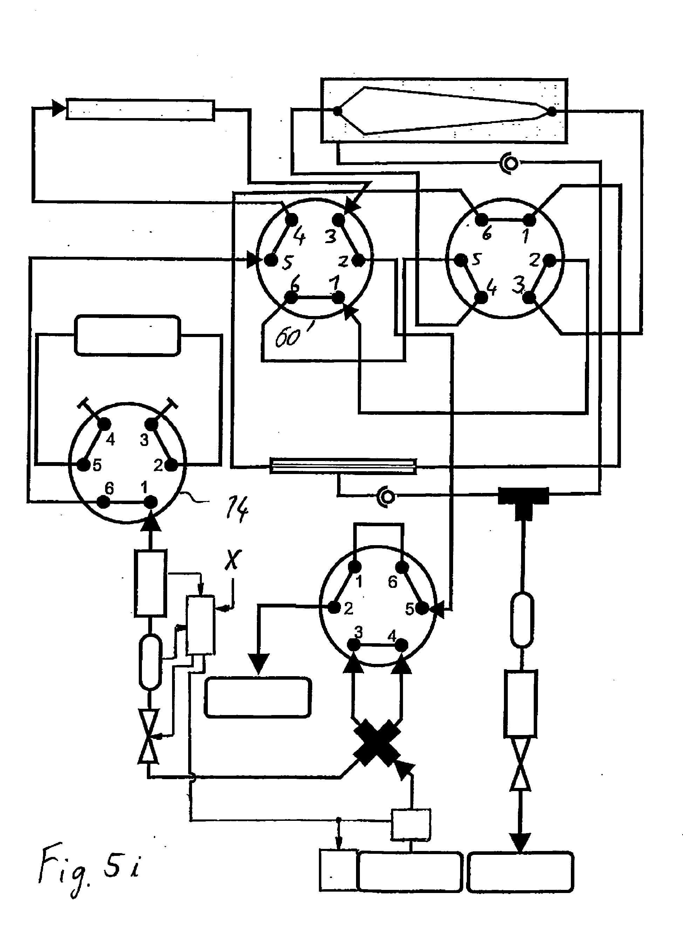

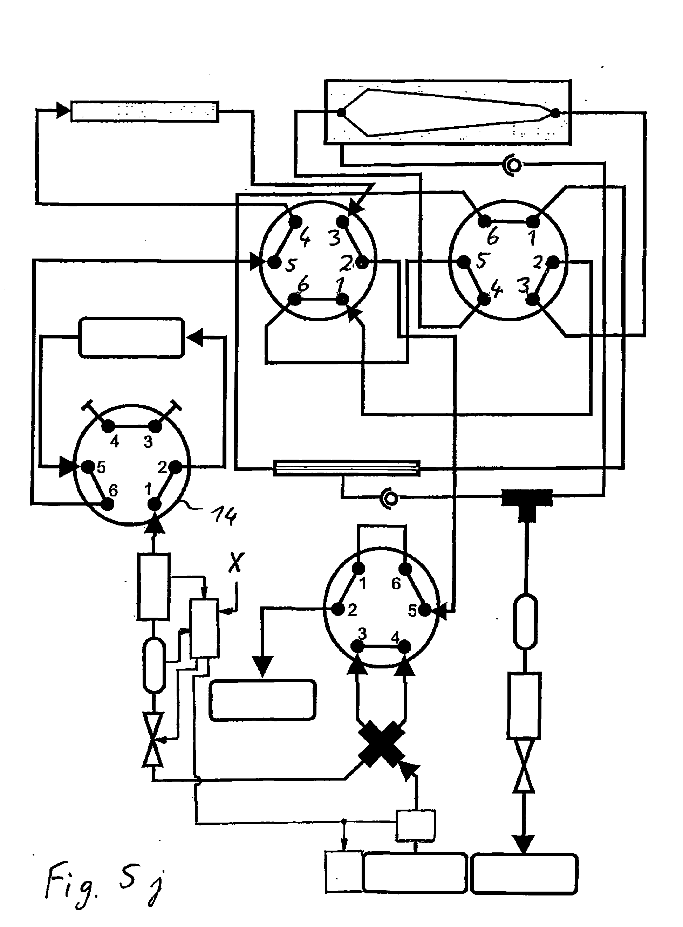

Wird unabhängig von der Schaltstellung des Schaltmittels 82 das Schaltmittel 60 in die zweite Schaltstellung verbracht, wie in den Figuren 5i und 5j gezeigt ist, so wird anstelle der Hohlfaser 20 und des Flachkanals 50 die Chromatographie-Säule 80 zugeschaltet, indem die zur Chromatographie-Säule 80 führende Leitung 6d über die dann im Schaltmittel 60 miteinander verbundenen Kontakte "4" und "5" mit dem ersten Flüssigkeitspfad 6 und die an das andere Ende der Chromatographie-Säule 80 angeschlossene Leitung 28d über die dann miteinander verbundenen Kontakte "2" und "3" mit dem zweiten Flüssigkeitspfad 28 gekoppelt ist. Da es für die Chromatographie-Säulen keinen Fokussierungsmodus gibt, zeigen die Figuren 5i und 5j die Verwendung der Vorrichtung gemäß der fünften Ausführung mit der Chromatographie-Säule 80 nur während einer Elution, und zwar wahlweise mit abgeschalteter Probeninjektionseinrichtung (Fig. 5i) und zugeschalteter Probeninjektionseinrichtung (Fig. 5j).

Wie das Schaltmittel 60 kann auch das Schaltmittel 82 der fünften Ausführung bevorzugt als - manuell und/oder motorisch betätigbarer - Drehschalter ausgebildet sein, wie in den Figuren 5a bis 5j schematisch gezeigt ist.

Im Übrigen ist es alternativ auch denkbar, die beiden Schaltmittel 60 und 82 zu einem gemeinsamen Schaltmittel zusammenzufassen, was aber in den Figuren nicht dargestellt ist.

Da hinsichtlich weiterer konstruktiver Einzelheiten und Komponenten die fünfte Ausführung mit der dritten Ausführung übereinstimmt und somit für gleiche Komponenten auch die gleichen Bezugszeichen verwendet sind, wird insoweit zur Vermeidung von Wiederholungen auf die vorangegangene Beschreibung der dritten Ausführung verwiesen.

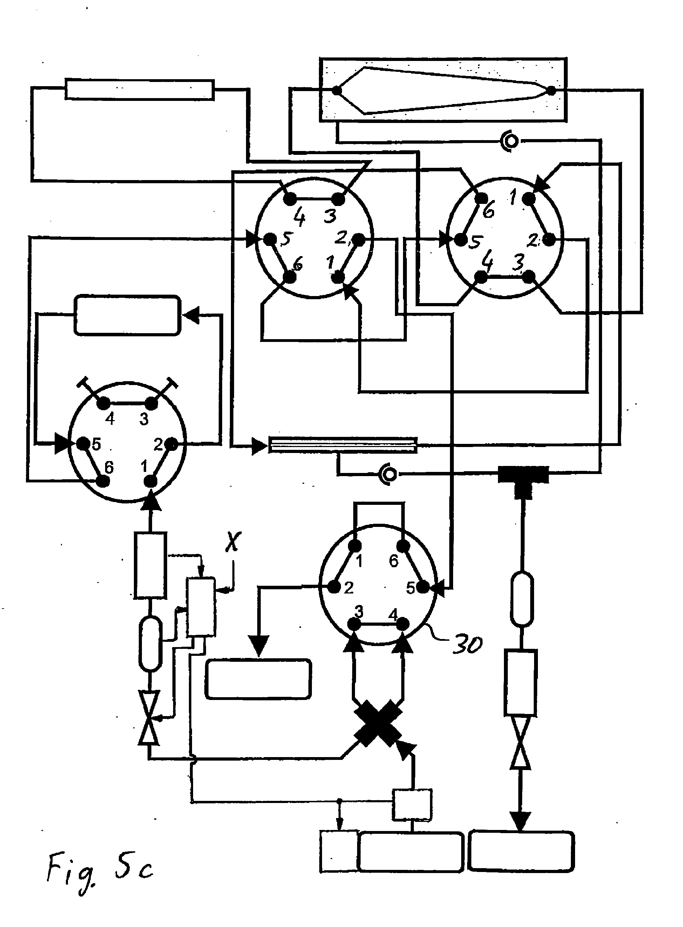

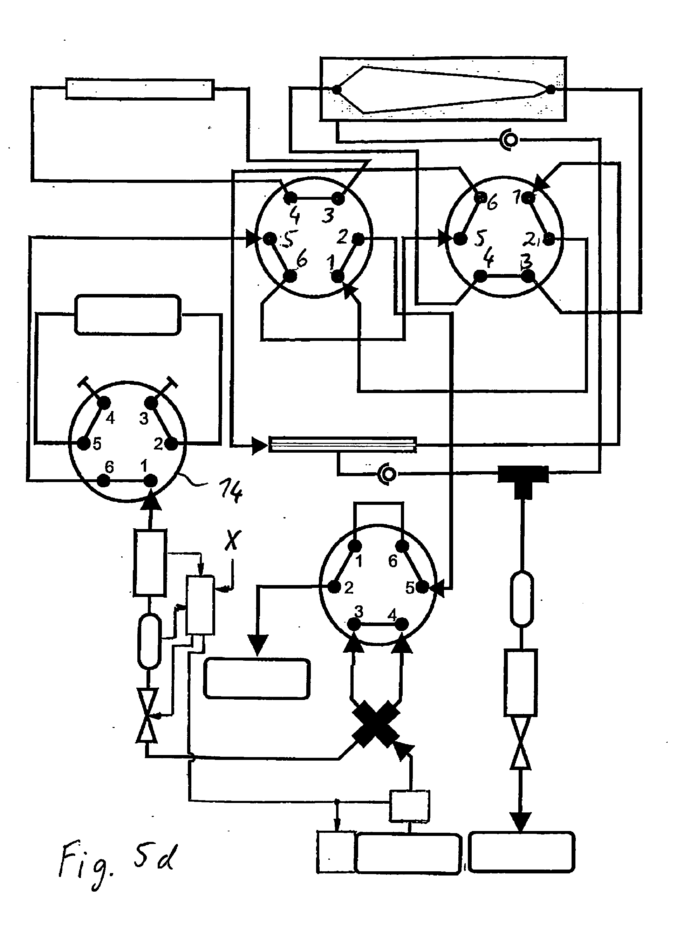

Die Figuren 5a bis 5d zeigen die Verwendung der Vorrichtung gemäß der fünften Ausführung mit der Hohlfaser 20, wobei in den Figuren 5a und 5b der Betriebszustand der Vorrichtung während der Fokussierung mit abgeschalteter Probeninjektionseinrichtung 16 (Fig. 5a) und zugeschalteter Probeninjektionseinrichtung 16 (Fig. 5b) und in den Figuren 5c und 5d der Betriebszustand der Vorrichtung während der Elution mit zugeschalteter Probeninjektionseinrichtung 16 (Fig. 5c) und abgeschalteter Probeninjektionseinrichtung (Fig. 5d) dargestellt ist, während der Flachkanal 50 und die Chromatographie-Säule 80 abgeschaltet sind. Die Figuren 5e bis 5h zeigen in gleicher Reihenfolge die Verwendung der Vorrichtung gemäß der fünften Ausführung mit dem Flachkanal 50, während die Hohlfaser 20 und die Chromatographie-Säule 80 abgeschaltet sind. Die Figuren 5i und 5j wiederum zeigen die Verwendung der Vorrichtung gemäß der fünften Ausführung mit der Chromatographie-Säule 80 nur während der Elution, während die Hohlfaser 20 und der Flachkanal 50 abgeschaltet sind.

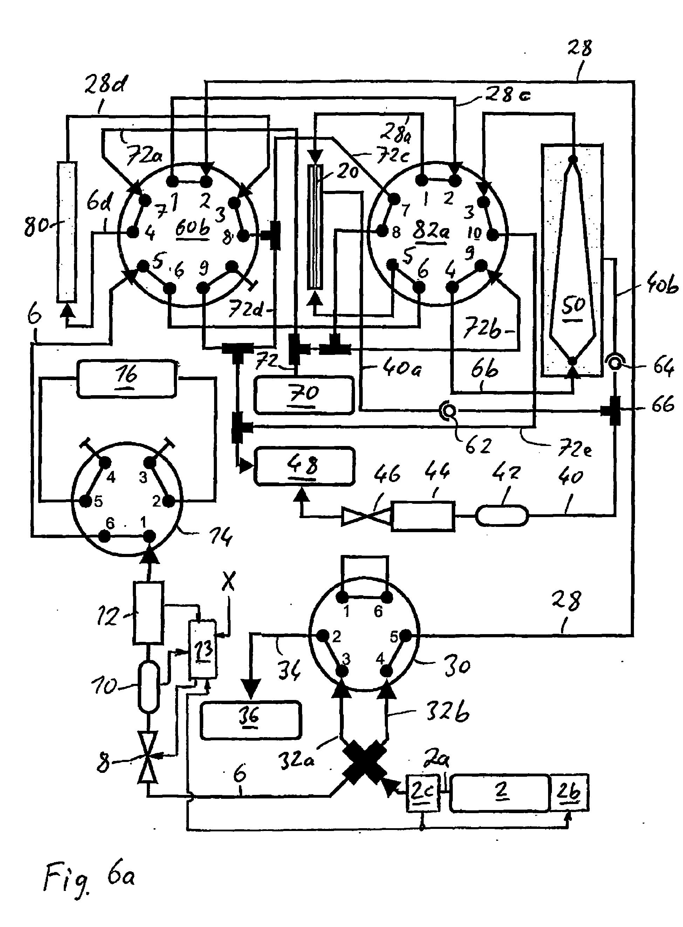

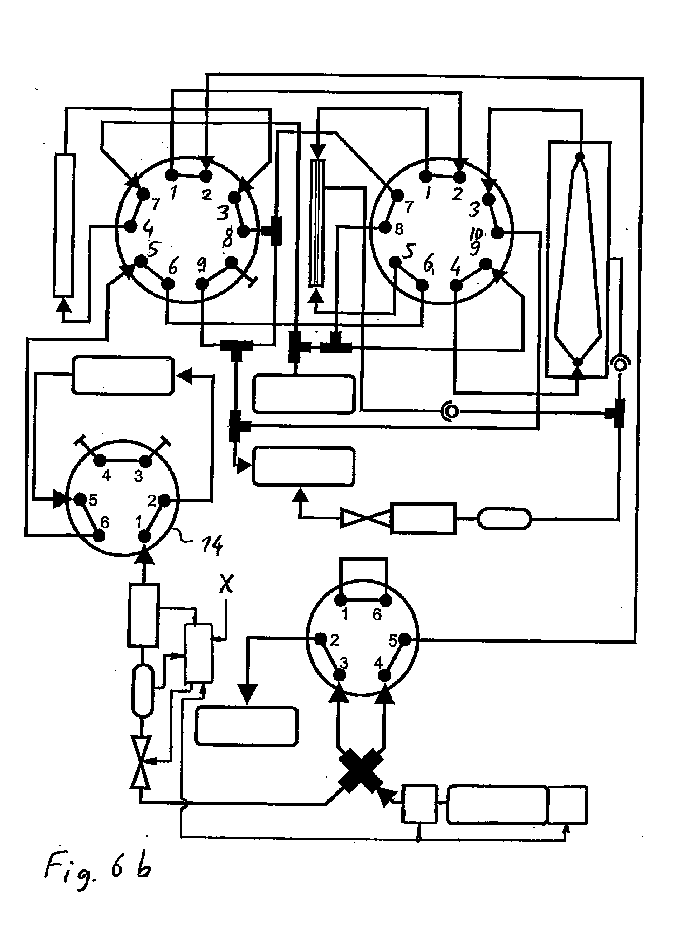

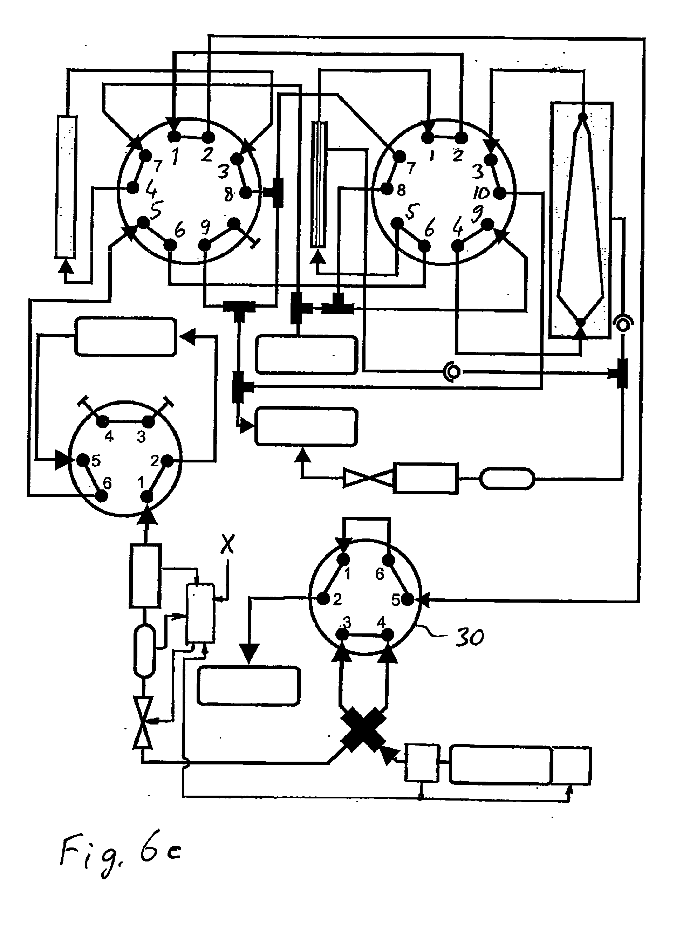

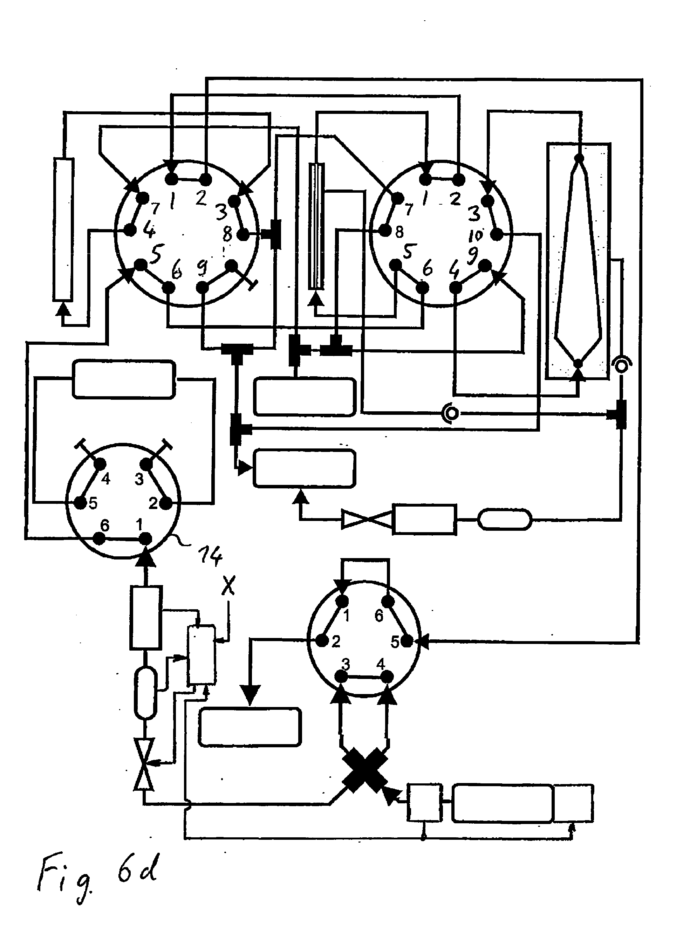

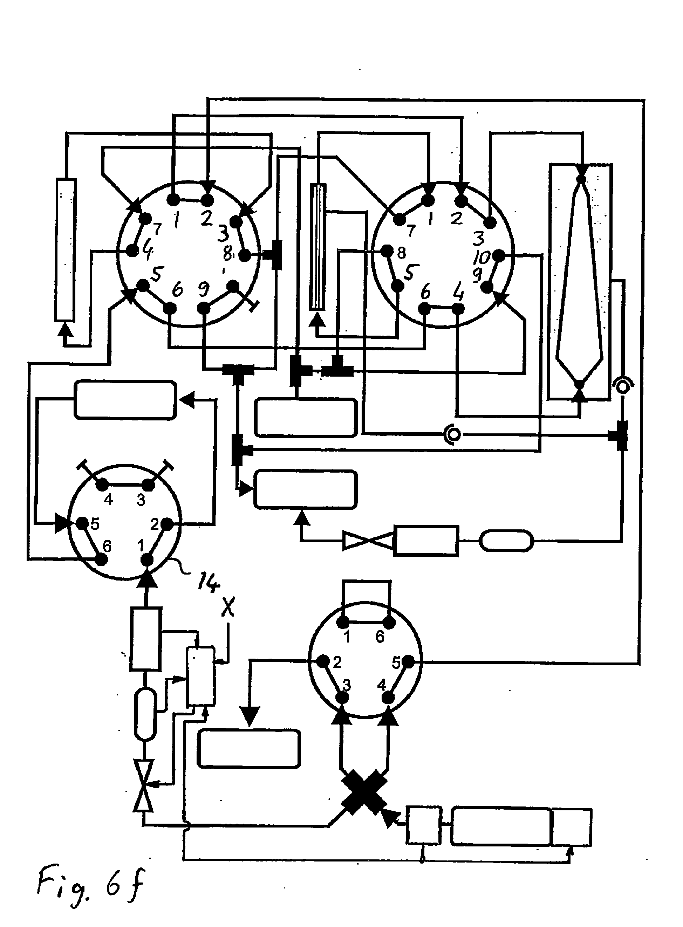

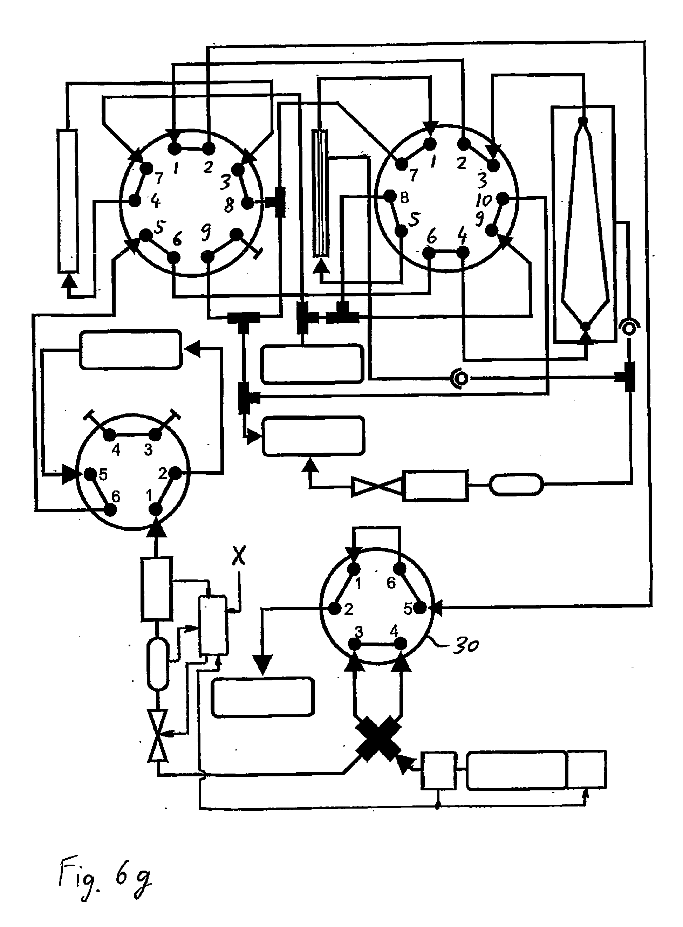

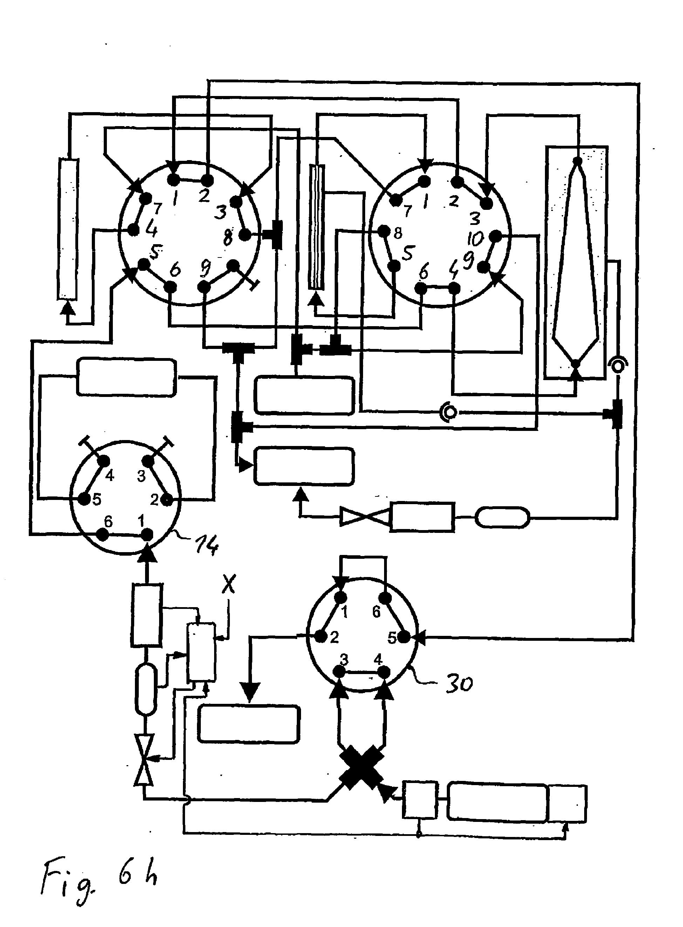

In den Figuren 6a bis 6j ist die Vorrichtung in einer sechsten Ausführung dargestellt, die eine Kombination der vierten und fünften Ausführungen bildet oder, anders ausgedrückt, der fünften Ausführung gemäß den Figuren 5a bis 5j entspricht und zusätzlich die Spüleinrichtung 70 aus der vierten Ausführung gemäß den Figuren 4a bis 4h enthält, welche über die Leitung 72 und mit dieser über nicht näher gekennzeichnete Abzweige gekoppelte Leitungen 72a, 72b, 72c und 72d zusätzlich zu der Hohlfaser 20, dem Flachkanal 50 und der Chromatographie-Säule 80 an ein Schaltmittel 60b sowie ferner ein weiteres Schaltmittel 82a angeschlossen ist. Dabei sind in Fig. 6a alle wesentlichen Komponenten mit Bezugszeichen gekennzeichnet, während in den Figuren 6b bis 6j, welche die sechste Ausführung in unterschiedlichen Betriebszuständen zeigen, der besseren Übersichtlichkeit halber nur diejenigen Komponenten mit Bezugszeichen gekennzeichnet sind, welche für die Änderung des Betriebszustandes gegenüber dem jeweils in der vorangegangenen Figur gezeigten Betriebszustand relevant sind.

Durch die Schaltmittel 60b, 82a, welche im Übrigen die gleichen Funktionen wie die Schaltmittel 60, 82 der fünften Ausführung aufweisen, wird zusätzlich die Spüleinrichtung 70 an den jeweils unbenutzten Kanal 20 bzw. 50 oder die unbenutzte Chromatographie-Säule 80 zugeschaltet, um den unbenutzten Kanal bzw. die unbenutzte Chromatographie-Säule, der bzw. die also abgetrennt und somit für die Durchführung der Feldflussfraktionierung nicht aktiviert ist, entsprechend zu spülen und dadurch zu reinigen. Deshalb unterscheiden sich die Schaltmittel 60b, 82a von den entsprechenden Schaltmitteln 60, 82 der fünften Ausführung durch die Anordnung von zusätzlichen Kontakten.

In den Figuren 6a bis 6d sind die Schaltmittel 60b, 82a jeweils in ihrer ersten Schaltstellung gezeigt. Die Kombination der ersten Schaltstellung des Schaltmittels 60b mit der ersten Schaltstellung des Schaltmittels 82a hat zur Folge, dass die Hohlfaser 20 zugeschaltet und somit zur Durchführung der Feldflussfraktionierung aktiviert ist, während der Flachkanal 50 und die Chromatographie-Säule 80 nicht für die Durchführung der Feldflussfraktionierung aktiviert und somit abgeschaltet und unbenutzt, jedoch stattdessen an die Spüleinrichtung 70 angeschlossen sind, um von dieser gespült zu werden.

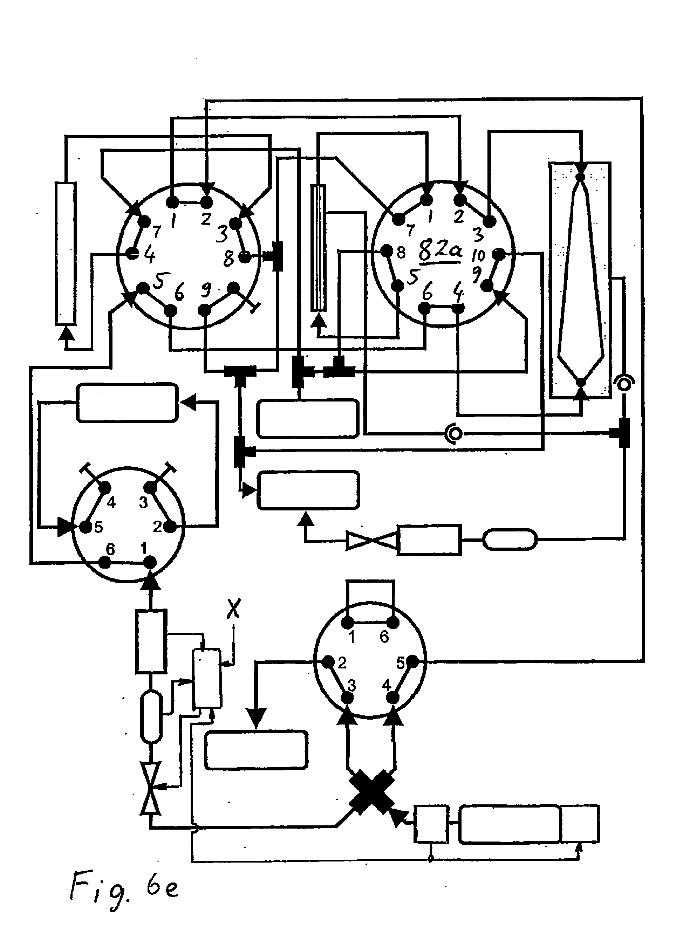

In den Figuren 6e bis 6h ist das Schaltmittel 60b weiterhin in seiner ersten Schaltstellung, jedoch das Schaltmittel 82a in einer zweiten Schaltstellung gezeigt. Die Kombination der ersten Schaltstellung des Schaltmittels 60b mit der zweiten Schaltstellung des Schaltmittels 82a hat zur Folge, dass nunmehr der Flachkanal 50 zur Durchführung der Feldflussfraktionierung zugeschaltet und somit aktiviert ist, während die Hohlfaser 20 und die Chromatographie-Säule 80 nicht zur Durchführung der Feldflussfraktionierung aktiviert, sondern abgeschaltet und somit unbenutzt, jedoch stattdessen an die Spüleinrichtung 70 angeschlossen sind, um gespült zu werden.

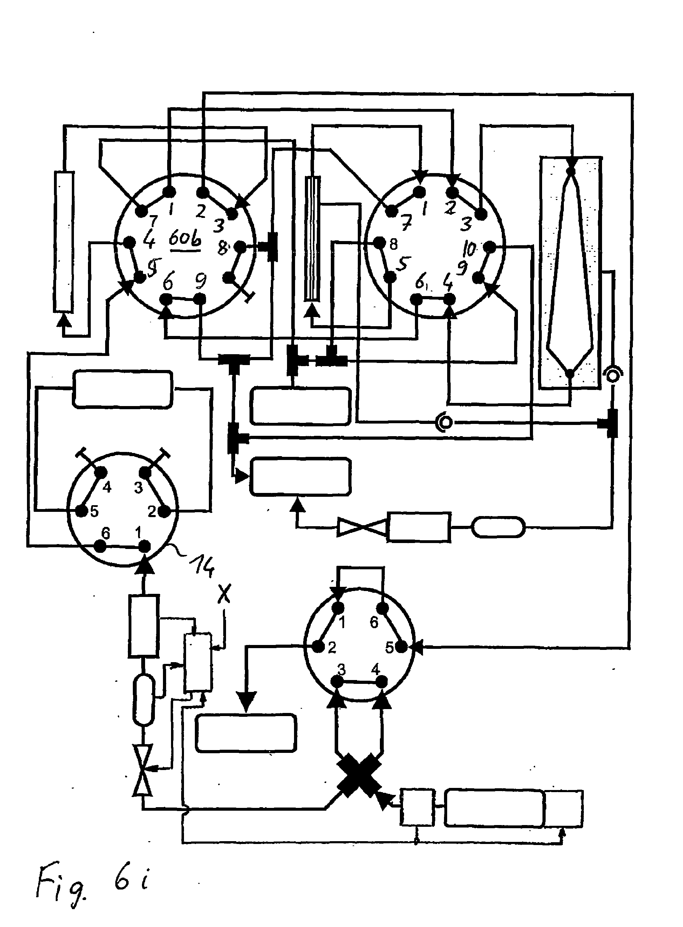

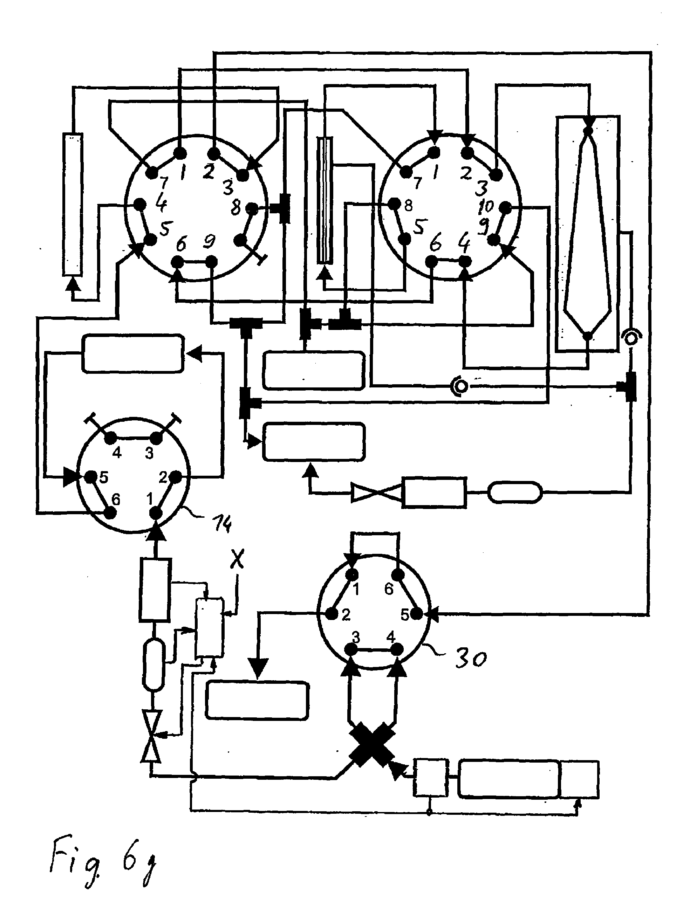

In den Figuren 6i und 6j sind beide Schaltmittel 60b, 82a in einer zweiten Schaltstellung gezeigt. Die Kombination der zweiten Schaltstellung des Schaltmittels 60b mit der zweiten Schaltstellung des Schaltmittels 82a hat zur Folge, dass nunmehr die Chromatographie-Säule 80 zugeschaltet und somit zur Durchführung der Feldflussfraktionierung aktiviert ist, während die Hohlfaser 20 und der Flachkanal 50 nicht für die Durchführung der Feldflussfraktionierung aktiviert, somit abgeschaltet und unbenutzt, jedoch stattdessen nun an die Spüleinrichtung 70 angeschlossen sind, um entsprechend gespült zu werden.

Die Schaltmittel 60b, 82a der sechsten Ausführung können ebenfalls bevorzugt als - manuell und/oder motorisch betätigbare - Drehschalter ausgebildet sein, wie in den Figuren 6a bis 6j schematisch gezeigt ist.

Alternativ ist es auch denkbar, die beiden Schaltmittel 60b, 82a zu einem gemeinsamen Schaltmittel zusammenzufassen, was jedoch in den beiliegenden Figuren nicht gezeigt ist.

Da hinsichtlich weiterer konstruktiver Details und Komponenten die sechste Ausführung mit der fünften Ausführung gemäß den Figuren 5a bis 5j, soweit der Betrieb mit der Hohlfaser 20, dem Flachkanal 50 und der Chromatographie-Säule 80 betroffen ist, sowie mit der vierten Ausführung gemäß den Figuren 4a bis 4h, soweit der Betrieb der Spüleinrichtung 70 betroffen ist, übereinstimmt und insoweit für die gleichen Komponenten die gleichen Bezugszeichen verwendet werden, wird auf die vorangegangene Beschreibung der vierten und fünften Ausführungen entsprechend verwiesen. Auch hinsichtlich der Darstellung der unterschiedlichen Betriebszustände weisen die Figuren 6a bis 6j die gleiche Reihenfolge und Zuordnung wie die Figuren 5a bis 5j auf.

## Patentansprüche

1. Vorrichtung zur Feldflussfraktionierung, mit
- einem Sensor (36) zur Ermittlung der Anwesenheit von Teilchen in einer Trägerflüssigkeit,
- mindestens einem im Wesentlichen geschlossenen länglichen Kanal (20; 50), der ein erstes Ende (20a; 50a) mit einem ersten Anschluss (22; 52) und ein zweites Ende (20b; 50b) mit einem zweiten Anschluss (24; 54) aufweist und dessen Wandung mindestens einen sich in Längsrichtung des Kanals (20; 50) erstreckenden, für die Teilchen undurchlässigen und für die Trägerflüssigkeit durchlässigen Abschnitt aufweist,
- einer Pumpe (2), die einen Einlass und einen Auslass (2a) aufweist und zum Fördern der Trägerflüssigkeit vorgesehen ist,
- einem ersten Flüssigkeitspfad (6), der den Auslass (2a) der Pumpe (2) mit dem ersten Anschluss (22; 52) des Kanals (20; 50) verbindet,
- einem zweiten Flüssigkeitspfad (28), der den zweiten Anschluss (24; 54) des Kanals (20; 54) mit einem ersten Schaltmittel (30) verbindet, durch das der zweite Flüssigkeitspfad (28) in einer ersten Schaltstellung an den Auslass (2a) der Pumpe (2) und in einer zweiten Schaltstellung an den Sensor (36) anschließbar ist,
- einer Injektionseinrichtung (16), die im ersten Flüssigkeitspfad (6) angeordnet und zur Injektion einer Teilchen aufweisenden Probe in die durch den ersten Flüssigkeitspfad (6) fließende Trägerflüssigkeit vorgesehen ist, und
- einer Durchflussmengenaufteilungseinrichtung (8, 10, 12), die die von der Pumpe (2) geförderte Durchflussmenge in der ersten Schaltstellung des ersten Schaltmittels (30) in einem vorgegebenen Aufteilungsverhältnis auf den ersten Flüssigkeitspfad (6) und den zweiten Flüssigkeitspfad (28) aufteilt und eine erste Durchflussmengensteuerungseinrichtung aufweist, die im ersten Flüssigkeitspfad (6) angeordnet und zur Steuerung der Durchflussmenge der Trägerflüssigkeit im ersten Flüssigkeitspfad (6) vorgesehen ist und ein erstes Ventil (8) zur Einstellung der Durchflussmenge der Trägerflüssigkeit im ersten Flüssigkeitspfad (6) aufweist,
wobei
- die erste Durchflussmengensteuerungseinrichtung eine erste Messeinrichtung (12) zur Messung der Durchflussmenge der Trägerflüssigkeit aufweist,
- das Ventil (8) stromaufwärts vor dieser ersten Messeinrichtung (12) angeordnet und zur Steuerung der Durchflussmenge der Trägerflüssigkeit im ersten Flüssigkeitspfad (6) unter Berücksichtigung des Messergebnisses der ersten Messeinrichtung (12) vorgesehen ist und
- die Pumpe (2) zum Fördern der Trägerflüssigkeit in einer definierten konstanten Durchflussmenge vorgesehen ist.

2. Vorrichtung nach mindestens einem der vorangegangenen Ansprüche, bei welcher das erste Ventil (8) ein Nadelventil ist.

3. Vorrichtung nach mindestens einem der vorangegangenen Ansprüche, bei welcher die Durchflussmengenaufteilungseinrichtung eine Regelungseinrichtung (13) aufweist, die in Abhängigkeit vom Messergebnis der ersten Messeinrichtung (12) sowie ferner in Abhängigkeit von der Eingabe eines ein gewünschtes Aufteilungsverhältnis angebenden Sollwertes (X) das erste Ventil (8) entsprechend ansteuert.

4. Vorrichtung nach Anspruch 3, bei welcher eine zweite Messeinrichtung (2c) zur Messung der Durchflussmenge der von der Pumpe (2) an ihrem Auslass (2a) abgegebenen Trägerflüssigkeit vorgesehen ist und die Regelungseinrichtung (13) zusätzlich in Abhängigkeit vom Messergebnis der zweiten Messeinrichtung (2c) das erste Ventil (8) entsprechend ansteuert.

5. Vorrichtung nach mindestens einem der vorangegangenen Ansprüche, bei welcher die Injektionseinrichtung (16) stromabwärts von der ersten Durchflussmengensteuerungseinrichtung (8, 12) angeordnet ist.

6. Vorrichtung nach mindestens einem der vorangegangenen Ansprüche, mit einem zweiten Schaltmittel (14), durch das die Injektionseinrichtung (16) wahlweise zu- und abschaltbar ist.

7. Vorrichtung nach mindestens einem der vorangegangenen Ansprüche, mit einem dritten Flüssigkeitspfad (40), der zur Ableitung von aus dem flüssigkeitsdurchlässigen Abschnitt des Kanals (20; 50) austretender Trägerflüssigkeit vorgesehen ist.

8. Vorrichtung nach Anspruch 7, bei welcher im dritten Flüssigkeitspfad (40) eine zweite Durchflussmengensteuerungseinrichtung (44, 46) angeordnet ist, die zur Steuerung der Durchflussmenge der Trägerflüssigkeit im dritten Flüssigkeitspfad (40) vorgesehen ist.

9. Vorrichtung nach Anspruch 8, bei welcher die zweite Durchflussmengensteuerungseinrichtung (44, 46) ein zweites Ventil (46), vorzugsweise Magnetventil, zur Einstellung der Durchflussmenge der Trägerflüssigkeit im dritten Flüssigkeitspfad (40) aufweist.

10. Vorrichtung nach Anspruch 9, bei welcher die zweite Durchflussmengensteuerungseinrichtung (44, 46) eine dritte Messeinrichtung (44) zur Messung der Trägerflüssigkeit aufweist und das zweite Ventil (46) stromabwärts von dieser Messeinrichtung (42, 44) angeordnet und zur Steuerung der Durchflussmenge der Trägerflüssigkeit im dritten Flüssigkeitspfad (40) unter Berücksichtigung des Messergebnisses der dritten Messeinrichtung (44) vorgesehen ist.

11. Vorrichtung nach mindestens einem der vorangegangenen Ansprüche, bei welcher das erste Schaltmittel (30) so ausgebildet ist, dass es in seiner ersten Schaltstellung den Auslass (2a) der Pumpe (2) sowohl mit dem zweiten Flüssigkeitspfad (28) als auch mit dem Sensor (36) verbindet.

12. Vorrichtung nach mindestens einem der vorangegangenen Ansprüche, bei welcher der Kanal als Flachkanal (50) mit vorzugsweise rechteckigem Querschnitt ausgebildet ist.

13. Vorrichtung nach mindestens einem der vorangegangenen Ansprüche, bei welcher der Kanal als Hohlfaser (20) ausgebildet ist.

14. Vorrichtung nach mindestens einem der vorangegangenen Ansprüche, mit mindestens einer zu- und abschaltbaren Spüleinrichtung (70) zum Spülen mindestens eines unbenutzten Kanals, wenn dieser für die Feldflussfraktionierung nicht aktiviert ist.

## Claims

1. A device for field flux fractioning, comprising
- a sensor (36) for determining the presence of particles in a carrier liquid,
- at least one essentially closed oblong channel (20; 50), which comprises a first end (20a; 50a) with a first connection (22; 52) and a second end (20b; 50b) with a second connection (24; 54) and its wall comprises at least one section extending in the longitudinal direction of the channel (20; 50), impermeable for the particles but permeable for the carrier liquid,
- a pump (2), which comprises an inlet and an outlet (2a) and is provided to convey the carrier liquid,
- a first liquid path (6), which connects the outlet (2a) of the pump (2) to the first connection (22; 52) of the channel (20; 50),
- a second liquid path (28), which connects the second connection (24; 54) of the channel (20; 54) to a first switching means (30), through which the second liquid path (28) can be connected in a first switch position to the outlet (2a) of the pump (2) and in a second switch position to the sensor (36),
- an injection means (16), which is arranged in the first liquid path (6) and provided to inject a sample comprising particles into the carrier liquid flowing through the first liquid path (6), and
- a flow volume distribution means (8, 10, 12), which divides the flow volume conveyed by the pump (2) in the first switch position of the first switching means (30) at a predetermined distribution ratio to the first liquid path (6) and the second liquid path (28) and comprises a first flow volume control means, which is arranged in the first liquid path (6) and is provided for the control of the flow volume of the carrier liquid in the first liquid path (6) and comprises a first valve (8) to adjust the flow volume of the carrier liquid in the first liquid path (6),
wherein
- the first flow volume control device comprises a first measuring means (12) to measure the flow volume of the carrier liquid,
- the valve (8) is arranged upstream in reference to this first measuring means (12) and is provided for controlling the flow volume of the carrier liquid in the first liquid path (6) in consideration of the measurements of the first measuring means (12), and
- the pump (2) is provided to convey the carrier liquid in a defined constant flow volume.

2. A device according to at least one of the previous claims, in which the first valve (8) is a needle valve.

3. A device according to at least one of the previous claims, in which the flow volume distribution means comprises a control means (13), which depending on the measurement of the first measuring means (12) as well as further depending on the input of a target value (X) indicating the desired distribution ratio controls the first valve (8) accordingly.

4. A device according to claim 3, in which a second measuring means (2c) is provided to measure the flow volume of the carrier liquid dispensed by the pump (2) at its outlet (2a) and the control means (13) also accordingly controls the first valve (8) depending on the measurement of the second measuring means (2c).

5. A device according to at least one of the previous claims, in which the injection means (16) is arranged downstream in reference to the first flow volume control means (8, 12).

6. A device according to at least one of the previous claims, comprising a second switching means (14) by which optionally the injection means (16) can be switched on or off.

7. A device according to at least one of the previous claims, comprising a third liquid path (40) which is provided to drain carrier liquid discharged from the section of the channel (20; 50) permeable for liquids.

8. A device according to claim 7, in which in the third liquid path (40) a second flow volume control means (44, 46) is arranged, which is provided to control the flow volume of the carrier liquid in the third liquid path (40).

9. A device according to claim 8, in which the second flow volume control means (44, 46) comprises a second valve (46), preferably a magnetic valve, to adjust the flow volume of the carrier liquid in the third liquid path (40).

10. A device according to claim 9, in which the second flow volume control means (44, 46) comprises a third measuring means (44) for measuring the carrier liquid and the second valve (46) is arranged downstream in reference to the measuring means (42, 44) and is provided to control the flow volume of the carrier liquid in the third liquid path (40) in consideration of the measurements of the third measuring means (44).

11. A device according to at least one of the previous claims, in which the first switching means (30) is embodied such that it connects in its first switch position the outlet (2a) of the pump (2) to both the second liquid path (28) as well as the sensor (36).

12. A device according to at least one of the previous claims, in which the channel is embodied as a flat channel (50) with preferably a rectangular cross-section.

13. A device according to at least one of the previous claims, in which the channel is embodied as a hollow fiber (20).

14. A device according to at least one of the previous claims comprising at least one rinsing means (70), which can be switched on or off, to rinse at least one unused channel when it is not activated for field flux fractioning.

## Revendications

1. Dispositif servant au fractionnement par couplage flux-champ de force, comprenant
- un capteur (36) servant à déterminer la présence de particules dans un fluide de support,
- au moins un canal (20 ; 50) allongé essentiellement fermé, qui présente une première extrémité (20a ; 50a) pourvue d'un premier raccord (22 ; 52) et une deuxième extrémité (20b ; 50b) pourvue d'un deuxième raccord (24 ; 54) et dont la paroi présente au moins une section s'étendant dans la direction longitudinale du canal (20 ; 50), ne laissant pas passer les particules et laissant passer le liquide de support,
- une pompe (2), qui présente une entrée et une sortie (2a) et qui est prévue afin d'entraîner le liquide de support,
- un premier chemin de liquide (6), qui relie la sortie (2a) de la pompe (2) au premier raccord (22 ; 52) du canal (20 ; 50),
- un deuxième chemin de liquide (28), qui relie le deuxième raccord (24 ; 54) du canal (20 ; 54) à un premier moyen de commutation (30), par lequel le deuxième chemin de liquide (28) peut être raccordé, dans une première position de commutation, à la sortie (2a) de la pompe (2) et, dans une deuxième position de commutation, au capteur (36),
- un système d'injection (16), qui est disposé dans le premier chemin de liquide (6) et qui est prévu afin d'injecter un échantillon présentant des particules dans le liquide de support traversant le premier chemin de liquide (6), et
- un système de division de débit (8, 10, 12), qui divise le débit entraîné par la pompe (2) dans la première position de commutation du premier moyen de commutation (30) selon un rapport de division spécifié sur le premier chemin de liquide (6) et le deuxième chemin de liquide (28) et présente un premier système de commande de débit, qui est disposé dans le premier chemin de liquide (6) et prévu afin de commander le débit du liquide de support dans le premier chemin de liquide (6) et présente une première vanne (8) servant à régler le débit du liquide de support dans le premier chemin de liquide (6),
dans lequel
- le premier système de commande de débit présente un premier système de mesure (12) servant à mesurer le débit du liquide de support,
- la vanne (8) est disposée en amont dudit premier système de mesure (12) et prévue afin de commander le débit du liquide de support dans le premier chemin de liquide (6) en tenant compte du résultat de mesure du premier système de mesure (12), et
- la pompe (2) est prévue afin d'entraîner le liquide de support selon un débit constant défini.

2. Dispositif selon au moins l'une quelconque des revendications précédentes, dans le cadre duquel la première vanne (8) est une vanne à pointeau.

3. Dispositif selon au moins l'une quelconque des revendications précédentes, dans le cadre duquel le système de division de débit présente un système de régulation (13), qui pilote de manière correspondante la première vanne (8) en fonction du résultat de mesure du premier système de mesure (12) ainsi en outre qu'en fonction de l'entrée d'une valeur de consigne (X) indiquant un rapport de division souhaité.

4. Dispositif selon la revendication 3, dans le cadre duquel un deuxième système de mesure (2c) est prévu afin de mesurer le débit du liquide de support distribué par la pompe (2) au niveau de sa sortie (2a) et le système de régulation (13) pilote de manière correspondante la première vanne (8) en fonction du résultat de mesure du deuxième système de mesure (2c).

5. Dispositif selon au moins l'une quelconque des revendications précédentes, dans le cadre duquel le système d'injection (16) est disposé en aval du premier système de commande de débit (8, 12).

6. Dispositif selon au moins l'une quelconque des revendications précédentes, comprenant un deuxième moyen de commutation (14), par lequel le système d'injection (16) peut être au choix activé ou désactivé.

7. Dispositif selon au moins l'une quelconque des revendications précédentes, comprenant un troisième chemin de fluide (40), qui est prévu afin de dévier le liquide de support sortant de la section laissant passer le liquide du canal (20 ; 50).

8. Dispositif selon la revendication 7, dans le cadre duquel un deuxième système de commande de débit (44, 46) est disposé dans le troisième chemin de liquide (40), lequel est prévu afin de commander le débit du liquide de support dans le troisième chemin de liquide (40).

9. Dispositif selon la revendication 8, dans le cadre duquel le deuxième système de commande de débit (44, 46) présente une deuxième vanne (46), de préférence une électrovanne, servant à régler le débit du liquide de support dans le troisième chemin de liquide (40).

10. Dispositif selon la revendication 9, dans le cadre duquel le deuxième système de commande de débit (44, 46) présente un troisième système de mesure (44) servant à mesurer le liquide de support et la deuxième vanne (46) est disposée en aval dudit système de mesure (42, 44) et est prévue afin de commander le débit du liquide de support dans le troisième chemin de liquide (40) en tenant compte du résultat de mesure du troisième système de mesure (44).

11. Dispositif selon au moins l'une quelconque des revendications précédentes, dans le cadre duquel le premier moyen de commutation (30) est réalisé de telle manière qu'il relie, dans sa première position de commutation, la sortie (2a) de la pompe (2) aussi bien au deuxième chemin de liquide (28) qu'au capteur (36).

12. Dispositif selon au moins l'une quelconque des revendications précédentes, dans le cadre duquel le canal est réalisé sous la forme d'un canal plat (50) pourvu de préférence d'une section transversale rectangulaire.

13. Dispositif selon au moins l'une quelconque des revendications précédentes, dans le cadre duquel le canal est réalisé sous la forme de fibre creuse (20).

14. Dispositif selon au moins l'une quelconque des revendications précédentes, comprenant au moins un système de rinçage (70) pouvant être activé et désactivé servant à rincer au moins un canal inutilisé lorsque celui-ci n'est pas activé pour le fractionnement par couplage flux-champ de force.
